Europäisches Patentamt

European Patent Office

Office européen des brevets

(19)

(11)    EP 0 199 780 B1

(12)    EUROPEAN PATENT SPECIFICATION

(45) Date of publication and mention
of the grant of the patent:
27.12.1996   Bulletin 1996/52

(21) Application number: 85905470.2

(22) Date of filing: 17.10.1985

(51) Int Cl.⁶: **G09G 1/00**, G06F 17/00

(86) International application number:
**PCT/US85/02064**

(87) International publication number:
**WO 86/02764 (09.05.1986 Gazette 1986/10)**

(54) **APPARATUS FOR DISPLAYING A MAP**

VORRICHTUNG ZUR VORFÜHRUNG EINER KARTE

APPAREIL DE VISUALISATION DE CARTE

(84) Designated Contracting States:
**AT BE CH DE FR GB IT LI LU NL SE**

(30) Priority: **22.10.1984 US 663862**

(43) Date of publication of application:
**05.11.1986 Bulletin 1986/45**

(73) Proprietor: **Etak, Inc.**
**Menlo Park California 94025 (US)**

(72) Inventors:
• **LOUGHMILLER, George, E., Jr.**
**Cupertino, CA 95014 (US)**
• **HONEY, Stanley, K.**
**Newark, CA 94065 (US)**
• **MILNES, Kenneth, A.**
**Fremont, CA 94536 (US)**

(74) Representative: **Tomlinson, Kerry John et al**
**Frank B. Dehn & Co.,**
**European Patent Attorneys,**
**179 Queen Victoria Street**
**London EC4V 4EL (GB)**

(56) References cited:
EP-A- 0 059 435        EP-A- 0 118 886
FR-A- 2 506 046        GB-A- 2 115 946
US-A- 4 470 119        US-A- 4 484 284
US-A- 4 504 913        US-A- 4 523 188
US-A- 4 527 155        US-A- 4 535 335

**Description**

Field of the Invention

The present invention relates generally to an apparatus and method for displaying a map as a navigational aid in a vehicle movable over streets and, more particularly, to a computer system and method for controlling a digital map data base used for the map display.

Background of the Invention

Navigational aids are useful to assist the driver of a vehicle in locating his current position and for locating and moving to a desired destination. Typically, the navigational aid used by the driver is a conventional paper street map of a given area which is read to determine the present location of the vehicle relative to the desired location. Another navigational aid for the driver includes a transparency of a street map placed over a monitor which shows the approximate path of a vehicle. The map transparency is visually similar to the paper street map in that, for example, it shows the same detail of streets and landmarks and the same size of lettering of names or labels for the streets and landmarks. Yet another navigational aid is a video image of a map which appears on a monitor and accurately reproduces the image of a paper street map.

One problem with these prior navigational aids, either with the paper maps, the map transparencies or the map video image, is that they present the driver with more information than is necessary for navigating the vehicle. These maps are confusing and difficult to use because the driver may be able to take only short occasional glances at the map while engaged in the task of driving. For example, all streets and landmarks are depicted based on a priority scheme in which, for example, the streets are categorized and highlighted by interstate highways, state highways, major roads, access roads, local streets, etc. This detail of information, including also all the names of the streets and landmarks, is always presented to the driver even though the driver may need to read only the local streets to determine the route to his or her local destination. Alternatively, the driver may want to view only the major road network, but this may not be easily visible amid the clutter of the local streets and street names. Consequently, all the additional and unnecessary information that is on the map will be distracting for a given navigational purpose.

Furthermore, the details shown in the paper map or the map transparencies may not enable the driver to grasp quickly "the lay of the land" and get a feel for his or her location and orientation with respect to the street network and/ or destination. For example, the driver may not easily perceive his current position or the current heading or direction of movement of the vehicle relative to surrounding streets or landmarks.

Also, it may be desireable to change the scale of the map display to study in detail, for example, a small geographical area or to gain perspective of a large geographical area. Paper maps and map transparencies require physically changing the map being viewed. For video images, scaling can be automatically accomplished on the monitor, but the street labels are displayed such that their size is dependent on the scale level. This is distracting, requiring the driver to adjust his vision to different sized labeling. And, if the video image is rotated to match vehicle heading, the fixed labels will create upside down writing.

Summary of the Invention

It is an object of the present invention to provide a novel apparatus and method for providing a map display to a driver of a vehicle as a navigational aid.

It is another object of the present invention to provide the driver with a map display that is easy to read and does not present unnecessary information for the current navigation requirement.

Yet another object of the present invention is to provide a map display whose complexity is consistent with the needs of the driver for navigational purposes.

It is another object of the present invention to provide the driver with a map display that changes in accordance with the changing position of the vehicle to always show streets nearest such a position, and to always show the driver the current position and current heading of the vehicle.

Still another object of the present invention is to provide a map display that always has an orientation to facilitate easy understanding by the driver and to adjust the labels so that they appear predominantly upright independent of map orientation and to label streets of interest to the driver.

It is another object of the present invention to conveniently present on the display the geographical location of a desired destination entered by the driver.

From EP-A-0118886 there is known an apparatus for displaying at selected scale levels a map of streets corresponding to an area over which a vehicle may move to assist a driver to navigate, comprising:

a) a stored map database having data identifying the location of streets of the area and data in the form of a code identifying each street by a predetermined priority category;
b) means for selecting the scale levels;
c) means, responsive to the data, for selecting certain streets of the map to display in dependence on a selected scale level and said code;
d) means for providing input data identifying the current location and heading direction of the vehicle.

The present invention is characterised by the database further having data in the form of labels for streets, and by the apparatus further comprising:

e) means responsive to the database data, for selecting street labels for display in accordance with a dynamic ordering scheme which selects and prioritises street labels to display in dependence on the input data identifying the current location and heading direction of the vehicle, said means assigning priority values to labels of said certain streets by at least:

using the input data and the database data to identify a next cross street ahead of the vehicle and assigning a priority value to the label of any said street identified; and
using the input data and the database data to identify the street on which the vehicle is travelling and assigning a priority value to the label of any said street identified;

f) means for selecting certain street labels for display by using said assigned priority values; and
g) means for producing a map display showing the certain streets and the certain street labels.

By providing a display of a map based on a scale-dependent priority scheme, the driver will always see a map of limited complexity since only selected streets are displayed that are dependent on a selected scale level. By providing the selective labelling, the driver will see only those labels that provide sufficient information for the current navigational need, and need not view all labels corresponding to the streets currently being displayed. Preferably the streets of said map database are stored as street segments each having endpoints, and said means for producing a map display showing the certain streets and the certain labels for the streets computes the slopes of the street segments from the endpoints defining the respective street segments to provide the map display. By providing this feature in combination with dynamic labelling the driver will not be presented with any label in an upside down orientation. By providing a destination symbol on the display, the driver will be able to determine easily the direction to, location of and route required to reach the desired destination. And, by providing a moving map display, the driver will view a changing map corresponding to the geographical area over which the vehicle is moving and one which is always oriented in a manner to provide ease of reading and understanding.

Brief Description of the Drawings

Fig. 1 is a pictorial view of one example of a map display used to explain the principles of the present invention;
Figs. 2-1 to 2-5B are pictorial illustrations used to explain a display map viewing window of the present invention and the concept of linear transformation.
Figs. 3A-3J are pictorial illustrations of different frames of a map display in accordance with the principles of the present invention;
Fig. 4 illustrates, in part, the labelling feature of the present invention.
Fig. 5 is a block diagram of a hardware system for providing the map display of Figs. 3A-3J;
Fig. 5A shows, pictorially, one possible location of the map display in a vehicle;
Figs. 6A-6B are illustrations used to explain a map data base of the present invention;
Fig. 6C is a table used to explain the scale dependent, street prioritization scheme of the present invention;
Figs. 7A-7C are block diagrams of an overall software program structure;
Fig. 8 is a flowchart of a main software program of the present invention;
Fig. 8A is a state diagram used to describe several map display states and a non-map display state of the present invention;
Figs. 8A-1 to 8A-2 are pictorial illustrations used to explain other aspects of the present invention;
Figs. 8B to 8B-2 are pictorial illustrations used to explain heading-up and north-up modes of the present invention; and

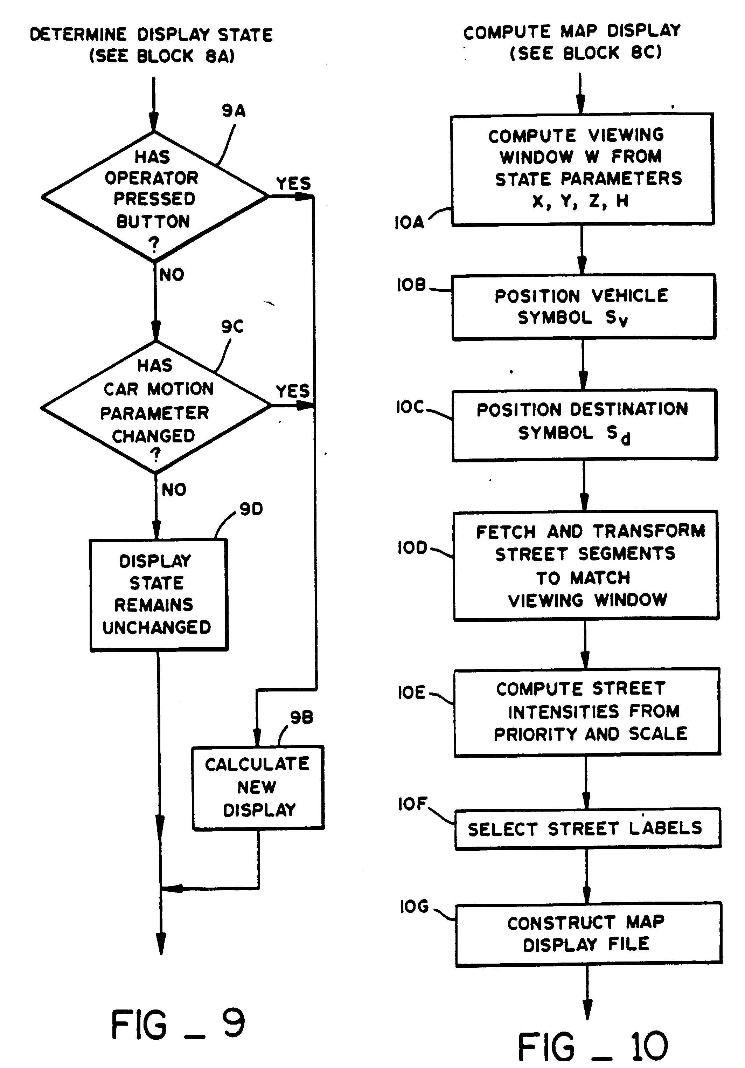

Figs. 9-18C are more detailed flow charts and other pictorial illustrations used to explain the software of the present invention.

Detailed Description of the Invention

I. Introduction

The present invention will be discussed specifically in relation to a map display used in a vehicle movable over streets to provide a navigational and other informational aid for the driver or passenger. The vehicle that will be discussed may be a motor vehicle such as a car, a recreational vehicle (RV), a motorcycle, a bus, a truck or other such type of vehicle primarily moveable over streets.

The principles of the present invention are applied to four map display features, any one or more of which may be incorporated in an overall map display system in the vehicle. These features are generally identified as (1) a moving map display, (2) a scale-dependent street prioritization scheme; (3) a selective and dynamic labelling scheme, and (4) an index/destination location technique.

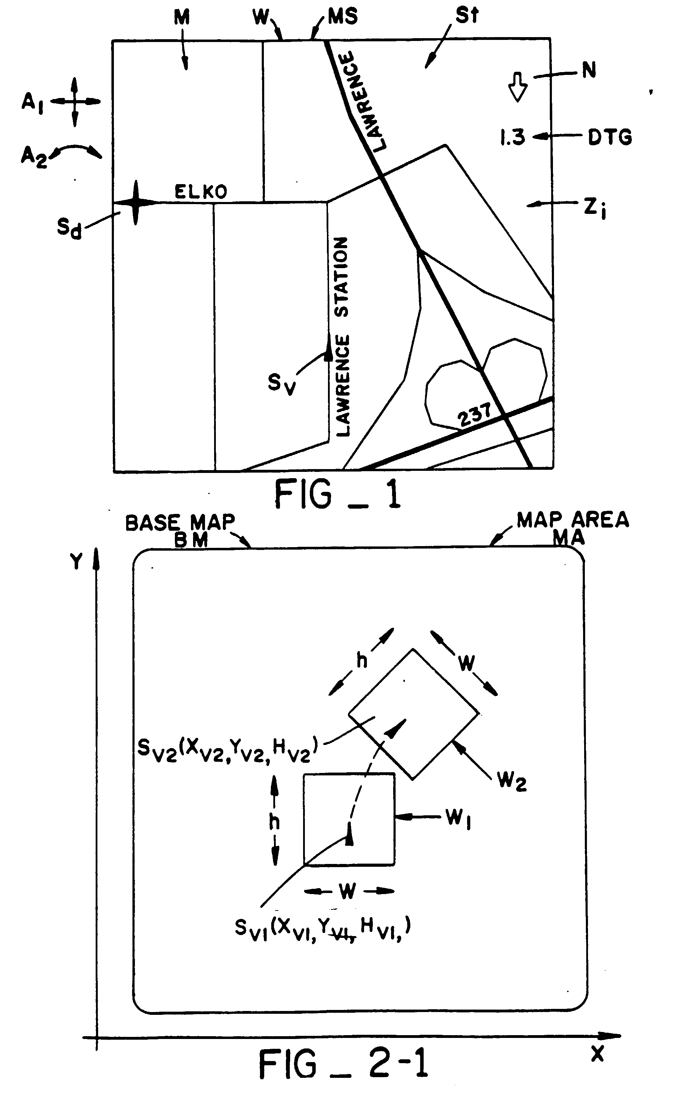

Fig. 1 shows one frame of a map display M on, for example, a monitor screen MS that is used to explain generally the above-mentioned four features of the present invention. Illustrated on the monitor screen MS for a given map display M bounded by a changeable viewing window W, which is described more fully below, are a plurality of streets generally shown by reference symbol St and/or street labels, such as "ELKO" and "237". For example, "ELKO" may be a local street, while "237" may be a highway. In addition, the map display M shows a symbol $S_v$ representing the current location and heading of a vehicle V as the vehicle V moves over the actual streets St, a symbol $S_d$ indicating the location of a desired destination of the vehicle V and a distance-to-go (DTG) number indicating the distance between the current vehicle location and desired destination.

Generally, the moving-map display feature is indicated schematically by the fourheaded arrow $A_1$ and the double-headed arrow $A_2$. Arrow $A_1$ indicates that the map display M will move on the monitor screen MS in translation relative to the symbol $S_v$ as the vehicle V moves over the area depicted by the map display M along a street St, such as "LAWRENCE STATION". Arrow $A_2$ indicates that the map display M will rotate on the monitor screen MS about the symbol $S_v$, and, thereby, have an orientation or heading $H_M$ as the vehicle V changes direction or heading $H_v$. In particular, the symbol $S_v$ remains fixed where shown on the map display M as the vehicle V moves, with the map display M shifting in translation and/or rotation. Furthermore, as shown, the map display M is a "heading-up" map display M, in which the fixed symbol $S_v$ always is pointing upwardly. An arrow N is displayed in the upper right hand corner of the monitor screen MS to show the direction of true north. The arrow N rotates with the map display M to continually show the north direction as the vehicle V changes heading $H_v$. However, as will be further described, a "north-up" map display M can be provided, in which the orientation or heading $H_M$ of the map display M is set to true north and the vehicle symbol $S_v$ is rotated to correspond to the actual vehicle heading $H_v$.

The scale-dependent street prioritization scheme is only indicated in Fig. 1 by the fact that the map display M is at a given scale level $Z_i$. As will be further described, for a given scale level $Z_i$, only certain streets St within the geographical area of the map display M are shown with the intensity of these streets St being adjusted according to their scale-dependent priority category. The scale level $Z_i$ can be decreased to show a larger geographical area or increased to show a smaller geographical area on the monitor screen MS. At any scale level $Z_i$, the complexity of the map display M will be limited by presenting only streets St of the priority appropriate for that scale level $Z_i$.

The feature of selective and dynamic labelling of the streets St involves a number of factors. For a given frame of a map display M, only certain of the streets St are labelled. Furthermore, the street labels are positioned on the map display M so as not to interfere with other labels and otherwise be easily readable as the map display M moves in translation and/or rotation. Moreover, the size of the labels will remain constant independent of the scale level $Z_i$ of the map M. And, each label is placed close to and parallel to its corresponding street St and with an orientation closest to right side up.

The index/destination location feature is indicated in Fig. 1 by the destination symbol $S_d$, and by the distance-to-go DTG from the current vehicle position represented by symbol $S_v$ to the desired destination represented by symbol $S_d$, as shown. As will be further described, the vehicle operator or a passenger will have entered information such as an address corresponding to the desired destination, which may result in the appearance on the map display M of the symbol $S_d$ at the desired destination and a number on the map display M indicating the distance-to-go DTG in units of, for example, miles. If a desired destination is at a location beyond the currently displayed map M for the current map display viewing window W, then the destination symbol $S_d$ will not be displayed, but the direction to the desired destination will be displayed along with the distance-to-go DTG as a navigational aid, as will be further described.

II. The Map Display Features - Generally

A. Description of the Map Coordinate System

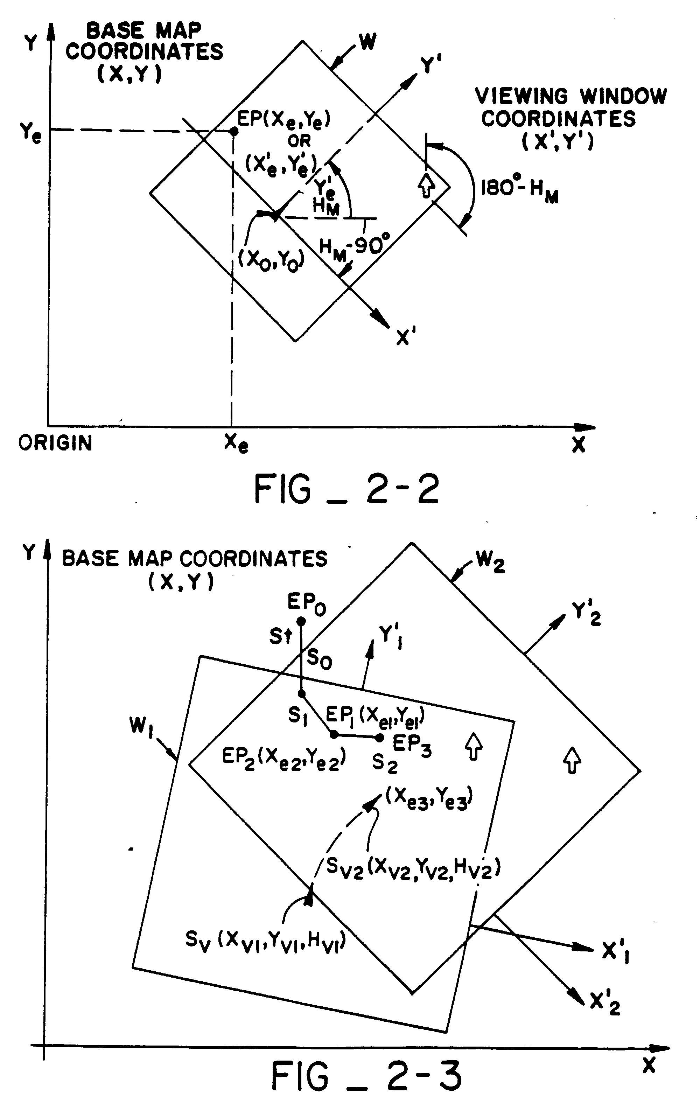

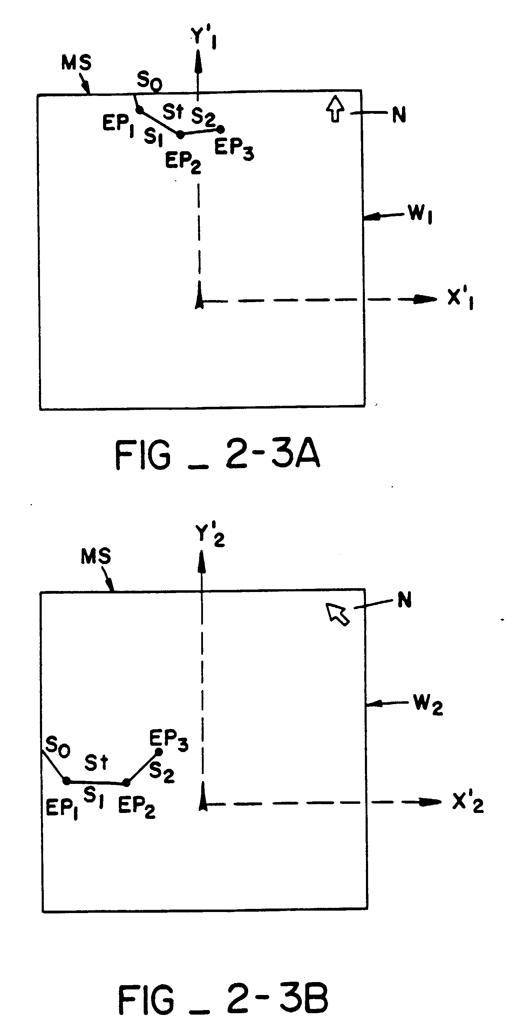

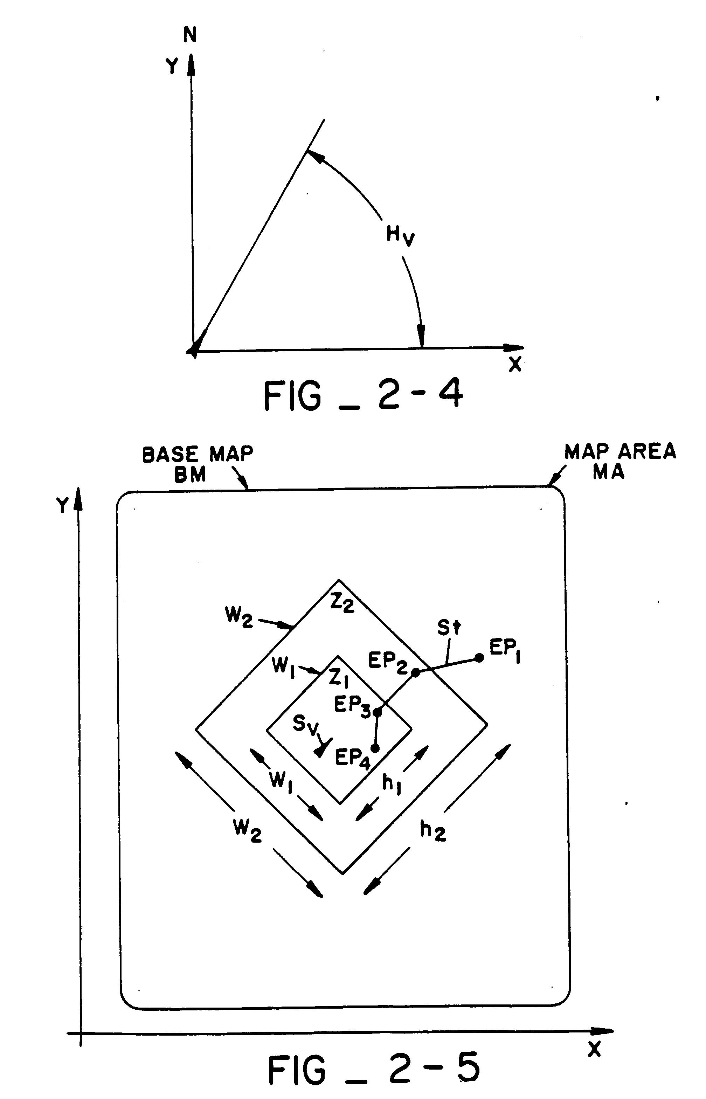

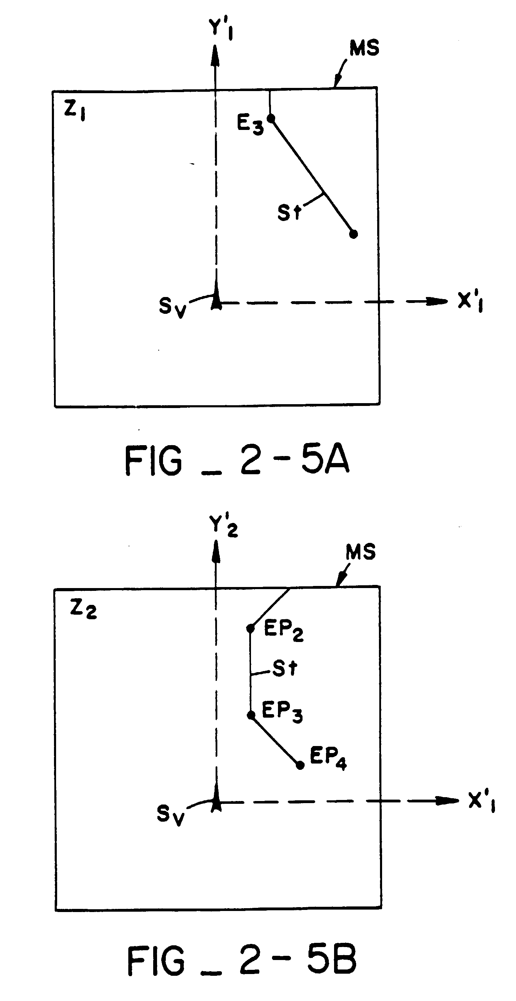

1. The Map Display Viewing Window W: Fig. 2-1 shows the outline of a generalized map area MA of a base map BM in a general coordinate system (X,Y) of a geographical area over which the vehicle V may move.

The map display M presented on the monitor screen MS as the vehicle V moves can be thought of as that part or area of the base map BM that is inside a changeable viewing window W as shown, for example, in Fig. 2-1 as the box labelled $W_1$ or the box labelled $W_2$. As described below, the viewing window W is defined by its four straight line boundaries. Generally, as the vehicle V changes heading $H_v$ and moves in the map area MA, in order for the map display M on monitor screen MS to remain centered on the position of the vehicle V and with a map orientation $H_M$ so as to place the heading $H_v$ of the vehicle V in the vertical direction ('heading-up' display), as shown in Fig. 1, the viewing window W must be correspondingly rotated and translated, as described below. Also, as the operator changes the map display scale level $Z_i$, the viewing window W will grow or shrink in size accordingly and more or less base map BM will be presented on the map display M, which also will be described below.

Symbol $S_{V1}$ of Fig. 2-1 indicates the position $(X_{V1},Y_{V1})$ and heading $(H_{V1})$ of the vehicle V at time $t_1$. The position $(X_{V1},Y_{V1})$ and heading $(H_{V1})$ are relative to the general coordinate system (X,Y). One viewing window $W_1$ shows a region of width w and height h around the vehicle V and oriented with its Y-axis along $H_{V1}$. The streets St (not shown) contained in the viewing window $W_1$ are part of the map display M on the monitor screen MS at time $t_1$.

Assume now that the vehicle V moves to a new position $(X_{V2},Y_{V2})$ and new heading $(H_{V2})$ at a time $t_2$, as indicated by symbol $S_{V2}$. At this time, another viewing window $W_2$, of the same size as window $W_1$, shows a region of width w and height h around the vehicle V and oriented with its Y-axis along $H_{V2}$. The streets St (not shown) contained in the viewing window $W_2$ are part of the map display M on the monitor screen MS at time $t_2$.

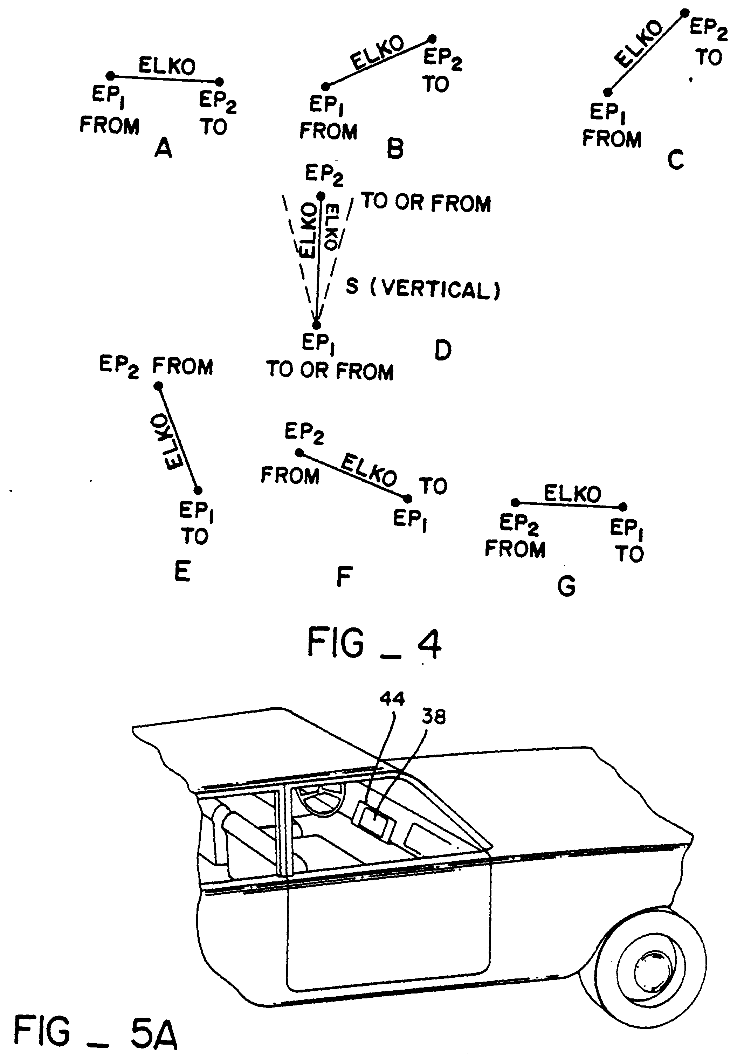

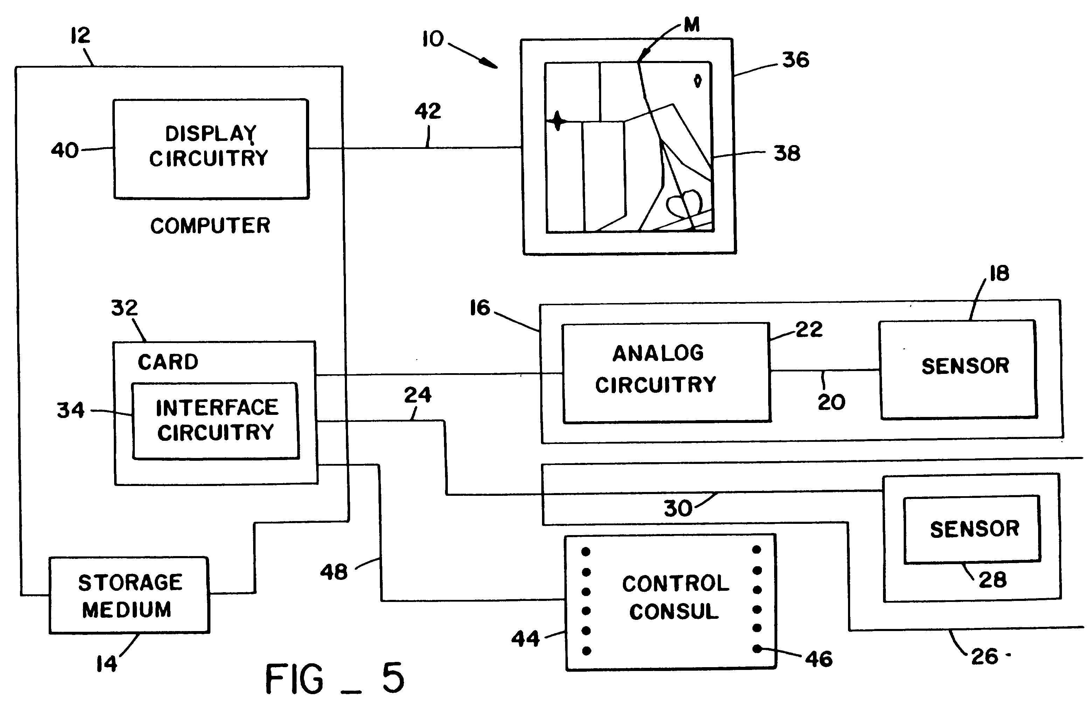

2. <u>Linear Transformation</u>: As the vehicle V moves through the map area MA, the viewing window W will move by translation and rotation as depicted by the two viewing windows $W_1$ and $W_2$ of Fig. 2-1. In order to display on the stationary monitor screen MS in the moving vehicle V a map M defined by the viewing window W, as shown in Fig. 1, a computer 12 (see Fig. 5) performs a linear transformation on the coordinates of the streets St in the base map BM.

Fig. 2-2 shows the general concept of a linear transformation of coordinates from the base map BM (X,Y) coordinate system to a new viewing window coordinate system (X'Y') used to define the origin and orientation of the viewing window W. The new axes of the viewing window W are defined by a translation of the origin of the base map BM coordinate system to a point $(X_o,Y_o)$ and the rotation of the axes of the base map BM coordinate system by an angle $(H_M-90°)$ The viewing window coordinates $(X'_E,Y'_E)$ of an end point EP (described more fully below) of a street St within the viewing window W can be computed from the coordinates of that end point EP in the base map coordinate system (i,e., $X_E,Y_E$), the translation of the origin to $(X_o,Y_o)$ and the rotation of the axes by $(H_M-90°)$, as given by the linear transformation equations (1) and (2):

$$X'_E = (X_E-X_o) \cos (H_M-90°) +(Y_E-Y_o) \sin (H_M-90°) \tag{1}$$

$$Y'_E = -(X_E-X_o) \sin (H_M-90°)+(Y_E-Y_o) \cos (H_M-90°) \tag{2}$$

where

$(X'_E,Y'_E)$     defines the end point coordinates in the viewing window coordinate system (X',Y')
$(X_E,Y_E)$     defines the end point coordinates in the base map coordinate system (X,Y)
$(X_o,Y_o)$     defines the origin of the viewing window coordinate system in the base map coordinate system, and
$(H_M-90°)$     define the orientation of the viewing window W with respect to the base map coordinate system.

This transformation can be demonstrated by the example of Fig 2-3 which shows two vehicle positions $S_{V1}$ and $S_{V2}$ and two viewing windows $W_1$ and $W_2$, respectively, with respect to the base map coordinate system (X,Y). Here, the origin $(X_o,Y_o)$ of each window $W_1$ and $W_2$ is the vehicle position $(X_{V1},Y_{V1})$ and $(X_{V2},Y_{V2})$, respectively, and the map headings $H_M$ are the vehicle headings $H_{V1}$ and $H_{V2}$, respectively. Also shown is a street St made up of straight line segments $S_0-S_2$ defined by the XY coordinates of their end points EP, as will be described more fully below.

The monitor screen MS, as indicated above, remains upright and stationary in the moving vehicle V; however, the viewing window W changes as the vehicle V moves (as also illustrated in Fig. 2-1). Thus, for a heading-up map display M, as will be described, the position and orientation of the street St will change within the viewing window W and hence on the monitor screen MS as the vehicle V moves, i.e., as the viewing window W translates (shifts) and rotates from $W_1$ to $W_2$ as shown in Fig. 2-3. This change can be computed using the linear transformation equations (1) and (2).

Fig. 2-3A shows how, after the linear transformation, the street St of Fig. 2-3 will appear on the monitor screen MS with respect to the viewing window $W_1$ of Fig. 2-3, while Fig. 2-3B shows how the same street St will appear on the monitor screen MS with respect to the viewing window $W_2$ of Fig. 2-3. As the vehicle V moves from its position $S_{V1}$ to

$S_{V2}$ (and subsequent positions), its location on the map display M remains stationery, but the street St of the map display M on the monitor screen MS changes position with reference to the vehicle symbol $S_V$, causing the map display M to be a moving map display M. Because this motion reflects the motion of the vehicle V, the map display M gives current information on vehicle position and heading.

In summary, therefore, and as shown in Fig. 2-2, new coordinates $(X'_E, Y'_E)$ for an end point EP of a segment S of the street St can be calculated with reference to a given viewing window W when the base map coordinates $(X_E, Y_E)$ of the endpoints EP are known and the linear transformation parameters $(X_o, Y_o$ and $H_M)$ of the viewing window W are known. The axes of a given viewing window W are defined by its origin $(X_o, Y_o)$ which in general is the known vehicle position $(X_V, Y_V)$, i.e., the position of $S_V$, and its orientation $H_M$ which in general is the known vehicle heading $H_V$-90°. Vehicle heading $H_V$ is defined by the angle between east (the X-axis of the base map coordinate system) and the direction of travel of the vehicle V, and is measured in a counter clockwise rotation (see Fig. 2-4). The subtraction of 90° in equations (1) and (2) is required because the heading-up display puts the heading $H_V$ at the vertical or 90° axis. Also, the arrow N in the upper right corner of each viewing window W (e.g., $W_1$ or $W_2$ of Figs. 2-3A and 2-3B, respectively) shows the direction of true north and is calculated as 180°-$H_V$ (see also Fig. 2-2).

The scale level $Z_i$ of the viewing window W defines how much of the base map BM can be seen at once on the monitor screen MS. Fig. 2-5 shows two viewing windows $W_1$ and $W_2$ at the same vehicle position $(X_V, Y_V)$ represented by $S_V$ and orientation $H_V$, but at two different scale levels $Z_1$ and $Z_2$, respectively.

Note that while the monitor screen MS physically remains the same size in the vehicle V, the two viewing windows $W_1$ and $W_2$ are two different sizes. Thus, to display the streets St at different scale levels $Z_i$, the scale of the map display M must be changed.

Fig. 2-5A shows how the street St of Fig. 2-5 will appear on the screen MS in the viewing window $W_1$ at scale level $Z_1$ and Fig. 2-5B shows how the same street St will appear on the screen MS in the larger viewing window $W_2$ at scale level $Z_2$. This scale adjustment is part of the linear transformation as described below.

The equations (1) and (2) can be modified by a scale factor to adjust the map scale as given by the general linear transformation equations (3) and (4):

$$X'_E = [(X_E-X_o) \cos (H_M-90°)+(Y_E-Y_o) \sin (H_M90°)] \cdot 2^{-i} \tag{3}$$

$$Y'_E = [-(X_E-X_o) \sin (H_M-90°)+(Y_E-Y_o) \cos (H_M-90°)] \cdot 2^{-i} \tag{4}$$

where

$2^{-i}$ defines the ith power of 2 as the scale factor applied for the scale level $Z_i$ and the remaining terms are as defined in equations (1) and (2)

The map data base is stored in the computer 12 in scale units defined here as the base map BM scale, $Z_o$. Likewise, the monitor screen MS has addressable locations which define its display coordinate system. Thus, to display the map M at scale level $Z_{i=o}$, a unity $(2°=1)$ scale factor is applied to the base map coordinates and equations (3) and (4) reduce to equations (1) and (2). For any other scale level, a scale factor adjustment has to be made as shown in equations (3) and (4). In this embodiment, i can be positive or negative integers, allowing the map display M to change scale by successive powers of 2. Other embodiments could use other fixed or variable scale factors.

Thus, in summary, the map viewing window W is the area of the base map BM that will be seen on the monitor screen MS. It is defined by the viewing window coordinate center $(X_o, Y_o)$ which is often the vehicle position $(X_V, Y_V)$, the viewing window coordinate orientation $H_M$ which is often the vehicle heading $H_V$, and the viewing window scale level $Z_i$ which is usually selected by the operator, as discussed more fully below. Given the addressable height and width of the monitor screen MS and the center, orientation and scale level of the viewing window W, the four straight line boundaries of the viewing window W can be defined. And the portion of the base map BM enclosed by the viewing window W can be translated, rotated and scaled according to the linear transformation equations (3) and (4) to present the map display M as on the monitor screen MS.

B. The Moving Map Display Feature

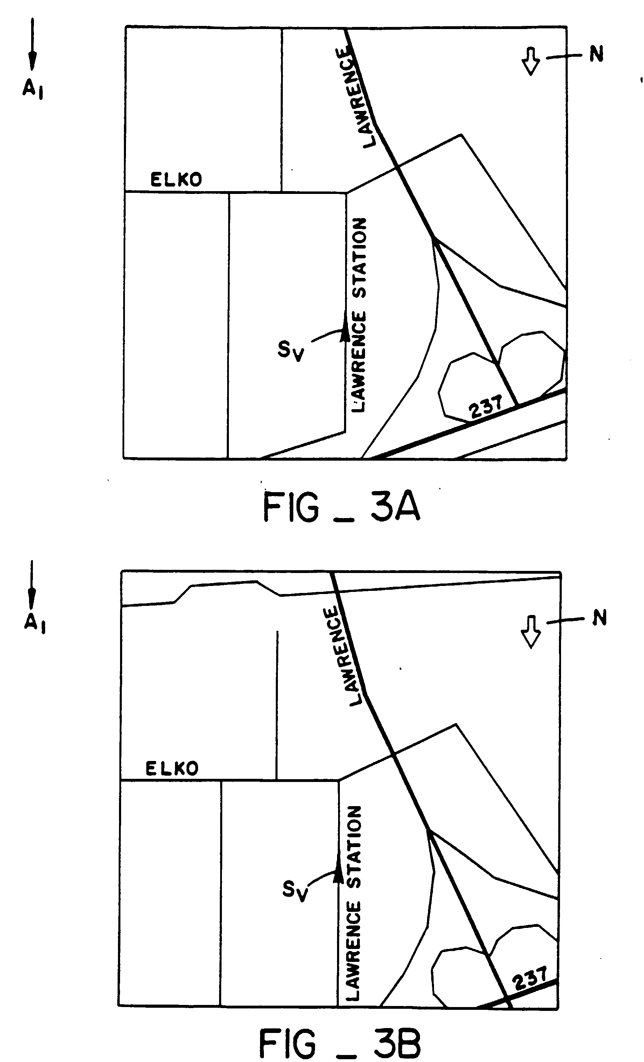

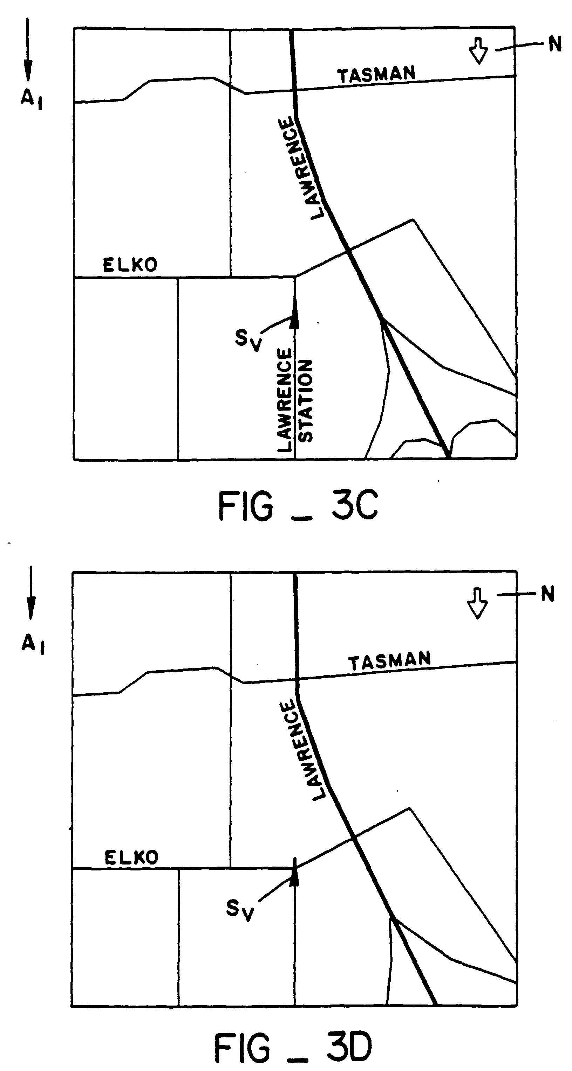

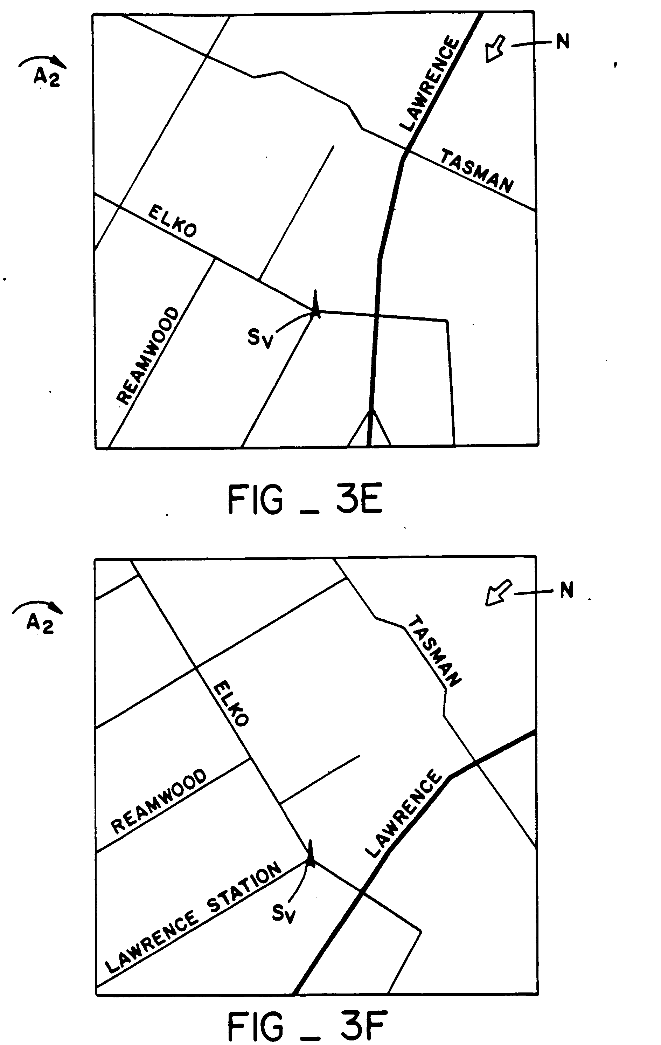

1. Translation of the map display M: Figs 3A-3D individually show one frame of the map display M, but in sequence show the map translation as the vehicle V moves over a given street St. In particular, assume, as indicated by the symbol $S_V$, that the vehicle V is moving along the street St labelled as "LAWRENCE STATION" in a direction towards the street St labelled as "ELKO". As indicated collectively in Figs. 3A-3D, as the vehicle V approaches "ELKO", the moving map display M will translate downwardly as shown by arrow $A_1$ with the symbol $S_V$ remaining fixed, so that another street St such as "TASMAN" comes into the map display viewing window W and is displayed on the monitor screen MS, while the street St labelled "237" moves out of the display viewing window W and hence off the monitor screen MS. Thus, the map display M is shifted in translation to reflect the changing positions of the vehicle V and moves as the vehicle V moves.

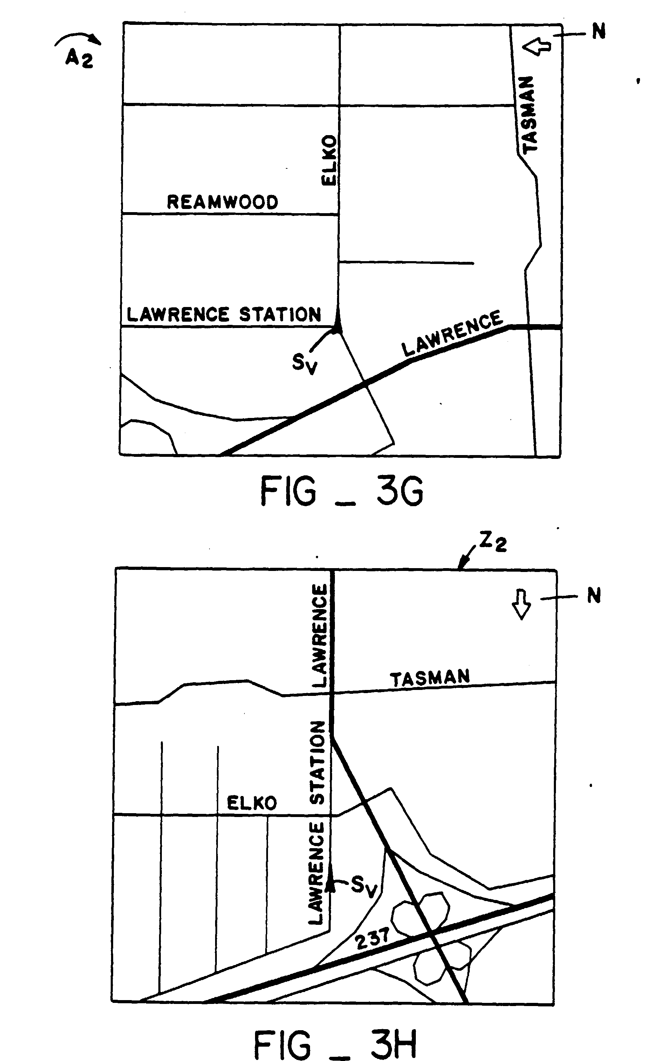

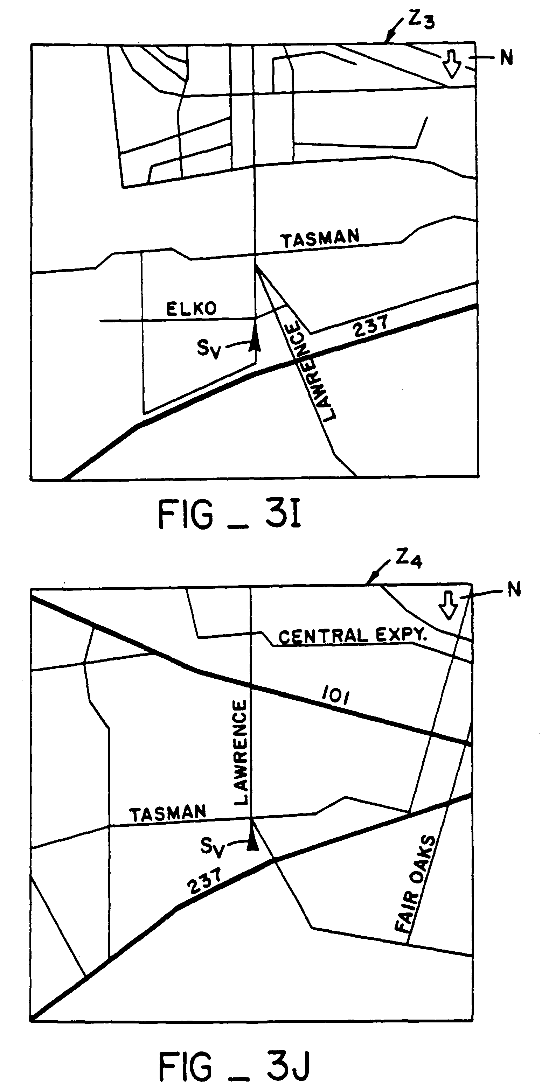

2. Rotation of the map display M: Figs. 3E-3G individually show one frame of the map display M, but in sequence illustrate the rotation of the map display M as the vehicle V changes heading $H_V$. In particular, assume that the vehicle V is at the intersection of "LAWRENCE STATION" and "ELKO", as indicated by the symbol $S_V$ in Fig 3E, and is making a left turn onto "ELKO". Accordingly, the map display M will rotate in the direction shown by the arrow $A_2$ with the symbol $S_V$ remaining fixed. At the completion of the left turn onto "ELKO", the map display M appears as shown in Fig. 3G. Thereafter, as the vehicle V moves along "ELKO", the map display M will translate as was described in Section IIB1 above and illustrated in Figs. 3A-3D.

The present invention, as indicated above and as will be further described, uses data identifying the heading $H_V$ of the vehicle V and data identifying the map orientation $H_M$ to accomplish this map rotation. Because the map display M can change orientation $H_M$ in correspondence with the vehicle orientation $H_V$, the present invention may continually display true north by the arrow N shown on the map display M, as previously mentioned, to assist the driver in understanding the current heading or movement of the vehicle V.

In another embodiment (not shown), an alphanumeric number could appear on the monitor screen MS giving the heading $H_V$ of the vehicle V in degrees or other units. This number could be shown alone or in addition to the arrow N or other compass symbol.

3. Linear Transformation: In general, as previously described, the vehicle V may move in a way which changes its position (translation) and heading (rotation) individually or simultaneously. The viewing window W and hence the moving map display M on the monitor screen MS will change according to the linear transformation. In addition, the scale level $Z_i$ may be different than the base scale level $Z_o$. The monitor screen MS will show a map display M of the viewing window W appropriately scaled according to equations (3) and (4).

C. The Scale-Dependent Street Prioritization Scheme

Figs. 3H-3J illustrate individually one frame of the map display M with the vehicle V being at a given position indicated by the symbol $S_V$, but collectively illustrate a plurality of scale levels $Z_i$ of the map display M relative to the vehicle V being at the given position. Thus, Fig. 3H shows a scale level $Z_2$ in which the map display M shows a certain complexity of streets St. The different streets St are displayed with different intensities pursuant to their priority category described below and the scale level $Z_2$. Fig. 3I shows a map display M at a scale level $Z_3$ resulting in the display of a larger geographical area surrounding the symbol $S_V$. At this scale level $Z_3$, new streets St are now displayed because more area can be seen (i.e., the map display viewing window W is enlarged), but other low priority streets St such as the "access ramps" or "collectors" to "237" are no longer displayed as they were for scale level $Z_2$. In addition, the intensities of the streets St are adjusted in dependence on the street priority and scale level $Z_3$. By these means, the complexity of the map display M (in number of streets St shown and streets labeled) remains limited and does not grow proportional to area displayed, as can be seen by comparing the map displays M of Fig. 3H and Fig. 3I.

Fig. 3J shows yet another scale level $Z_4$, in which an even greater geographical area surrounding the symbol $S_V$ is shown relative to the map display M of Fig. 3H (i.e., the map display viewing window W is still further enlarged). Thus, a comparison of Fig 3H and 3J will show that in the latter, streets St such as "ELKO" are no longer displayed, and only more major streets St such as "CENTRAL EXPRESSWAY" and "FAIR OAKS" are displayed. Note that in Fig. 3J the street "LAWRENCE STATION" on which the vehicle V is moving is not even displayed. In addition, the intensities of the streets St are adjusted in dependence on the street priority category and scale level $Z_4$. Again, the complexity of this map display M remains limited and is substantially the same as the complexity of the map displays M at scale levels $Z_2$-$Z_3$.

The scale level $Z_i$ can be changed by the vehicle operator. The scale level $Z_i$ changes between Figs. 3H ($Z_2$) and 3I ($Z_3$) and between Figs. 3I ($Z_3$) and 3J ($Z_4$) by a scale factor $2^{i+1}/2^i=2$. While only three scale levels $Z_2$-$Z_4$ are shown, the principles of the present invention can be applied to a greater number of scale levels $Z_i$.

D. Selective and Dynamic Labelling

Figs. 3A-3J illustrate the feature of the present invention relating to the selective and dynamic labelling scheme. The overall result of this selective and dynamic labelling scheme is that street labels are displayed in a manner to enable the driver to quickly and easily find the navigational information that is being sought from the map display M. The several selective and dynamic labelling features that provide for this result are discussed below, but not in any order of priority.

As described in IIC above, only selected streets St are displayed for a given scale level $Z_i$. Thus, for example, as shown in Fig. 3J, for the scale level $Z_4$, only the major highways and a few lesser major roads are displayed; of these some are selected for labelling. When the map display M is at the scale level $Z_2$, as shown in Fig. 3H, only a few streets St are in the viewing window W and even minor streets St are shown and a subset of these streets St is selected for labelling.

In general, and as one example of many priority labelling schemes that may be embodied by the current invention, streets St will be selected for labelling in the following priority order of categories:

1. The next cross street St shown on the map display M. This cross street St is the closest street St ahead of the vehicle V crossing the path which the vehicle V is current driving.
2. The second next cross street St ahead of the vehicle V.
3. The street St on which the vehicle V is moving, if that street St is currently being displayed. This street St may not be displayed if, for example, the priority of that street St is low (see Fig. 3J).
4. Remaining streets having names in the map data base (discussed below), ordered by priority, whether or not they are ahead of the vehicle V, and lastly, by their length on the display screen MS.

Furthermore, as shown by all the Figures 3A-3J, irrespective of the movement of the map display M in translation and/or rotation, or the particular scale level $Z_i$ of the map display M, the labels are always positioned so that they are easy to read at a glance. In particular, the labels are always displayed along and parallel to a street St in a substantially upright orientation. This can be further explained by reference to Fig. 4 which shows various orientations A-G of the street St, and the label "ELKO" as may be displayed on monitor screen MS.

As shown in Fig. 4, the label "ELKO" is applied to several street segments S at different orientations, with each segment S having two endpoints EP1 and EP2. One endpoint is defined as the FROM node. The label "ELKO" is written slightly above and parallel to the segment S in the direction of the FROM node to the TO node which defines the other endpoint.

The FROM node is generally defined as the left end point (algebraic least X value) unless the slope of the segment S (given by $|(Y'_1-Y'_2)/(X'_1-X'_2)|$) is sufficiently large that the segment S is very close to vertical; see the vertical example in illustration D of Fig. 4. In this case, either node could be the FROM node and the determination is based upon which node was the FROM node on the last frame of the map display M.

The labels also are positioned on the monitor screen MS so that there is a minimum interference with other labels for the other streets St, as will be described below. Labelling continues according to the above example of a priority scheme until all selected streets St are labelled or a total of, for example, five streets St are labelled, whichever comes first.

Moreover, the size of the labels remains constant irrespective of the scale level $Z_i$ of the map display M. Thus, if the scale level $Z_2$ or the scale level $Z_3$ is selected, the size of the labels is the same for ease of reading. In other words, the size of the labels is not disproportionately large or small as a function of the scale level $Z_i$ of the map display M.

### E. Index/Destination Location Scheme

As will be further described, to display the desired destination symbol $S_d$ (see Fig. 1), the driver of the vehicle V can specify a street address or select the intersection of two streets St from an index of streets St. In response, the desired destination location will be shown via the symbol $S_d$ on the map display M, with the scale level $Z_i$ automatically selected to show the least area for displaying both the vehicle symbol $S_V$ and the destination symbol $S_d$, as will be described later. If the driver subsequently changes the scale level $Z_i$ such that the desired destination location is beyond the viewing window W, the direction to that destination location is displayed by an arrow, together with the numeric distance-to-go (DTG) to that destination, as will be described below.

### III. The System Hardware

Fig. 5 illustrates one embodiment of system hardware 10. The computer 12 accesses a data storage medium 14, such as a tape cassette or floppy or hard disk, which stores data including a map data base and software for processing the data in accordance with a map display algorithm, as will be described below. For example, the computer 12 can be an IBM personal computer (PC) currently and widely available in the marketplace, and executes program instructions disclosed below. Another example can be circuitry which executes the same instruction set (at the same clock rate) as the IBM PC.

System 10 also includes means 16 for sensing the distance traveled by the vehicle V. For example, the means 16 can constitute one or more wheel sensors 18 which sense the rotation of the non-driven wheels (not shown) respectively of the vehicle V and generate analog distance data over lines 20. Analog circuitry 22 receives and conditions the analog distance data on lines 20 in a conventional manner, and then outputs the processed data over a line 24.

System 10 also includes means 26 for sensing the heading $H_V$ of the vehicle V. For example, means 26 can constitute a conventional flux gate compass 28 which generates heading data over a line 30 for determining the vehicle heading $H_V$.

The computer 12 has installed in it an interface card 32 which receives the analog distance data from means 16 over line 24 and the analog heading data from means 26 over line 30. Interface circuitry 34 on the card 32 converts and conditions these analog data to digital data, identifying, respectively, the distance traveled by the vehicle V and heading $H_V$ of the vehicle V. For example, the interface card 32 may be the commercially available Tec-Mar Lab Tender Part No. 20028, manufactured by Tec-Mar, Solon, (Cleveland) Ohio. Another example is custom made circuitry which performs the above-described functions.

The system 10 also includes a display means 36, such as a CRT display or xyz monitor 38 (corresponding to monitor screen MS previously described), for displaying the map M, as well as non-map displays D such as the index of streets St, as will be further described. Display circuitry 40 is installed in the computer 12 and is coupled to and controls the display means 36 over lines 42, so as to display the map M, the symbol $S_V$, the movement of the map display M relative to the symbol $S_V$, the destination symbol $S_d$, the street labels and the other information previously described, as well as the non-map displays D. The display circuitry 40 responds to data processed and provided by the card 32 in the overall computer 12 in accordance with the display algorithm of the present invention to provide the map display M and the non-map displays D. As another example, the display means 36 and the display circuitry 40 may be one unit sold commercially by the Hewlett-Packard Company, Palo Alto, California as model 1345A (instrumentation digital display) or may be circuitry designed especially for this function.

The system 10 also includes an operator-controlled console means 44 having buttons 46 by which the vehicle operator may enter command and other data to the system 10, such as a desired scale level $Z_i$, as will be further described below. Console means 44 communicates over a line 48 with the means 32 to input the data to the computer 12.

The system 10 may be installed in a car. For example, monitor 38 may be positioned in the interior of the car near the dashboard for viewing by the driver or front passenger. The driver will see on the monitor 38 the map display M and the other information described above. The console means 44 may be co-located with the monitor 38, as shown in Fig. 5A.

IV. <u>Information Used to Provide the Display</u>

A. <u>The Base Map BM</u>

1. <u>Introduction</u>

The base map BM is stored on the storage medium 14 as part of the map data base which is accessed by the computer 12. The viewing window W is defined principally by the vehicle position $(X_V, Y_V)$, orientation $H_V$ and scale level $Z_i$, as previously mentioned, as well as by any PAN offsets to be described below. Once the viewing window W is defined, street segments S within the viewing window W or intersecting the straight line boundaries of the viewing window W can be retrieved from the storage medium 14 along with other related data to be used to generate the map display M. Data in the map data base include, as will be further described, data identifying (1) a set of line segments {S} defining the set of streets {St}, (2) street names identifying the streets St and address fields identifying numeric addresses along the streets, and (3) a code identifying each street by priority category.

2. <u>Set of Line Segments {S}</u>

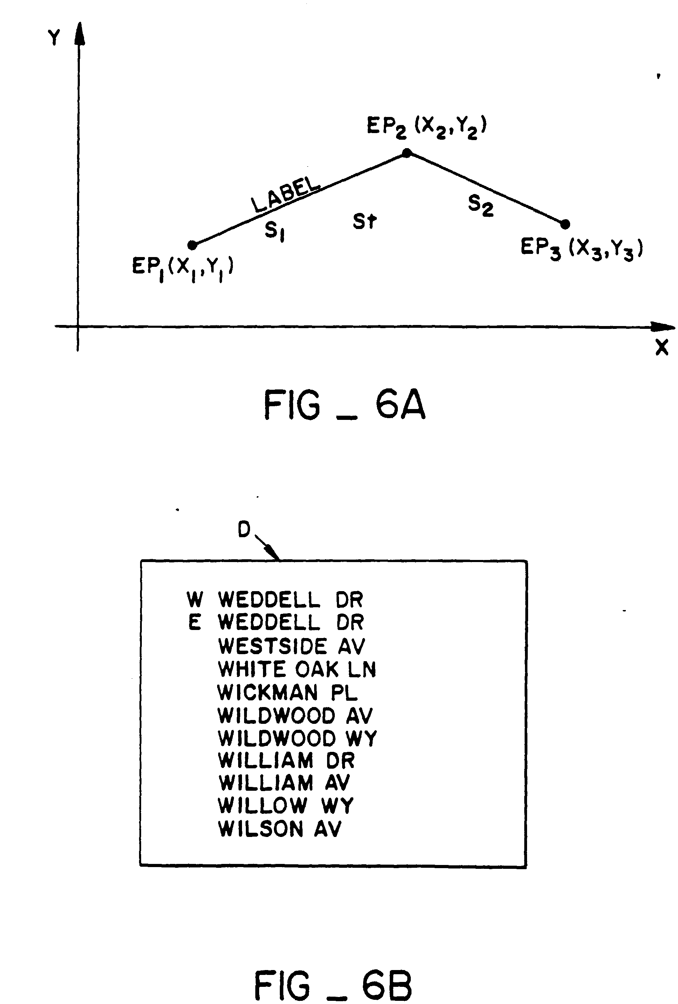

Fig. 6A is used to explain the data stored on medium 14 that identify a set of line segments {S} defining the set of streets {St}. Each such street St is stored on the medium 14 as an algebraic representation of the street St. Generally, each street St is stored as one or more arc segments, or, more particularly, as one or more straight line segments S. As shown in Fig. 6A, each line segment S has two end points, for example, $EP_1$, $EP_2$ for $S_1$ and $EP_2$, $EP_3$ for $S_2$, respectively, which are defined by coordinates $(X_1Y_1, X_2Y_2)$ and $(X_2Y_2, X_3Y_3)$ respectively, as previously mentioned, and it is these coordinate data that are stored on the medium 14 as part of the base map BM. These coordinate data are stored at a base map scale $Z_o$ where, for example, this scale may be such that 1 unit represents 5 feet.

3. <u>Street Names and Addresses</u>

Associated with almost every street St in the map data base is its name for labeling purposes, which is shown as "LABEL" in Fig. 6A. A numeric address is associated with some endpoints EP defining the street address at that point. Addresses are associated to end points EP in such a way that linear interpolation can be used to approximate the location of any real address along the street St. These aspects will be described more fully below.

#### 4. Street Priority Categories

Each street St has a code associated with it which identifies the priority category of the street. These categories include, for example, freeways, expressways, arterial roads, collectors, residential streets, alleys, highway access ramps and non-driveable boundaries. This code is used in connection with the scale-dependent prioritization scheme described below. Thus, for example, a 4-bit code can be used to define 16 priority categories of streets St.

#### 5. Listing of Street Names

The map data base also has an alphabetical listing or index of the labels or names of streets St. Parts of this index may be called on the monitor screen MS of monitor 38 by depressing the buttons 46. One or more of these streets St may then be selected to input the desired destination data for displaying the destination symbol $S_d$. Fig. 6B illustrates a portion of the index as it is displayed on the monitor 38. In addition to using two intersecting street names, one street name and a numeric address can be used to position the destination symbol $S_d$ along the street St on the map display M.

#### B. A Scale-Dependent Street Prioritization Table

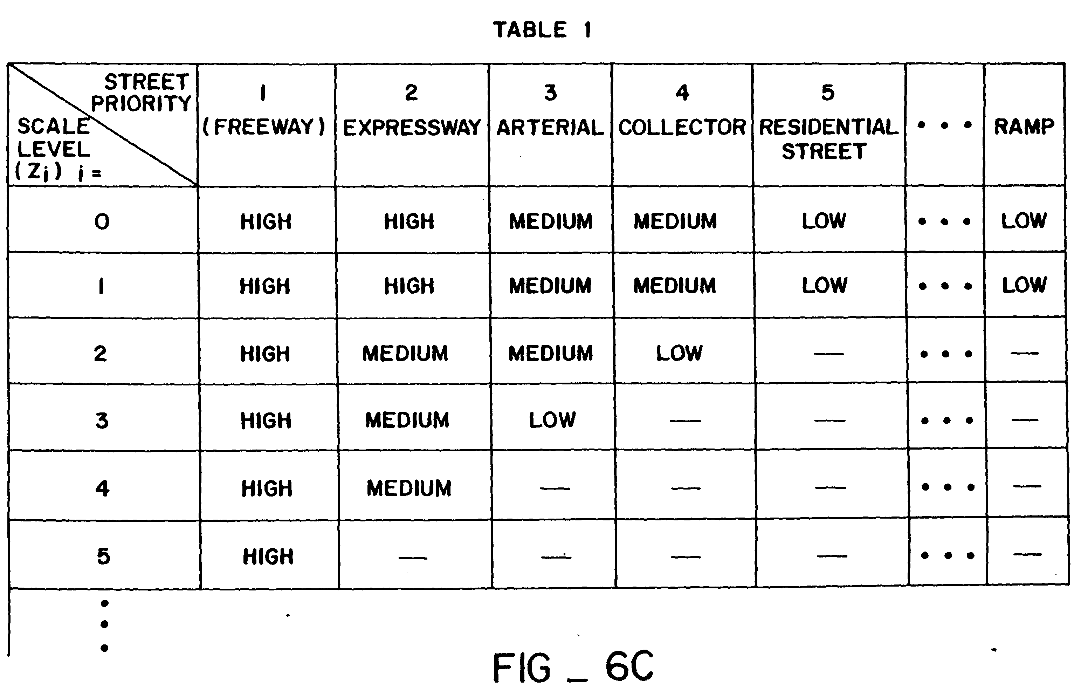

Fig. 6C shows a lookup Table I that is stored on the storage medium 14 as part of the computer program of the present invention described below. The Table I shows the plurality of street priority categories versus a plurality of scale levels, e.g., levels $Z_0$-$Z_5$. For each scale level $Z_0$-$Z_5$, there are entries corresponding to the street priority. The entries are indicated as "-" or "low" or "medium" or "high". These, as will be further described, correspond to the relative brightness or intensity of the corresponding streets that are displayed or not displayed on the monitor 38 for a given scale level $Z_0$-$Z_{10}$. Where the Table I shows "-", the corresponding street St for the given scale level $Z_0$-$Z_{10}$ will not be displayed.

Thus, for example, at the scale level $Z_1$, a residential street St will be displayed with low intensity or brightness. However, for the scale level $Z_2$, the same residential street St will not be displayed at all. Similar variations of the display intensities in dependence on the scale levels $Z_0$-$Z_5$ can be seen by a review of the Table I.

Essentially, and as will be further described, if a street St is determined to be within the map display viewing window W of the vehicle V, then the priority category code associated with the given street St is read to determine the category of this street St. Then, a table lookup procedure is performed by the computer 12, whereby Table I is read for the current scale level $Z_i$ to determine the brightness for the given street St.

Table I is just one embodiment of a scale-dependent priority map display M designed to limit the complexity (and maximize driver utility) of the map display M in the vehicle V.

#### V. Software System

#### A. Overall Computer Program Structure

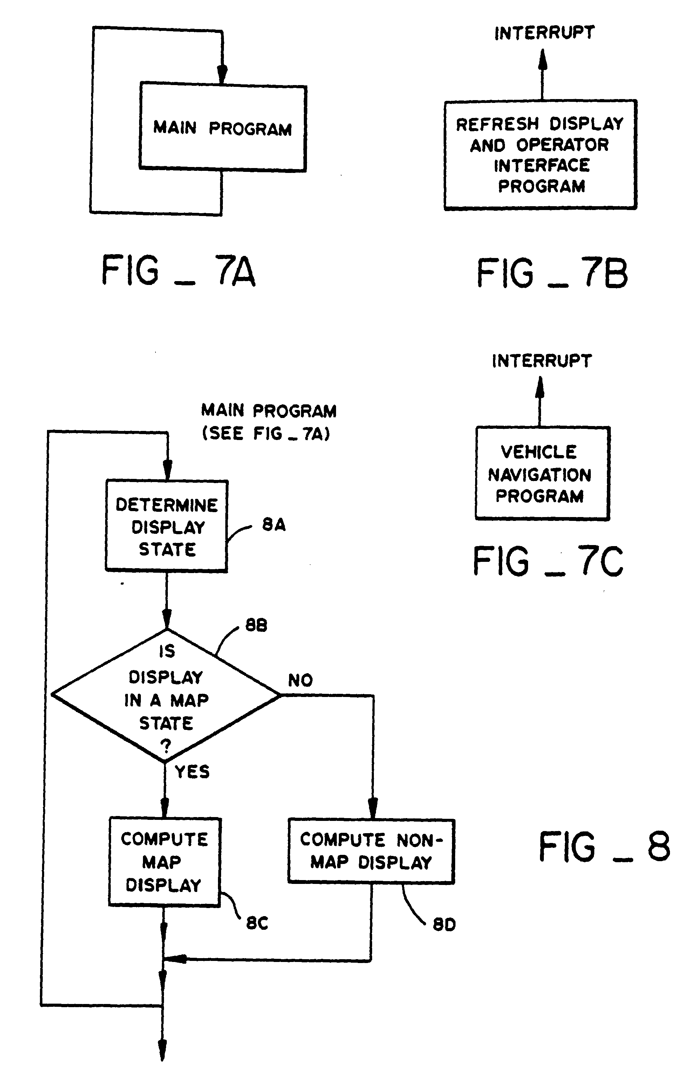

Figs. 7A-7C show three block diagrams which together constitute an overall computer program structure that is utilized by the system 10. Fig. 7A references a main program, with Figs. 7B-7C referencing interrupt programs. The main program of Fig. 7A computes the map display M and non-map display D for the monitor 38, as will be described in more detail below. The interrupt program of Fig. 7B is used to refresh the monitor 38 and to provide an operator interface via the console means 46. The interrupt program of Fig. 7C is a program performing a vehicle navigation algorithm, one example of which is described in detail as part of a co-pending patent application Serial No. 618,041, filed June 7, 1984, and assigned to the assignee of the present invention. The vehicle navigation program of Fig. 7C interrupts the main program of Fig. 7A about once per second and computes the current position of the vehicle V and other navigational parameters, as described in the co-pending patent application. The navigation program of Fig. 7C then provides the main program of Fig. 7A with input data identifying the current position $(X_V Y_V)$ for the symbol $S_V$ and the heading $H_V$ of the vehicle V. These input data are used, as will be further described, to enable the main program of Fig. 7A to compute the map display M. While a detailed understanding of the vehicle navigation program is not believed to be essential for understanding the present invention, nevertheless the above-identified co-pending application Serial No. 618,041 is, in its entirety, herein incorporated by reference.

Data about the heading $H_V$ of the vehicle V may be obtained from the reading of the sensor 28. However, if the navigation program of Fig. 7C determines that the vehicle V is on a street St, again as described in detail in the above-mentioned co-pending patent application, the identification or name of the street St and the XY coordinate data of the endpoints EP of the particular segment S (see Fig. 6A) of that street St on which the vehicle V is moving can be passed to the main program of Fig. 7A. The latter then may use this input data to compute a map orientation $H_M$ from the street heading $H_S$ derived from such XY coordinate data, where $H_S \simeq H_V$, such that small changes in the sensor reading from the sensor 18 that might change $H_V$ do not change the map orientation $H_M$.

The street heading $H_S$ can be derived from the segment coordinate data of $EP_1$ $(X_1Y_1)$ and $EP_2$ $(X_2Y_2)$ of the segment S as:

$$H_s = \text{arc tan } \frac{(Y_2 - Y_1)}{(X_2 - X_1)} \tag{5}$$

where it has been determined that the vehicle V is moving in the direction from $EP_1$ to $EP_2$.

B. The Main Program

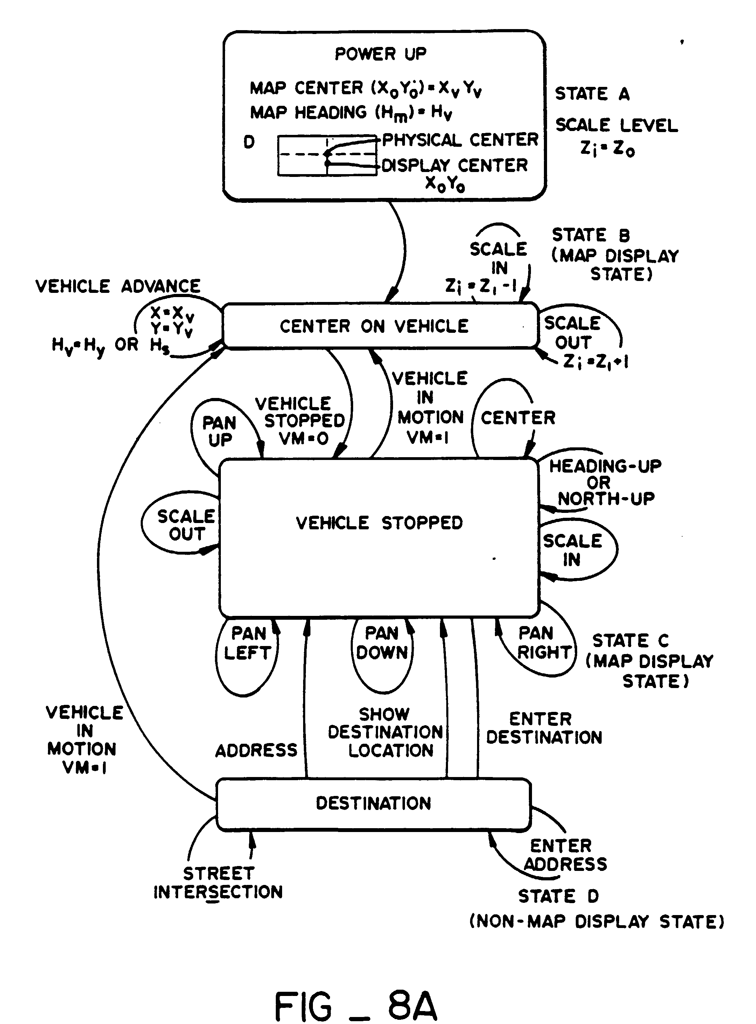

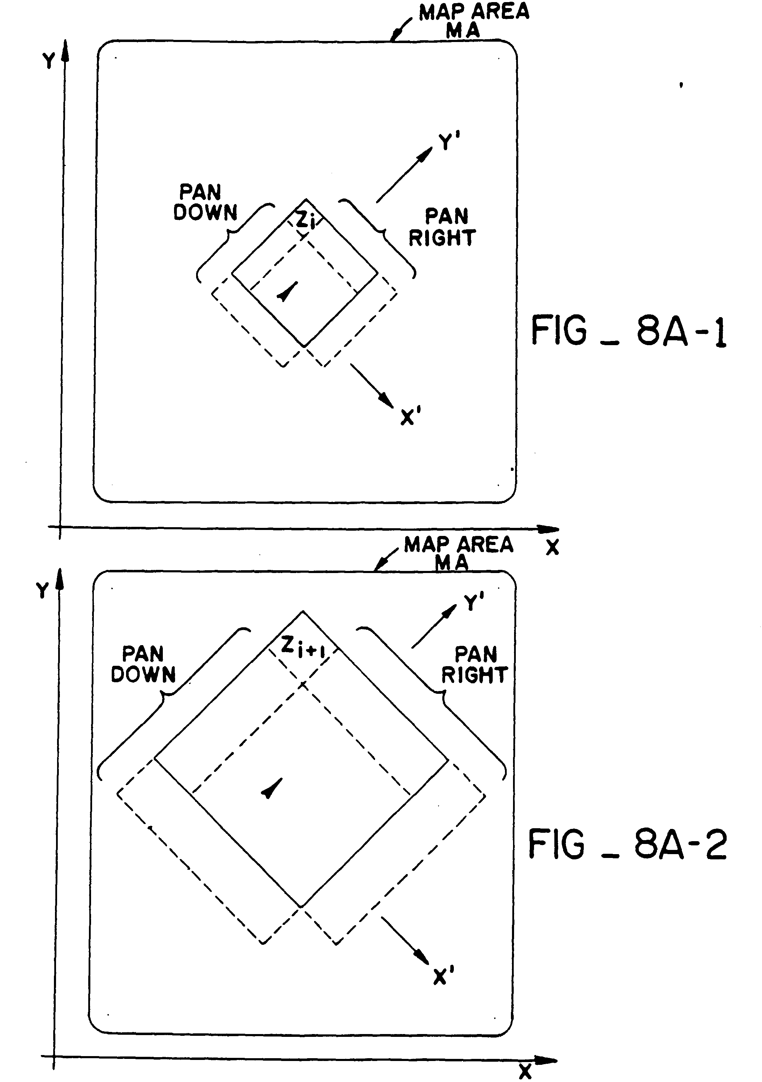

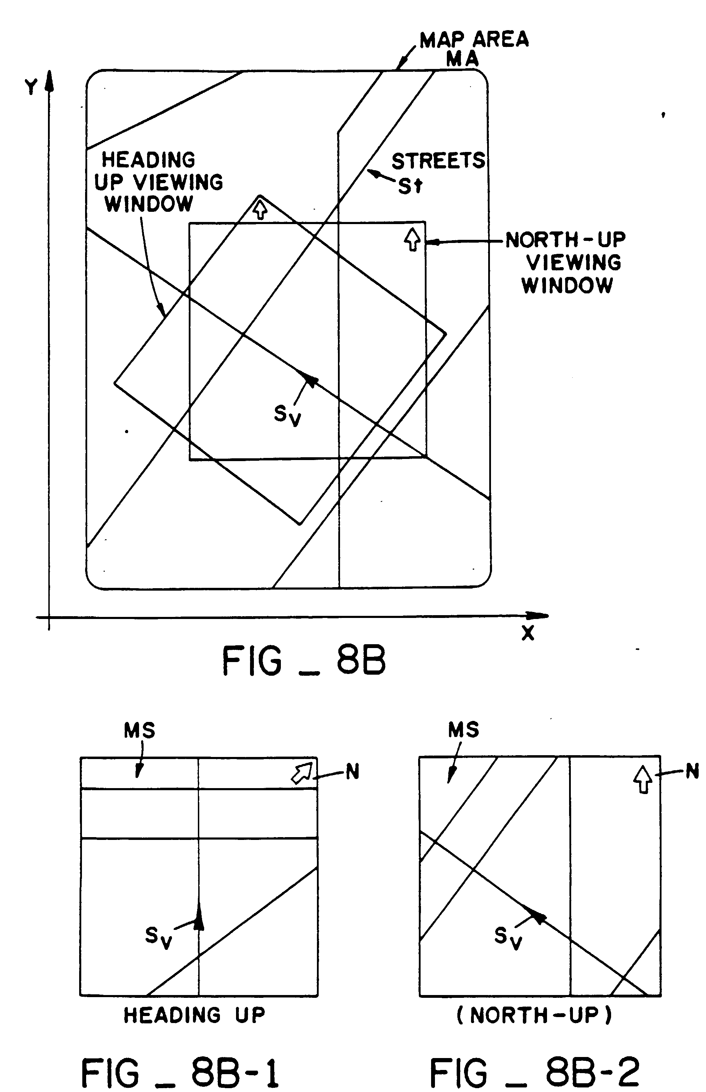

Fig. 8 is a flow chart of the overall main program of Fig. 7A. First, the computer 12 determines the DISPLAY STATE of the system 10 (Block 8A), as will be described in Fig. 8A. The DISPLAY STATE represents a sequence of vehicle conditions (moving or non-moving) or operator selections via console means 44, which define the display presentation on monitor 38. For example, the monitor 38 may be in one of two MAP DISPLAY STATES for displaying the map M or in a NON-MAP DISPLAY STATE for displaying alphanumeric data, such as the index of street names shown in Fig. 6B.

The computer 12 tests the DISPLAY STATE (Block 8B) to determine if the system 10 is in a MAP DISPLAY STATE. If in a MAP DISPLAY STATE, then the computer 12 computes the map display M (Block 8C) and a return is made to Block 8A. If the system 10 is in a NON-MAP DISPLAY STATE, then the computer 12 computes the non-map display D (Block 8D), and the routine returns to Block 8A. These computations result in data which are used by the interrupt program of Fig. 7B to generate the display M or D.

Fig. 8A is used to explain the several DISPLAY STATES (see Block 8A of Fig. 8). When the system 10 is first turned on, the computer 12 causes a power-up STATE A (non-display), while computing initial map display parameters. There are three parameters which are (1) the X and Y map coordinates of the origin of the display viewing window W (i.e., $X_oY_o$), (2) the map orientation $H_M$ of the viewing window W and (3) the scale level $Z_i$ of the viewing window W. The display origin is not at the physical center of the monitor 38, but, as indicated in STATE A of Fig. 8A, at a point $(X_oY_o)$ centered in the X direction and, for example, 1/3 up the monitor 38 in the Y direction. The coordinates $(X_oY_o)$, as previously mentioned, define the point on the monitor 38 that is used as the origin for positioning the coordinate system of the display viewing window W. This position generally (but not always, such as for PAN commands described below) is coincident with the current position $(X_VY_V)$ of the vehicle V represented by the symbol $S_V$. The map orientation $H_M$ defines the compass direction that is vertically up on the monitor 38 with reference to the display viewing window W and defines the orientation of the north arrow N on the monitor 38. For example, the map orientation $H_M$ of a given frame of the map display M may be such that the compass direction southwest is pointing or heading up.

During power-up the main program of Fig. 7A determines the position $(X_VY_V)$ of the vehicle V and its heading $H_V$ from previous values stored prior to last power down. These data are used to position the viewing window W to the proper location and orientation for the map display M (i.e., $X_oY_o=X_VY_V$, and the map orientation, i.e., $H_M=H_V$). Additionally, an initial scale level $Z_i$ is selected to define the size of the viewing window W. These parameters are used directly in equations (3) and (4) to construct the map display M. The power-up STATE A is then automatically changed to a MAP DISPLAY STATE B termed a "center-on-vehicle" DISPLAY STATE B.

In DISPLAY STATE B, as shown in Fig. 8A, the display parameters (1)-(3) and, hence, the map display M, can change by motion of the vehicle V, as was illustrated in Figs. 3A-3G, and by the vehicle driver selecting a scale level $Z_i$, as was shown in Figs. 3H-3J. As the vehicle V moves, the navigation program of Fig. 7C computes a new position $(X_VY_V)$ which is used to define the parameters described above. The new heading $H_V$ of the vehicle V and which street St the vehicle V is on are combined to compute $H_M$, where:

$H_M =$   $H_V$ if the vehicle V is not determined to be on any street St, as described in the above-mentioned co-pending application

$H_M =$   $H_S$ if the vehicle V is determined to be on a street St; where $H_S$ is computed as the heading of street St and $H_S \simeq H_V$; see equation (5)

Also, a scale level $Z_i$ can be changed by generating an appropriate SCALE COMMAND (IN or OUT) via the buttons on 46 on the console means 44.

The DISPLAY STATE B is automatically switched to a DISPLAY STATE C ("vehicle stopped") when the vehicle V is stopped, as may be determined, for example, from the navigation program of Fig. 7C which is calculating the distance traveled by the vehicle V. In MAP DISPLAY STATE C, in addition to the SCALE COMMANDS IN or OUT, the operator can enter commands via the buttons 46 to cause the map display M to PAN UP, PAN DOWN, PAN LEFT and PAN RIGHT. Each PAN command results in the computer 12 calculating a new origin $(X_o Y_o)$ of a new display viewing window W pursuant to equations 6 below and with reference to Fig. 8A-1 which shows the results of a PAN RIGHT command (dashed lines) and a PAN DOWN command (dotted lines):

PAN RIGHT

$$X_{o(new)} = X_{o(old)} + h_i/4 \cdot \cos (H_M\text{-}90°) \qquad (6\text{-}1)$$

$$Y_{o(new)} = Y_{o(old)} + h_i/4 \cdot \sin (H_M\text{-}90°)$$

PAN LEFT

$$X_{o(new)} = X_{o(old)} - h_i/4 \cdot \cos (H_M\text{-}90°) \qquad (6\text{-}2)$$

$$Y_{o(new)} = Y_{o(old)} - h_i/4 \cdot \sin (H_M\text{-}90°)$$

PAN DOWN

$$X_{o(new)} = X_{o(old)} + h_i/4 \cdot \sin (H_M\text{-}90°) \qquad (6\text{-}3)$$

$$Y_{o(new)} = Y_{o(old)} - h_i/4 \cdot \cos (H_M\text{-}90°)$$

PAN UP

$$X_{o(new)} = X_{o(old)} - h_i/4 \cdot \sin (H_M\text{-}90°) \qquad (6\text{-}4)$$

$$Y_{o(new)} = Y_{o(old)} + h_i/4 \cdot \cos (H_M\text{-}90°)$$

where $h_i$ = height of viewing window $W_i$

This results in shifting or translating the map display viewing window W in either X' or Y' by an amount proportional to the current scale level $Z_i$, as shown by comparing Fig. 8A-1 at scale level $Z_i$ and a comparable Fig. 8A-2 but at a scale level $Z_{i+1}$. Each press of a PAN button 46 will activate one of equations 6-1 to 6-4. Multiple PAN commands are allowed. In this example, each PAN command changes the viewing window W by 25 percent of the height dimension h. Other embodiments could use fixed or variable percentage amounts.

By sequential SCALE and PAN commands, the operator can view a window W of any part of the map area MA at any scale level $Z_i$. As a consequence of using the PAN commands, the vehicle symbol $S_V$ may no longer appear at the display center $(X_o Y_o)$; see, for example, PAN RIGHT of Fig. 8A-2. However, the computer 10 stores the coordinates $(X_V Y_V)$ of the current vehicle position. Thus, by pressing another button 46 named, for example, CENTER, the display viewing window W will again be translated so that the vehicle symbol $S_V$ appears at the display center $(X_o Y_o)$ by using $(X_V Y_V)$ in equations (3) and (4) to center the viewing window W on the vehicle position $(X_V Y_V)$.

In DISPLAY STATE C of Fig. 8A, a NORTH-UP command can be entered to select "north-up" map orientation $H_M$, which results in the setting of the map orientation $H_M$ to true north. In this north-up map orientation, $H_M = 90°$ or north and the vehicle symbol $S_V$ is rotated on the map display M corresponding to the vehicle heading $H_V$. The north-up map orientation $H_M$ can be reset to the heading-up map orientation $H_M$ by entering a HEADING-UP command by which the symbol $S_V$ points up, and the map display M rotates appropriately. The heading-up and north-up display viewing windows W are shown in Fig. 8B. The resulting map displays M are shown, respectively, in Figs. 8B-1 and 8B-2. The computer 12 changes between heading-up and north-up map displays M by recomputing end points EP according to equations (3) and (4) and by changing $H_M$ to $H_V$ for heading up or to 90° for north up.

While in the DISPLAY STATE C, should the vehicle V move, the system 10 automatically reverts to the center-on-vehicle DISPLAY STATE B. This motion is determined if the distance between the current vehicle position $X_V, Y_V$ and the vehicle position $X_V, Y_V$ stored when STATE C was first entered, exceeds a threshold distance. Concommitantly, DISPLAY STATE C is entered if the vehicle V has not moved the threshold distance in a threshold period of time.

While in DISPLAY STATE C, the operator can call a DISPLAY STATE D for entering desired destination data, as described more fully below. In this DISPLAY STATE D, the operator will view on the monitor 38 and can index through by depressing appropriate buttons 46, the listing of street names of the map data base (see Fig. 6B). Once a desired destination is selected a new scale level $Z_i$ is automatically calculated. Then, the computer 12 will automatically return to DISPLAY STATE B with the current vehicle position $(X_V Y_V)$ and display heading $H_M$ to calculate the viewing window W so as to display both $S_d$ and $S_V$, position the destination symbol $S_d$ and calculate the distance-to-go DTG data.

Thus, with reference to Fig. 9, which is a flow chart used to determine the DISPLAY STATE (see Block 8A of Fig. 8), if the operator has pressed one of the buttons 46 (Block 9A), then the computer 12 calculates a new DISPLAY STATE (Block 9B). If the operator has not pressed a button 46 (Block 9A), but the parameters indicating motion of the vehicle V have changed (Block 9C), then the computer 12 calculates a new DISPLAY STATE (Block 9B). If such car motion parameters have not changed (Block 9C), then the computer 12 maintains the same DISPLAY STATE on the monitor 38 (Block 9D).

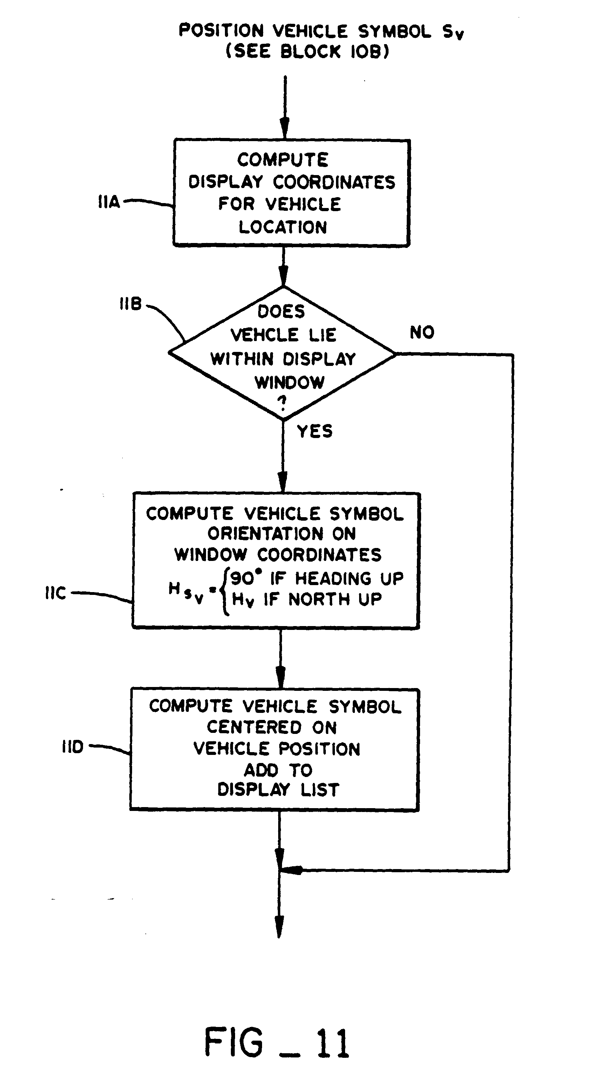

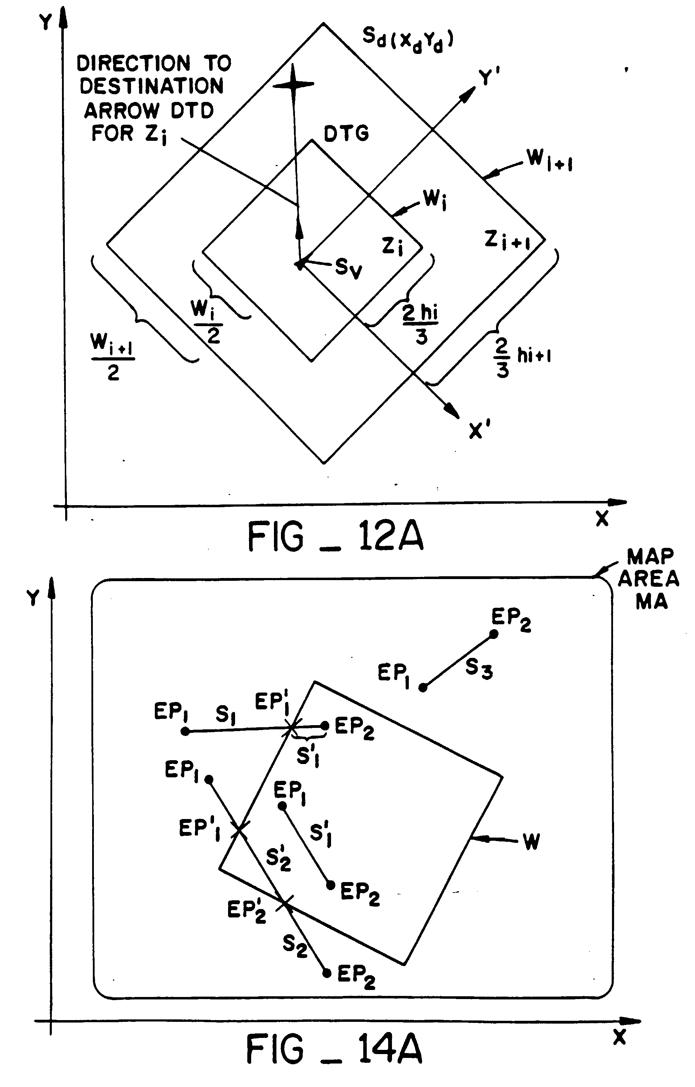

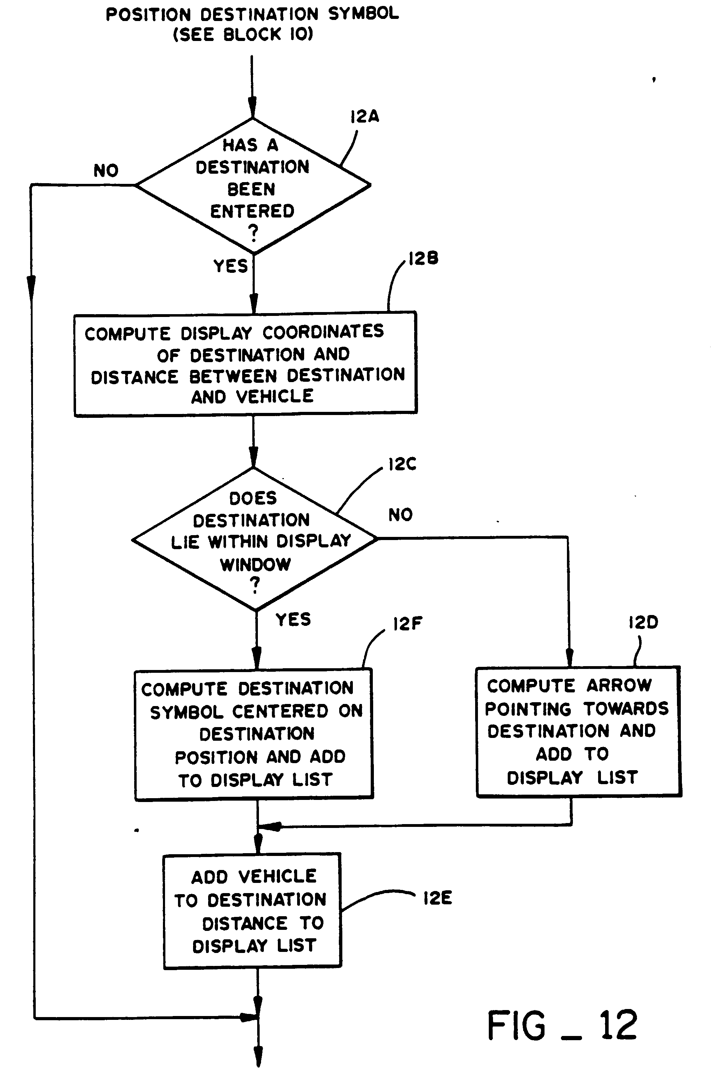

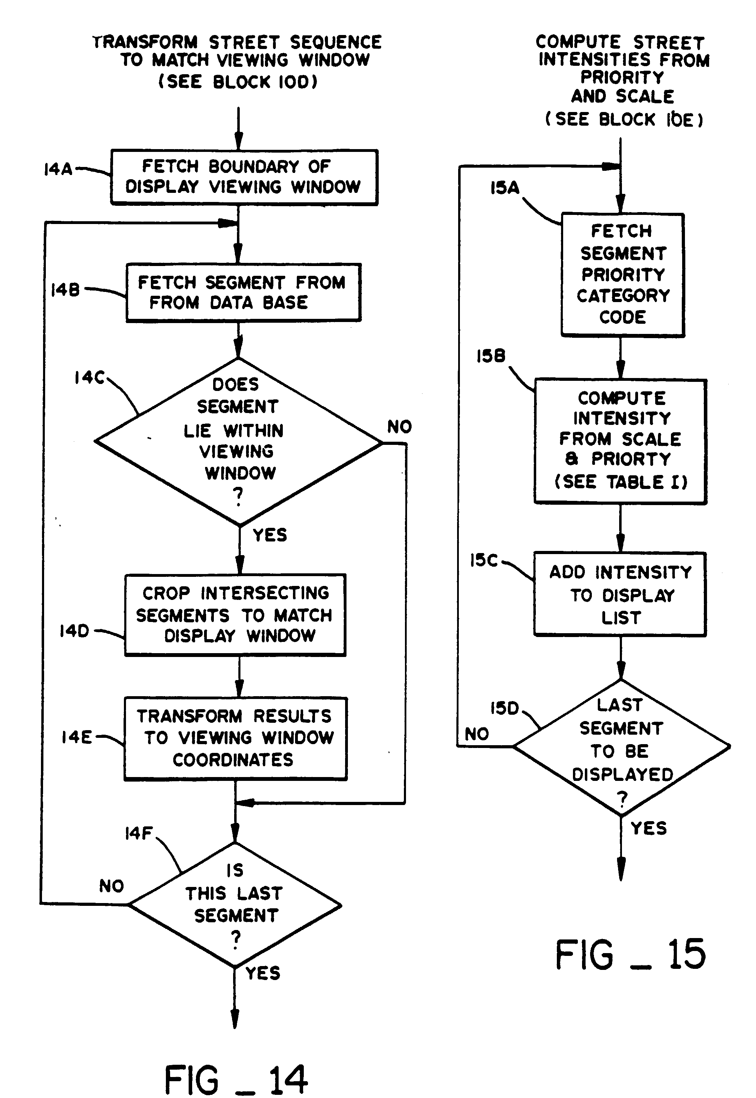

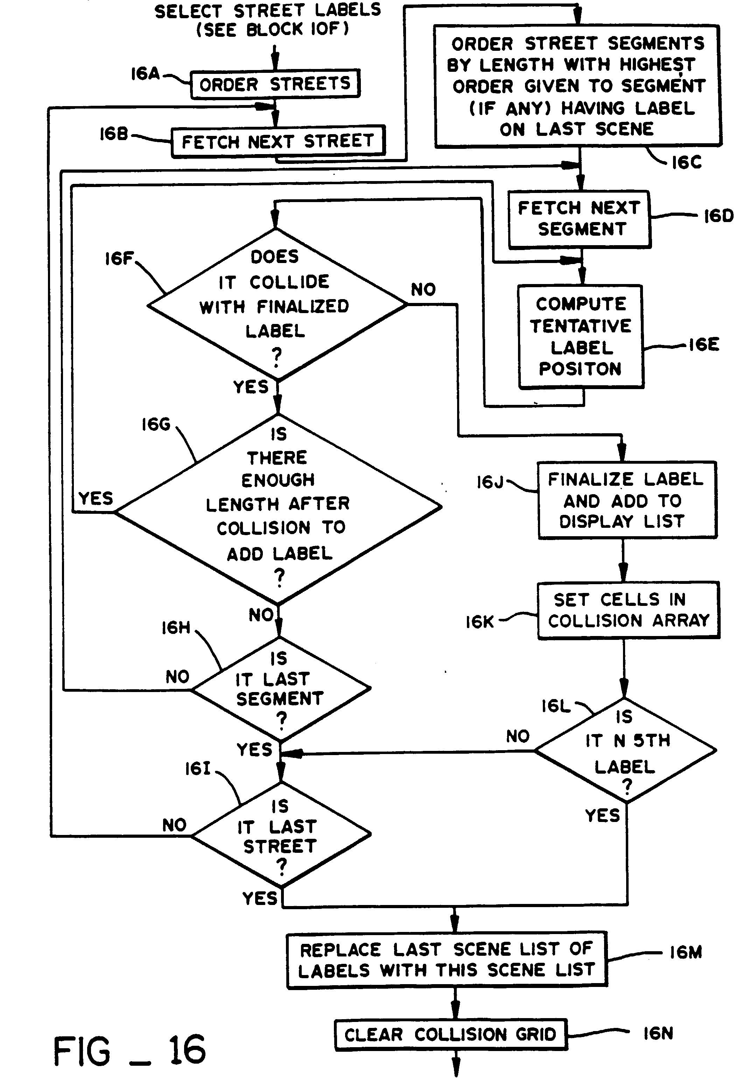

Fig. 10 is a flow chart used to explain the computing by the computer 12 of the map display M (See Block 8C). First, the computer 12 fetches the three state parameters (Block 10A) which, as previously mentioned, uniquely define the map display viewing window W to be displayed. From these parameters, the four straight lines defining the boundary of the viewing window W are computed. Then, the position of the vehicle symbol $S_V$ is determined (Block 10B), as will be further described in Fig. 11. Next, the position of the destination symbol $S_d$, if any, or a "direction-to-destination" DTD arrow (see Fig. 12A) is calculated along with the distance-to-go DTG data (Block 10C), as will be described in conjunction with Fig. 12. Next, the map segments S within the display viewing window W are fetched from the map data base (Block 10D), as will be described more fully in relation to Fig. 14. Next, as will be described in relation to Fig. 15, the computer 12, based on the scale-dependent prioritization scheme shown in Table I, computes the intensities of the streets St (Block 10E) that lie within the map display viewing window W, as found from Block 10D. Next, the computer 12 selects the labels for the streets St of the map display viewing window W (Block 10F), as will be described in relation to Figs. 16-17. The main program of Fig. 7A then constructs a "map display file" (Block 10G) from the results of Blocks 10A-10F to be used by the refresh display program of Fig. 7B which outputs to the display hardware the map display M.

Fig. 11 is a flow chart used to explain the computation of the position and orientation on the map display M of the vehicle symbol $S_V$ (See Block 10B). First, the map coordinates $(X'_V Y'_V)$ for the symbol $S_V$ are computed from the base map coordinates $(X_V, Y_V)$ taken from the vehicle navigation algorithm of Fig. 7C and the linear transformation of the display viewing window W (Block 11A). These coordinates $(X_V Y_V)$ are normally used as the origin of the viewing window W (i.e., $X_o, Y_o = B_V, Y_V$) (see Fig. 8A - STATE A) and, so, $S_V$ is normally at the origin. The PAN commands can shift or translate the viewing window origin from the vehicle V, as described above. Hence, with PAN commands, the current vehicle position $(x'_V, y'_V)$, i.e., the symbol $S_V$, can be displaced from the display origin $(X_o, Y_o)$ and, possibly, outside the viewing window W, as previously mentioned.

Next, the computer 12 determines if the vehicle V lies within the map display viewing window W (Block 11B). The vehicle V lies within the viewing window W if:

$$- w/2 \cdot 2^{-i} < X'_V < + w/2 \cdot 2^{-i}$$

$$- 1/3h \cdot 2^{-i} < Y'_V < + 2/3h \cdot 2^{-i} \tag{7}$$

where:

$X_o, Y_o$      are the origin coordinates of the viewing window W
$X'_V, Y'_V$      are the coordinates of vehicle V in the viewing window coordinate system
w      is the width of the monitor screen MS in base map scale units
h      is the height of the monitor screen MS in base map scale units, and
$2^{-i}$      is the scale factor for the current map display scale level $Z_i$

If the vehicle V does not lie within the display viewing window W, the remaining routine of Fig. 11 is bypassed, otherwise, the orientation or heading $H_{SV}$ of the symbol $S_V$ is computed (Block 11C). This is towards the top of the monitor screen MS when the map display M is in the heading-up mode. However, if the map display M is in the north-up mode, the symbol $S_V$ will be oriented on the monitor screen MS at the appropriate true heading $H_V$ of the vehicle V. Then, the position of the symbol $S_V$, centered on the actual vehicle position, is computed and, together with the orientation data, used to define the vehicle symbol $S_V$ and added to the map display file (Block 11D).

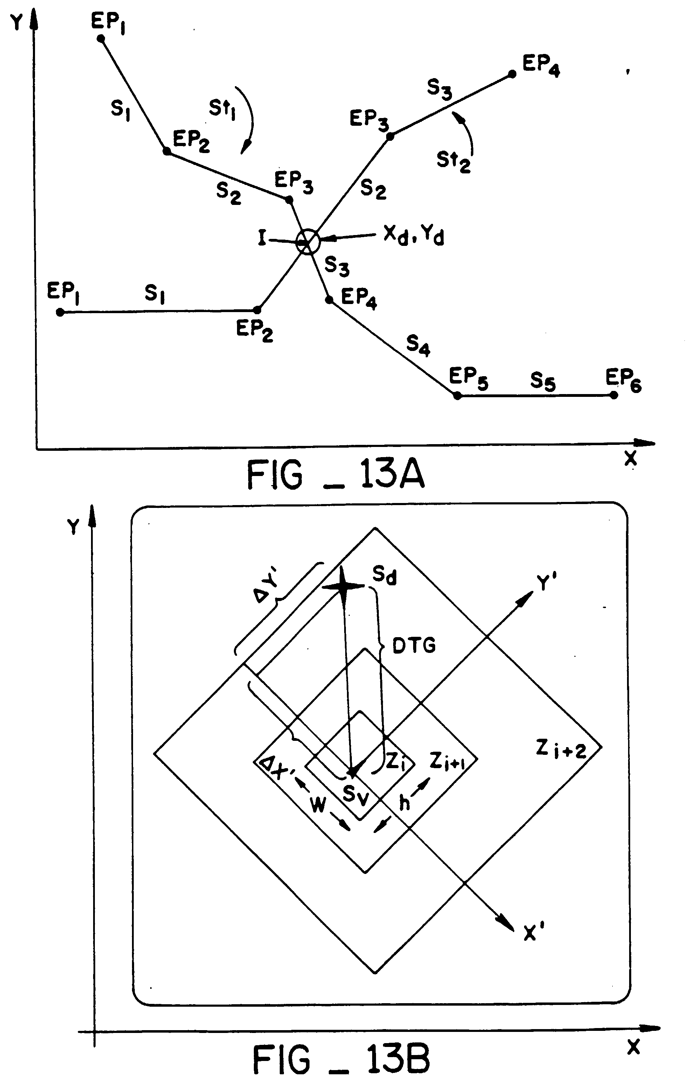

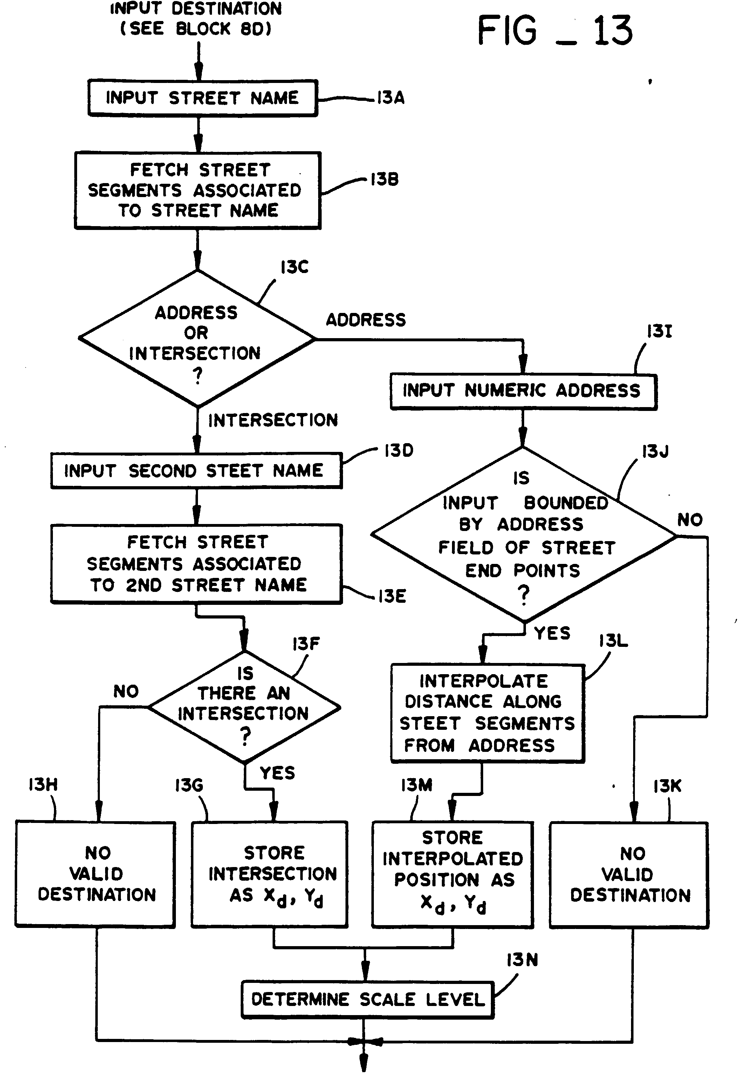

Fig. 12 is a flow chart used to explain the calculation of the position of the destination symbol $S_d$ and distance-to-go DTG data (see Block 10C). First, the computer 12 determines if a destination location has been entered by the operator (Block 12A), as will be described in detail below with reference to Fig. 13 and Fig. 13A. If not, the remaining routine of Fig. 12 is bypassed.

If destination data have been entered, the computer 12 has determined the base map coordinates of the destination symbol $(x_d, Y_d)$ , as will be explained below. Destination display coordinates $(X'_d, Y'_d)$ of the destination symbol $S_d$ are determined using equations (3) and (4). Distance-to-go (DTG) is computed as the distance between the desired destination and the current position of the vehicle V (Block 12B), as given by equation (8).

$$DTG = (X_V \text{-} X_d)^2 + (Y_V \text{-} Y_d)^2 \tag{8}$$

The computer 12 then determines if the position of the destination symbol $S_d$ lies within the map display viewing window W currently on the monitor 38 (Block 12C), the computations for which will be described below in relation to Fig. 12A. If not, the computer 12 computes a direction- to-destination arrow DTD (shown in Fig. 12A) pointing towards the desired destination and adds this to the map display file (Block 12D). Thereafter, the computer 12 adds to the map display file the distance-to-go DTG from the current position $(X_V, Y_V)$ of the vehicle V to the desired destination $(X_d, Y_d)$ (Block 12E). If the desired destination does lie within the map display viewing window W (Block 12C), then the computer 12 computes the position of the destination symbol $S_d$ (Block 12F) and DTG (Block 12E) and adds these data to the map display file.

Fig. 12A shows two viewing windows $W_i$ and $W_{i+1}$ with two respective scale levels $Z_i$ and $Z_{i+1}$, and illustrates the calculation for determining if $S_d$ is in the viewing window W and for determining DTG. Equation (7) is used to determine if $S_d$ is in the viewing window by replacing $(X'_V, Y'_V)$ with $(X'_d, Y'_d)$. In this case the test will fail for viewing window $W_i$ of scale level $Z_i$ (and hence the DTD arrow is shown) and will pass for viewing window $W_{i+1}$ of scale level $Z_{i+1}$.

As previously mentioned, in NON-MAP DISPLAY STATE D, destination data can be displayed, as will now be described in relation to the flow chart of Fig. 13 and the illustration of Fig. 13A.

By using the buttons 46 to access the index partially shown in Fig. 6B and to select (i.e., enter) one name of the index as the desired street name (Block 13A), the segments S associated to that street name are fetched from the map data base (Block 13B). Next, the computer 12 asks the driver to select which destination option he desires (destination by street intersection or destination by street address) (Block 13C). If the driver selects destination by street intersection by depressing a button 46, the index controls are reset and the driver may input a second street name (Block 13D). The computer 12 then fetches from the map data base the segments S associated to that name (Block 13E). The computer 12 then tests each segment S from the first street St against each segment S of the second street St to determine if any pair of segments S intersect (Block 13F). For example, in Fig. 13A two streets St are shown as $St_1$ and $St_2$. $St_1$ has five segments $S_1$-$S_5$ and $St_2$ has three segments $S_1$-$S_3$. According to the routine of Block 13F, the computer 12 takes the first segment $S_1$ of Street $St_1$ and the first segment $S_1$ of Street $St_2$ and determines their intersection by solving for the intersection of two straight lines. If this line intersection lies between end points of both segments, then the two segments (and hence the two streets) intersect and the search is completed. If not, $S_1$ of $St_1$ is tested against successive segments of $St_2$. If still no segment intersection is found, $S_2$ of $St_1$ is tested against each segment S of $St_2$ and so on. In this case $S_3$ of $St_1$ and $S_2$ of $St_2$ intersect at I.

If an intersection I is found, the computer 12 stores the location of the intersection as the destination position $(X_d, Y_d)$ (Block 13G). If no intersection is found, then no destination is computed (Block 13H) and the routine exits without specifying a destination.

If the driver selects the address destination option (Block 13C) by depressing a button 46, he or she then will input a numeric address (Block 13I). This address is tested against the address field data associated with the named street to see if the address number lies within (i.e., is bounded by) two address numbers associated with two segment endpoints EP (Block 13J). If it does not, then no destination is computed (Block 13K) and the routine exits without specifying one. If it is bounded, then a distance along the street St between the bounding end points EP is computed as the linear interpolation (according to street path length) of the numeric address (Block 13L). This point is stored as the destination position $(X_d, Y_d)$ (Block 13M).

Once the position of the destination symbol $(x_d, Y_d)$ is stored (Block 13G or 13M), the computer 12 computes the

scale level $Z_i$ (Block 13N) to show the least area for displaying both the vehicle V centered on the monitor 38 and the destination symbol $S_d$. This is accomplished in the following manner with the aid of Fig. 13B. Here, the position of the vehicle $(X_V Y_V)$ and heading $H_V$ are used to specify the origin of the viewing window W and the orientation of its axes. This defines the display axes X' and Y'. The distance between $S_d$ and $S_V$ (the distance-to-go) can be broken into its orthogonal components $\Delta X'$ and $\Delta Y'$ as shown on Fig. 13B. The length $w/2 \cdot 2^{-i}$ defines the length from $S_V$ that can be seen in the viewing window W for the scale level $Z_i$. Starting with the smallest window $W_0$ (i.e., scale level $Z_0$), this length is computed and compared with $\Delta X'$ until the first scale level is found such that this length is greater than $\Delta X'$ (and hence in the viewing window W). Similarly, a height computation is compared with $\Delta Y'$ until a scale level is found such that the height value is greater than $\Delta Y'$. The minimum of the two scale levels thus computed will determine the appropriate scale level.

Fig. 14 is a flow chart used to explain the processing of the appropriate segments S (see Block 10D) to construct the map display M in the viewing window W. First, the computer 12 fetches the straight line boundaries of the map display viewing window W computed in Block 10A based on the parameters (1) - (3) (Block 14A). Next, the computer 12 fetches a segment S of the map data base (Block 14B). The computer 12 then computes the XY display coordinates of each segment S and tests to see if the segment S wholly or partially lies within the viewing window W (block 14C).

This latter test can be explained with the help of Fig. 14A. A viewing window W is shown (solid box of four boundary lines) in the map area MA and the base map coordinate system X,Y. As previously indicated, there are four straight lines defining the edges of the viewing window W. Also shown in Fig. 14A are segments $S_1$-$S_4$. Each is defined by its endpoints $EP_1$ and $EP_2$. Each straight line segment $S_1$-$S_4$ is tested to determine if it intersects any of the straight lines defining the window boundary, as follows.

For a segment S, the computer 12 computes the four intersections of the segment line and the four boundary lines (segment lines parallel to boundary lines have either two or an infinite number of intersections). If the segment S intersects one or more straight lines defining the boundary of window W then the segment S falls, in part, in the viewing window W and is kept for further processing. This is the case for segment $S_1$ with one such intersection, and segment $S_2$ with two such intersections.

Segments $S_3$ and $S_4$ do not intersect with any of the boundary lines of window W. For these cases a second test is made to see if both end points EP are on the same side of either set of parallel lines. If they are as in segment $S_3$, the segment is not in the viewing window W and is discarded. If they are not as in segment $S_4$, the segment is wholly within the viewing window W and is kept for further processing.

For those segments S which pass the viewing window test (Block 14C), the segments S are cropped, as described below, to match the viewing window boundary (Block 14D).

Segments S that lie wholly inside the viewing window W (e.g., $S_4$ of Fig. 14A), are used directly in constructing the map display file. For those segments S that intersect the boundary of the viewing window W (e.g., $S_1$ of Fig. 14A), a new end point ($EP'_1$) is computed at the intersection and the segment $S_1$ is cropped or shortened to $S'_1$ to match the window boundary. And for those segments S that intersect two boundaries of the viewing window W (e.g., $S_2$ of Fig. 14A), two new end points ($EP'_1, EP'_2$) are computed and $S_2$ is cropped to $S'_2$ to match the window boundary. The resulting XY display coordinates of the segments S are then linearly transformed using equations (3) and (4) (Block 14E) and used to prepare the map display file, as described below. After a segment S is either discarded (Block 14C) or transformed (Block 14E), a test is made to see if it was the last segment S (Block 14F). If not, another segment S is fetched (Block 14B), and the routine is repeated until all segments S are tested.

Fig. 15 is a flow chart for explaining the computation of the display intensities of the streets St pursuant to the scale dependent prioritization scheme summarized in Table I (See Block 10E). First, for a given segment S, the corresponding priority code is fetched from the map data base (Block 15A). Then, the intensity of the corresponding street St via the look-up procedure for the current scale level $Z_i$ is determined via the Table I (Block 15B). This intensity is added to the display file in such a way as to instruct the display means 36 to display that given street St at the selected intensity (Block 15C). Next, if this is not the last segment S whose display intensity is to be determined (Block 15D), a return is made to Block 15A. Otherwise, the routine is done.

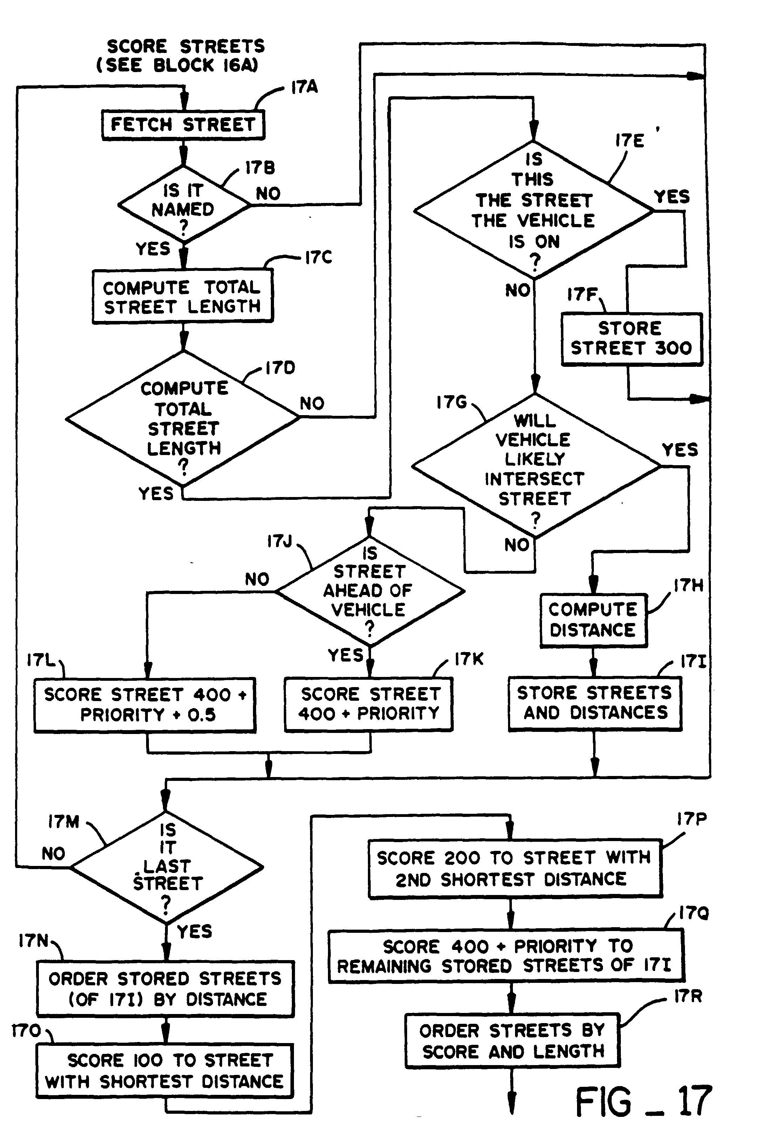

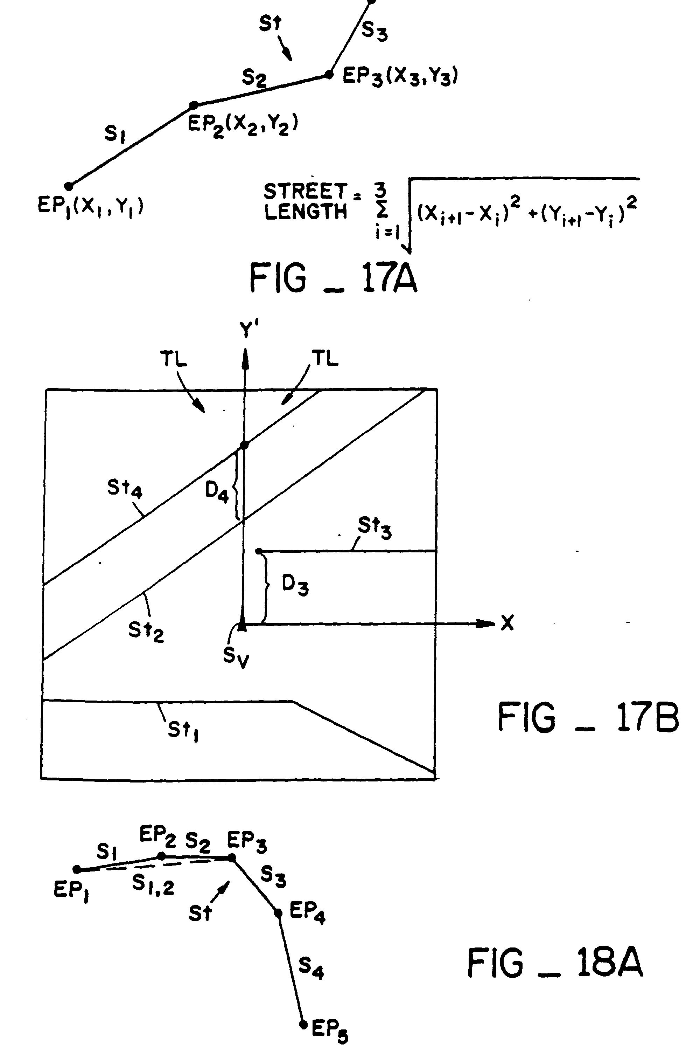

Fig. 16 shows a flow chart for selecting the street labels (See Block 10F). First, the streets St within the map display viewing window W are placed in a certain order (Block 16A) in accordance with an ordering scheme. One example of an ordering scheme will now be described in conjunction with Fig. 17.

A street St in the viewing window W is fetched (Block 17A). That street St is tested to see if it is named (block 17B). Some streets St such as highway off-ramps are not named. If the fetched street St is not named it will not be labelled. The street St is not scored for ordering, as described below, and control is passed to fetching the next street St. If it is named (Block 17B) then the total street length within the viewing window W is computed (Block 17C) and as shown in Fig. 17A. If the fetched street St is not long enough for labelling (Block 17D), the street is not scored for ordering and control is passed to fetching the next street St.

If the fetched street St is long enough to warrant a label, it is tested to determine if this street St is the street the vehicle V is currently on (Block 17E) by, for example, comparing its name to that given by the navigation program of Fig. 7C. If it is, then the street St is given a score of 300 (Block 17F) and control is passed to fetching the next street St.

If the fetched street St is not the street the vehicle V is on, then it is tested to see if the vehicle V will likely intersect it if the vehicle V remains on its current heading (Block 17G). This test is explained below in relation to Fig. 17B.

Fig. 17B shows an example of a viewing window W, the streets St on its encompassed map display M, the vehicle symbol $S_V$ and the viewing window coordinate axes X'Y'. In addition, two vertical test lines TL (dashed lines shown in Fig. 17B but not presented on the monitor screen MS) are drawn above the X' axis and on either side of the vehicle symbol $S_V$. If any segment S of a street St intersects either of these straight test lines TL, then it-is determined that the vehicle V will likely intersect that street St as it moves. If the street St intersects only one test line TL, the Y' coordinate of that endpoint within the test lines TL is taken to calculate a distance (i.e., $D_3$ of Fig. 17B). If the street St intersects both test lines TL, then the Y' coordinate of the streets' intersection with the Y' axis is taken to calculate the distance (i.e., $D_4$ of Fig. 17B).

In the example of Fig. 17B, street $St_1$ does not intersect the vertical test lines TL. Street $St_2$ is ahead of the vehicle V but does not cross either test line TL. Street $St_3$ does intersect one test line TL and a distance $D_3$ will be computed. Street $St_4$ intersects twice and the distance $D_4$ will be computed.

If the street St is determined to intersect, then the distance between this intersection and the vehicle V is computed (Block 17H), as shown in Fig. 17B. A list of these streets St and such distances is kept (Block 17I) for later processing (see Blocks 17N, 17O, 17P, 17Q). Control is then passed to fetching the next street St.

Streets St not yet scored or disqualified are tested to determine if they are ahead of the vehicle V. This is done by testing if any end point EP is above the vehicle V, i.e., has a Y' value greater than zero for the heading-up display (Block 17J). If the street St is ahead of the vehicle V, the street St (Block 17K) is given a score of 400 plus the street priority. (A number from 1 to 16 defining street priority where 1 is the most major highway and 16 is the most minor street.) Control is then passed to fetching the next street. If it was determined that the street St is not ahead of the vehicle V, then the street St is given a score of 400 plus street priority plus 0.5 (Block 17L). Control is then passed to fetching the next street.

Each time control is passed to fetching the next street St, a test is made to determine if this is the last street (Block 17M). If it is not, then the next street St is fetched (Block 17A). If it is the last street St, then the list of likely intersecting streets St (from Block 17I above) is ordered by distance (Block 17N). The street St closest the vehicle V is given a score of 100 (Block 17O), the second closest street St is given a score of 200 (Block 17P) and the remaining streets St on the intersection list are scored 400 plus the street priority category (Block 17Q). And finally, the list of all scored streets is ordered by numeric score with the lowest score receiving the highest order (Block 17R). If two or more streets St have the same numeric score, the highest order is given to the street St with the longest total street length as computed in Block 17C.

With reference again to Fig. 16, once so ordered, the streets St are individually fetched in sequence (next highest ordered street St) (Block 16B) to determine if the fetched street can be labelled on the monitor 38. Each street St is comprised of one or more straight line segments S, as described above. These segments S are further reduced if two or more connecting segments S have a difference in orientations of less than a threshold (see Fig. 18A, e.g., $S_1$ and $S_2$). The resulting segments S are ordered according to their length with the longest segment S given the highest order (Block 16C). If this street St was labelled on the previous frame, the segment S which was labelled is given the highest position in the order. All segments S shorter than a threshold length are too short to label and are dropped from the list.

For the current street St, the next highest ordered segment S is fetched (Block 16D). A tentative label position is computed (Block 16E) in the following way. First, if this segment S is labelled on the last frame the same label position relative to the endpoints EP of the segment S are used. If no label was on this segment S, a tentative position is determined by computing an offset from the FROM endpoint EP (see Fig. 4) and using the street heading $H_S$ to compute the label orientation.

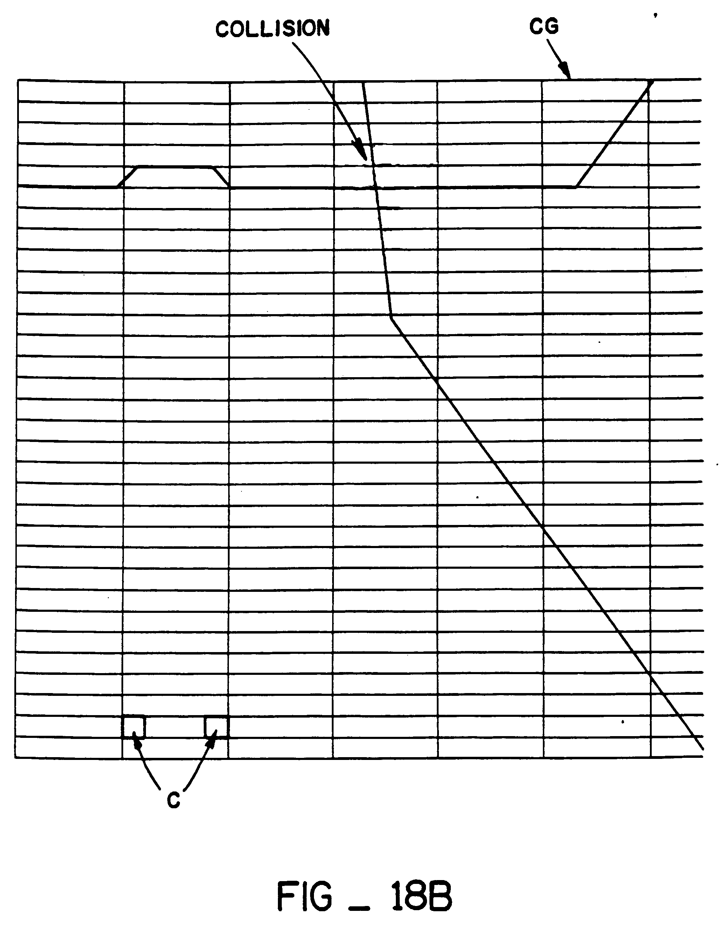

The label is next tested to see if it collides with (writes over) a label already finalized or if it intersects with the boundary of the viewing window W (Block 16F). This collision test now will be explained with reference to Fig. 18B. A collision grid CG is a two-dimensional array of storage which divides the monitor 38 into cells C. At the start of the labelling routine all cells C are clear. When a label position is finalized, each cell C that contains part of the label is set (shown by shaded areas in Fig. 18B around the label "LAWRENCE"). When a tentative label position such as "TASMAN" is computed, the cells C it would occupy are tested. If any one of the cells C is set (already occupied) then a collision occurs and the tentative label position fails (Block 16F).

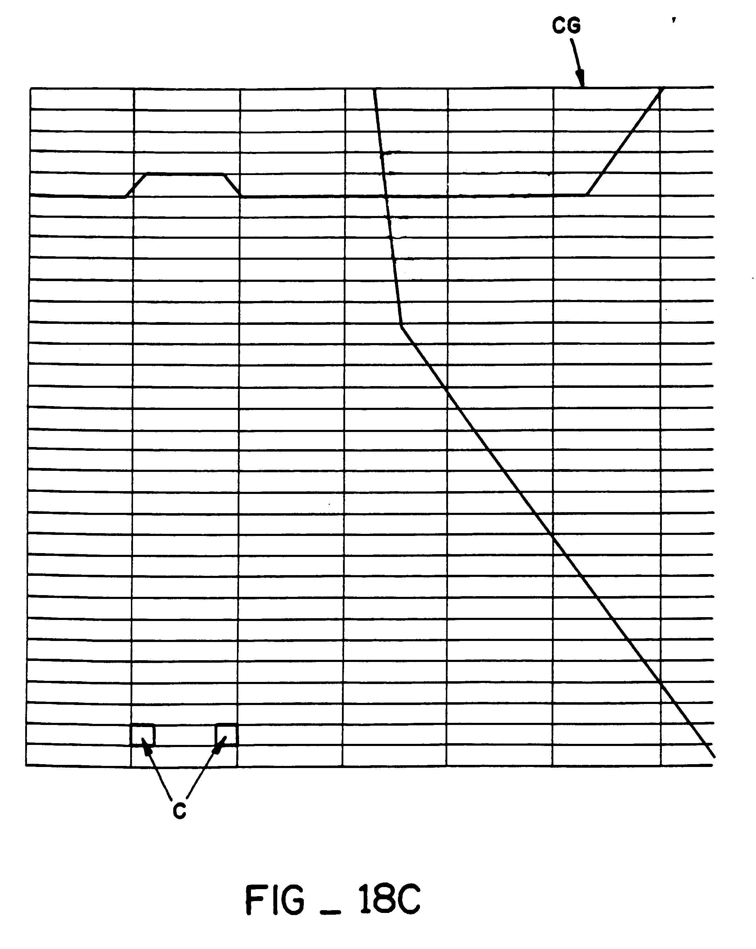

The routine then looks for the last possible collision cell C (Block 16G) and determines if the current segment S has sufficient length past this last collision cell C to place the label; see Fig. 18C. If the segment S cannot be labelled, a test is made to see if it is the last segment S (Block 16H). If not, the next ordered segment S is fetched (Block 16D). If it is the last segment S, that street is not labelled and a test is made to determine if that is the last ordered street St (Block 16I). If it is not the last, then the next ordered street St is fetched (Block 16B).

In this process, when a tentative label is found not to collide with any finalized labels (Block 16F), then this label itself is finalized. First the label, its position and its orientation are added to the display file (Block 16J). Next, the cells C which it occupies are set in the collision grid CG (Block 16K). Then a test is made to determine if this was the $N^{th}$ label finalized where, for example, N=5 (Block 16L). If it is not the $N^{th}$ label, then a test is made to determine if that was the last street St (Block 16I). If it was the $N^{th}$ label (Block 16L) or the ordered list of streets has been exhausted (Block 16I), then the routine finishes by recording the locations of the finalized labels for use in ordering segments S in the next scene (Block 16M) (as described in Block 16C) and finally the collision grid CG is cleared, ready to start the process over again (Block 16N).

The resulting map display file constructed through the various routines described above contains all the vector and intensity commands to allow the hardware vector generator card 40 to generate the map display M. Once the display file is complete, it is used by card 40 to continually refresh the monitor 38 through the software of Fig. 7B. At the same time the main program of Fig. 7A is creating a new and separate display file. Once it is complete it is used by the program of Fig. 7B to display a different frame thereby creating the changing or moving map display.

C. Program Code Listings

Assembly language code listings of significant aspects of the display invention, which may be executed on the IBM PC mentioned above, are included as part of this specification in the form of computer printout sheets. The title, operation and general content of these assembly language code listings are as follows:

(1) box_clip - This routine clips segments S at the display window boundary and determines if the segment S intersects the test lines TL.

(2) cal_cntr - This routine calculates the center $(X_o, Y_o)$ of the map display M.

(3) col_test - This routine tests to see if a tentative position for a label collides with a label already finalized or if it intersects with the boundary of the viewing window W.

(4) cross_st - This routine computes the intersection of two streets St.

(5) dsp_blk - This routine computes the total length within the viewing window W of streets St and determines the two cross streets closest the vehicle V.

(6) dsp_map - This routine positions the vehicle symbol $S_v$ and destination symbol $S_d$, and computes the map display file.

(7) dsp_name - This routine adds a label to the display file, and updates the collision grid CG.

(8) ds_strt - This routine processes the appropriate segments S of a street St to construct the map display M.

(9) get_pos - This routine fetches the three state parameters which define the map display viewing window W.

(10) index - This routine manipulates the index of streets St.

(11) lb_map - This routine selects the streets St to be labeled.

(12) lb_segmt - This routine positions a label for a street St along a segment S.

(13) lb_strt - This routine labels a street St.

(14) map_rd - This routine determines if vehicle operator has entered commands via buttons 46 and calculates a new origin $(X_o, Y_o)$ of a new display viewing window W when a PAN command is entered.

(15) prior_lb - This routine positions a label at the same relative position of the last frame.

(16) rt_vectr - This routine performs the rotation of an endpoint EP.

(17) selct_st - This routine selects street names from the index and gets street segments S.

(18) set _zoom - This routine sets the display scale level $Z_i$ and computes the display viewing window W.

(19) srt_strt - This routine orders segment S according to their length.

IV. Summary

The present invention presents a map and associated navigation information to a driver (or passenger) of a vehicle. This navigation aid enables the driver to extract information at a glance, thereby allowing him or her to navigate while attending to the function of driving. The invention allowing for this is composed of four features including a moving map display enabling the immediate vicinity of the vehicle to be displayed at an orientation which matches the vehicle's orientation, a scale-dependent street prioritization scheme which reduces the complexity of the map presentation enabling the driver to comprehend the map at a glance, a selective and dynamic labelling scheme which also simplifies extracting map information at a glance, and an index/destination location technique which enables the driver to quickly locate the position of a destination and to conveniently monitor his or her progress towards reaching that destination.

The above disclosure of the invention is but one embodiment of the invention. Many parameters and procedures described above could be chosen or performed differently while still embodying the present invention. Examples of alternative embodiments include:

(1) selecting and displaying more than one destination;

(2) other codes in Table I (priority categories);

(3) other fixed or variable scale factors;

(4) different hardware;

(5) different sensors such as inertial gyroscopes, fluidic turning rate sensors, or other means of navigation such as terrestrial radio beacons or satellite beacons;

(6) other labelling schemes;

(7) more precise methods for computing the next cross-street;

(8) other PAN parameters;

(9) other destination data such as landmarks or other such special items in the map data base;

(10) other methods of structuring the data base for efficient data retrieval;

(11) other methods of performing the mathematics to gain computational efficiencies;

(12) use of color for the codes of Table I; and

(13) other DISPLAY STATES and division of functions in the DISPLAY STATES.

```
; box_clip(px1, py1, px2, py2, pcrs_dist)
; int *px1, *py1, *px2, *py2, *pcrs_dist;

; entry
;
;
; exit
;
;
;
;
;
;


@DATAI              SEGMENT BYTE PUBLIC 'DATAI'
                    extrn   x_left:word, x_right:word
                    extrn   y_bot:word, y_top:word
cen_width           equ  ·  5
x_from              dw
y_from              dw
x_to                dw
y_to                dw
x_max               dw
x_min               dw
y_max               dw
y_min               dw
y_out       ·       dw
ret_value           dw
dividend            dw
@DATAI              ENDS


DGROUP              GROUP   @DATAI
@CODE               SEGMENT BYTE PUBLIC 'CODE'
                    ASSUME  CS:@CODE, DS:DGROUP
                    public  box_clip

box_clip            proc    near
                    push    bp
                    mov     bp,sp
                    mov     si,4[bp]
                    mov     ax,[si]
                    mov     x_from,ax
                    mov     si,6[bp]
                    mov     bx,[si]
                    mov     y_from,bx
                    call    in_box
                    mov     si,8[bp]


        box clip -1-
```

```
                            mov     ax,[si]
                            mov     x_to,ax
                            mov     si,10[bp]
                            mov     bx,[si]
                            mov     y_to,bx
                            js      from_out
                            call    in_box
                            js      in_out
                            mov     ret_value,4
                            jmp     box_clip_ret

          in_out:           mov     dx,y_to
                            mov     y_out,dx
                            add     bp,8
                            mov     ret_value,3
                            jmp     one_xing

          from_out:         call    in_box
                            js      two_xing
                            mov     ax,x_from
                            mov     dx,y_from
                            mov     y_out,dx
                            add     bp,4
                            mov     ret_value,2
                            jmp     one_xing




          one_xing:         mov     cx,1
                            cmp     ax,x_left
                            jge     one_xing_right
                            mov     ax,x_left
                            call    y_xing
                            jb      one_xing_bot
                            mov     bx,ax
                            mov     ax,x_left
                            call    store_xing

          one_xing_right:   cmp     ax,x_right
                            jle     one_xing_bot
                            mov     ax,x_right
                            call    y_xing
                            jb      one_xing_bot
                            mov     bx,ax
                            mov     ax,x_right


          box clip -2-
```

```
                      call     store_xing

one_xing_bot:         mov      ax,y_bot  .
                      cmp      ax,y_out
                      jle      one_xing_top
                      call     x_xing
                      mov      bx,y_bot
                      call     store_xing

one_xing_top:         mov      ax,y_top
                      call     x_xing
                      mov      bx,y_top
                      call     store_xing




two_xing:             add      bp,4
                      mov      ret_value,1
                      mov      cx,2
                      mov      y_max,bx
                      mov      dx,y_from
                      mov      y_min,dx
                      cmp      bx,y_from
                      jge      below_box
                      mov      dx,y_from
                      mov      y_max,dx
                      mov      dx,y_to
                      mov      y_min,dx
below_box:            mov      bx,y_max
                      cmp      bx,y_bot
                      jge      above_box
                      jmp      no_xing
above_box:            mov      bx,y_min
                      cmp      bx,y_top
                      jle      min_max_x
                      jmp      no_xing
min_max_x:            mov      x_max,ax
                      mov      dx,x_from
                      mov      x_min,dx
                      cmp      ax,x_from
                      jg       two_xing_left
                      jl       switch_x_max
                      cmp      ax,x_left
                      je       store_vert
                      cmp      ax,x_right
```

box clip -3-

21

```
                          jne       two_xing_left
          store_vert:     mov       bx,y_bot
                          call      store_xing
                          mov       bx,y_top
                          call      store_xing

          switch_x_max:   mov       dx,x_from
                          mov       x_max,dx
                          mov       dx,x_to
                          mov       x_min,dx
          two_xing_left:  mov       ax,x_left
                          cmp       ax,x_max
                          jle       cross_left
                          jmp       no_xing
          cross_left:     cmp       ax,x_min
                          jle       two_xing_right
                          call      y_xing
                          jb        two_xing_right
                          mov       bx,ax
                          mov       ax,x_left
                          call      store_xing
          two_xing_right: mov       ax,x_right
                          cmp       ax,x_min
                          jge       cross_right
                          jmp       no_xing
          cross_right:    cmp       ax,x_max
                          jge       two_xing_bot
                          call      y_xing
                          jb        two_xing_bot
                          mov       bx,ax
                          mov       ax,x_right
                          call      store_xing
          two_xing_bot:   mov       ax,y_bot
                          cmp       ax,y_min
                          jle       two_xing_top
                          call      x_xing
                          jb        two_xing_top
                          mov       bx,y_bot
                          call      store_xing
          two_xing_top:   mov       ax,y_top
                          cmp       ax,y_max
                          jge       no_xing
                          call      x_xing
                          jb        no_xing
                          mov       bx,y_top
                          call      store_xing



          box clip -4-
```

22

```
no_xing:            mov     ax,0
                    pop     bp
                    ret




store_xing_ret: ret
store_xing:         mov     di,[bp]
                    mov     [di],ax
                    mov     di,2[bp]
                    mov     [di],bx
                    add     bp,4
                    loop    store_xing_ret
                    pop     dx
box_clip_ret:       mov     bp,sp
                    mov     si,4[bp]
                    mov     bx,[si]
                    mov     di,bx
                    mov     si,8[bp]
                    mov     cx,[si]
                    mov     si,cx
                    cmp     bx,cx
                    jl      test_right
                    xchg    bx,cx
test_right:         mov     ax,y_bot
                    cmp     bx,cen_width
                    jg      cross_st_dist
                    cmp     cx,-cen_width
                    jl      cross_st_dist
test_slope:         xor     bx,bx
                    mov     ax,x_from
                    sub     ax,x_to
                    cwd
                    xor     dx,ax
                    rol     ax,1
                    adc     bx,dx
                    mov     ax,y_from
                    sub     ax,y_to
                    cwd
                    xor     dx,ax
                    rol     ax,1
                    adc     dx,0
                    mov     ax,y_bot
                    cmp     dx,bx
                    jge     cross_st_dist


box clip -5-
```

```
                               mov       ax,di
                               cwd
                               xor       ax,dx
                               rol       dx,1
                               acc       ax,0
                               cmp       ax,cen_width
                               jg        test_x_to
                               mov       si,6[bp]
                               mov       ax,[si]
                               jmp       cross_st_dist

           test_x_to:          mov       ax,si
                               cwd
                               xor       ax,dx
                               rol       dx,1
                               adc       ax,0
                               cmp       ax,cen_width
                               jg        cross_st_xing
                               mov       si,10[bp]
                               mov       ax,[si]
                               jmp       cross_st_dist

           cross_st_xing:      xor       ax,ax
                               call      y_xing
           cross_st_dist:      sub       ax,y_bot
                               mov       si,12[bp]
                               mov       [si],ax
                               mov       ax,ret_value
                               pop       bp
                               ret




           in_box:             cmp       ax,x_left
                               js        ret_box
                               cmp       x_right,ax
                               js        ret_box
                               cmp       bx,y_bot
                               js        ret_box
                               cmp       y_top,bx
           ret_box:            ret




           box clip -6-
```

```
y_xing:         sub     ax,x_from
                mov     bx,y_to
                sub     bx,y_from
                imul    bx
                mov     dividend,dx
                mov     bx,x_to
                sub     bx,x_from
                idiv    bx
                add     ax,y_from
                cmp     ax,y_bot
                jl      y_xing_ns
                jg      y_xing_top
                call    test_rem
                js      y_xing_ns
                ret
y_xing_top:     cmp     ax,y_top
                jg      y_xing_ns
                je      y_xing_rem
                clc
                ret
y_xing_rem:     call    test_rem
                js      y_xing_ret
                jz      y_xing_ret
y_xing_ns:      stc
y_xing_ret:     ret




x_xing:         sub     ax,y_from
                mov     bx,x_to
                sub     bx,x_from
                imul    bx
                mov     dividend,dx
                mov     bx,y_to
                sub     bx,y_from
                idiv    bx
                add     ax,x_from
                cmp     ax, x_left
                jl      x_xing_ns
                jg      x_xing_right
                call    test_rem
                js      x_xing_ns
                jz      x_xing_ns
                ret
x_xing_right:   cmp     ax,x_right
```

box clip -7-

25

```
                        jg       x_xing_ns
                        je       x_xing_rem
                        clc
                        ret
x_xing_rem:             call     test_rem
                        jns      x_xing_ns
                        ret
x_xing_ns:              stc
                        ret




test_rem:               test     dividend,177777Q
                        js       rem_neg
                        xor      bx,dividend
                        js       neg_rem
                        jmp      test_rem_ret
rem_neg:                xor      bx,dividend
                        js       test_rem_ret
neg_rem:                neg      dx
test_rem_ret:           test     dx,177777Q
                        ret

box_clip                endp
@CODE                   ENDS
```

box clip -8-

```
@BIGMODEL EQU   0
        include   prologue.h

        public    CAL_CNTR
@CODE       ENDS
@DATAB      SEGMENT
        extrn     CAR_POS:word

        extrn     CEN_POS:word

        extrn     LCAR_X:word

        extrn     LCAR_Y:word

        extrn     LCEN_X:word

        extrn     LCEN_Y:word

        extrn     ZOOMF:word

        extrn     ZOOMF_PL:word

        extrn     ZOOMF_DB:word

        extrn     HOME:word

        extrn     NORTH:word

        extrn     CEN_OFF:word

@DATAB      ENDS
@CODE       SEGMENT   BYTE PUBLIC 'CODE'
@CODE       ENDS
        extrn     ISMUL:near

        extrn     ICOS:near

        extrn     ISIN:near

@CODE       SEGMENT   BYTE PUBLIC 'CODE'


CAL_CNTR  PROC NEAR
@CODE       ENDS
        extrn     $LLSHIFT:near

        extrn     $LRSSHIFT:near




        cal cntr -1-
```

```
@CODE       SEGMENT    BYTE PUBLIC 'CODE'
.00:                ; 4
        push BP
        mov  BP,SP
        mov  AX,NORTH
        or   AX,AX
        je   .014
        mov  AX,16384
        mov  CEN_POS+4,AX
        jmp  SHORT .024
.014:                   ;12
        mov  AX,HOME
        or   AX,AX
        je   .024
        mov  AX,CAR_POS+4
        mov  CEN_POS+4,AX
.024:                   ;14
        mov  AX,HOME
        or   AX,AX
        jne  ?1
        jmp  .0C1
?1:
        cmp  WORD PTR ZOOMF,0
        jl   .048
        mov  AX,64
        mov  DX,ZOOMF
        mov  CX,DX
        sar  AX,CL
        mov  CEN_OFF,AX
        jmp  SHORT .059
.048:                     ;17
        mov  AX,64
        mov  DX,ZOOMF
        neg  DX
        mov  CX,DX
        shl  AX,CL
        mov  CEN_OFF,AX
.059:                     ;18
        push WORD PTR CEN_POS+4
        call ICOS
        add  SP,2
        push AX
        push WORD PTR CEN_OFF
        call ISMUL
        add  SP,4
        cwd
        push DX
        push AX
        mov  AX,ZOOMF_DB


cal cntr -2-
```

```
        cwd
        push DX
        push AX
        call $LLSHIFT
        pop  AX
        pop  DX
        add  AX,LCAR_X
        adc  DX,LCAR_X+2
        mov  LCEN_X,AX
        mov  LCEN_X+2,DX
        push WORD PTR CEN_POS+4
        call ISIN
        add  SP,2
        push AX
        push WORD PTR CEN_OFF
        call ISMUL
        add  SP,4
        cwd
        push DX
        push AX
        mov  AX,ZOOMF_DB
        cwd
        push DX
        push AX
        call $LLSHIFT
        pop  AX
        pop  DX
        add  AX,LCAR_Y
        adc  DX,LCAR_Y+2
        mov  LCEN_Y,AX
        mov  LCEN_Y+2,DX
.0C1:                   ;24
        mov  AX,LCEN_X
        mov  DX,LCEN_X+2
        push DX
        push AX
        mov  AX,ZOOMF_DB
        cwd
        push DX
        push AX
        call $LRSSHIFT
        pop  AX
        pop  DX
        mov  CEN_POS,AX
        mov  AX,LCEN_Y
        mov  DX,LCEN_Y+2
        push DX
        push AX
        mov  AX,ZOOMF_DB


        cal cntr -3-
```

```
           cwd
           push DX
           push AX
           call $LRSSHIFT
           pop  AX
           pop  DX
           mov  CEN_POS+2,AX
           mov  SP,B̄P
           pop  BP
           ret
       CAL_CNTR   ENDP

       @CODE      ENDS
       @CODE      SEGMENT   BYTE PUBLIC 'CODE'
           include   epilogue.h
           end
```

cal cntr -4-

```
@BIGMODEL EQU    0
         include    prologue.h

         public    COL_TEST
@CODE        ENDS
@DATAB       SEGMENT
         extrn      STROKE:word

         extrn      COL_GRID:word

         public    BOX_TEST
         extrn      STRK_SET:word

         public    IN_BOX
         extrn      XPIX_MIN:word

         extrn      XPIX_MAX:word

         extrn      YPIX_MIN:word

         extrn      YPIX_MAX:word


@DATAB       ENDS
@CODE        SEGMENT    BYTE PUBLIC 'CODE'
@CODE        ENDS
         extrn      CHAR_MNX:near

         extrn      RT_VECTR:near

@CODE        SEGMENT    BYTE PUBLIC 'CODE'

COL_TEST   PROC NEAR
@CODE        ENDS
         extrn      $LRUSHIFT:near

         extrn      $LLSHIFT:near

@CODE          SEGMENT     BYTE PUBLIC 'CODE'
.00:              ;7
     push BP
     mov   BP,SP
     sub   SP,22
     lea   SI,-16[BP]
     push SI
     lea   SI,-18[BP]
     push SI
     call CHAR_MNX
     add   SP,4
     lea   SI,-12[BP]


col test -1-
```

```
        push SI
        lea  SI,-14[BP]
        push SI
        lea  SI,STROKE
        push SI
        mov  AX,0
        push AX
        mov  BX,12
        mov  AX,+8[BP]
        imul BX
        push AX
        call RT_VECTR
        add  SP,10
        mov  AX,-12[BP]
        add  AX,+6[BP]
        push AX
        mov  AX,-14[BP]
        add  AX,+4[BP]
        push AX
        push WORD PTR +6[BP]
        push WORD PTR +4[BP]    .
        call BOX_TEST
        add  SP,8
        or   AX,AX
        je   .054
        jmp  SHORT .05B
.054:                   ;17
        mov  AX,0
        mov  SP,BP
        pop  BP
        ret
.05B:                   ;19
        mov  AX,+10[BP]
        or   AX,AX
        je   .069
        mov  AX,1
        mov  SP,BP
        pop  BP
        ret
.069:                   ;20
        mov  AX,-18[BP]
        add  AX,254
        mov  DX,+4[BP]
        add  DX,AX
        mov  +4[BP],DX
        mov  AX,-16[BP]
        add  AX,254
        mov  DX,+6[BP]
        add  DX,AX
```

```
col test -2-
```

32

```
        mov    +6[BP],DX
        lea    SI,COL_GRID
        mov    AX,+6[BP]
        mov    DX,4
        mov    CX,DX
        sar    AX,CL
        mov    -2[BP],AX
        shl    AX,1
        shl    AX,1
        add    SI,AX
        mov    AX,[SI]
        mov    DX,+2[SI]
        push   DX
        push   AX
        mov    AX,0
        mov    DX,-16384
        push   DX
        push   AX
        mov    AX,+4[BP]
        mov    DX,4
        mov    CX,DX
        sar    AX,CL
        xor    DX,DX
        push   DX
        push   AX
        call   $LRUSHIFT
        pop    AX
        pop    DX
        mov    -22[BP],AX
        mov    -20[BP],DX
        pop    BX
        pop    CX
        and    BX,AX
        and    CX,DX
        or     CX,BX
        je     .0D2
        jmp    SHORT .0F1
.0D2:                        ;24
        lea    SI,COL_GRID
        mov    AX,-2[BP]
        add    AX,1
        shl    AX,1
        shl    AX,1
        add    SI,AX
        mov    AX,[SI]
        mov    DX,+2[SI]
        and    AX,-22[BP]
        and    DX,-20[BP]
        or     DX,AX


        col test -3-
```

```
        je    .0F8
.0F1:                    ;24
        mov   AX,0
        mov   SP,BP
        pop   BP
        ret
.0F8:                    ;25
        mov   AX,+8[BP]
        push  AX
        mov   AX,-14[BP]
        mov   DX,6
        mov   CX,DX
        shl   AX,CL
        pop   BX
        cwd
        idiv  BX
        mov   -14[BP],AX
        mov   AX,+8[BP]
        push  AX
        mov   AX,-12[BP]
        mov   DX,6
        shl   AX,CL
        pop   BX
        cwd
        idiv  BX
        mov   -12[BP],AX
        mov   AX,6
        mov   DX,+4[BP]
        mov   CX,AX
        shl   DX,CL
        mov   +4[BP],DX
        and   DX,-1024
        mov   -8[BP],DX
        mov   AX,6
        mov   DX,+6[BP]
        mov   CX,AX
        shl   DX,CL
        mov   +6[BP],DX
        and   DX,-1024
        mov   -6[BP],DX
        mov   AX,0
        mov   -10[BP],AX
.0150:                   ;30
        dec   WORD PTR +8[BP]
        mov   AX,+8[BP]
        or    AX,AX
        jne   ?1
        jmp   .0259
?1:


        col test -4-
```

34

```
        mov   AX,-14[BP]
        mov   DX,+4[BP]
        add   DX,AX
        mov   +4[BP],DX
        and   DX,-1024
        sub   DX,-8[BP]
        mov   -4[BP],DX
        cmp   DX,0
        jle   .019C
        mov   AX,1
        mov   -10[BP],AX
        mov   DX,0
        mov   BX,-22[BP]
        mov   CX,-20[BP]
        push  CX
        push  BX
        push  DX
        push  AX
        call  $LRUSHIFT
        pop   AX
        pop   DX
        mov   -22[BP],AX
        mov   -20[BP],DX
        add   WORD PTR -8[BP],1024
        jmp   SHORT .01C6
.019C:                     ;37
        cmp   WORD PTR -4[BP],0
        jge   .01C6
        mov   AX,1
        mov   -10[BP],AX
        mov   DX,0
        mov   BX,-22[BP]
        mov   CX,-20[BP]
        push  CX
        push  BX
        push  DX
        push  AX
        call  $LLSHIFT
        pop   AX
        pop   DX
        mov   -22[BP],AX
        mov   -20[BP],DX
        sub   WORD PTR -8[BP],1024
.01C6:                     ;42
        mov   AX,-12[BP]
        mov   DX,+6[BP]
        add   DX,AX
        mov   +6[BP],DX
        and   DX,-1024


col test -5-
```

```
        sub    DX,-6[BP]
        mov    -4[BP],DX
        cmp    DX,0
        jle    .01F0
        mov    AX,1
        mov    -10[BP],AX
        inc    WORD PTR -2[BP]
        add    WORD PTR -6[BP],1024
        jmp    SHORT .0205
.01F0:                    ;48
        cmp    WORD PTR -4[BP],0
        jge    .0205
        mov    AX,1
        mov    -10[BP],AX
        dec    WORD PTR -2[BP]
        sub    WORD PTR -6[BP],1024
.0205:                    ;53
        mov    AX,-10[BP]
        or     AX,AX
        je     .0256
        lea    SI,COL_GRID
        mov    AX,-2[BP]
        shl    AX,1
        shl    AX,1
        add    SI,AX
        mov    AX,[SI]
        mov    DX,+2[SI]
        and    AX,-22[BP]
        and    DX,-20[BP]
        or     DX,AX
        je     .022A
        jmp    SHORT .0249
.022A:                      ;55
        lea    SI,COL_GRID
        mov    AX,-2[BP]
        add    AX,1
        shl    AX,1
        shl    AX,1
        add    SI,AX
        mov    AX,[SI]
        mov    DX,+2[SI]
        and    AX,-22[BP]
        and    DX,-20[BP]
        or     DX,AX
        je     .0250
.0249:                      ;55
        mov    AX,0
        mov    SP,BP
        pop    BP


col test -6-
```

```
        ret
.0250:                      ;56
        mov   AX,0
        mov   -10[BP],AX
.0256:                      ;58
        jmp   .0150
.0259:                      ;58
        mov   AX,1
        mov   SP,BP
        pop   BP
        ret
COL_TEST    ENDP

BOX_TEST    PROC NEAR
.0260:                      ;64
        push  BP
        mov   BP,SP
        push  WORD PTR +6[BP]
        push  WORD PTR +4[BP]
        call  IN_BOX
        add   SP,4
        or    AX,AX
        je    .02D4
        push  WORD PTR +10[BP]
        push  WORD PTR +8[BP]
        call  IN_BOX
        add   SP,4
        or    AX,AX
        je    .02D4
        lea   SI,STRK_SET
        add   SI,30
        mov   AX,+4[SI]
        add   AX,+6[BP]
        push  AX
        lea   SI,STRK_SET
        add   SI,30
        mov   AX,+2[SI]
        add   AX,+4[BP]
        push  AX
        call  IN_BOX
        add   SP,4
        or    AX,AX
        je    .02D4
        lea   SI,STRK_SET
        add   SI,30
        mov   AX,+4[SI]
        add   AX,+10[BP]
        push  AX
        lea   SI,STRK_SET
```

col test -7-

```
        add   SI,30
        mov   AX,+2[SI]
        add   AX,+8[BP]
        push  AX
        call  IN_BOX
        add   SP,4
        or    AX,AX
        je    .02D4
        mov   AX,1
        jmp   SHORT .02D7
.02D4:                    ;71
        mov   AX,0
.02D7:                    ;71
        mov   SP,BP
        pop   BP
        ret
BOX_TEST   ENDP

IN_BOX     PROC NEAR
.02DB:                    ;77
        push  BP
        mov   BP,SP
        mov   AX,+4[BP]
        cmp   AX,XPIX_MIN
        jl    .0307
        mov   AX,+4[BP]
        cmp   AX,XPIX_MAX
        jg    .0307
        mov   AX,+6[BP]
        cmp   AX,YPIX_MIN
        jl    .0307
        mov   AX,+6[BP]
        cmp   AX,YPIX_MAX
        jg    .0307
        mov   AX,1
        jmp   SHORT .030A
.0307:                    ;81
        mov   AX,0
.030A:                    ;81
        mov   SP,BP
        pop   BP
        ret
IN_BOX     ENDP

@CODE      ENDS
@CODE         SEGMENT   BYTE PUBLIC 'CODE'
        include   epilogue.h
        end


col test -8-
```

```
@BIGMODEL EQU   0
        include  prologue.h

        public   CROSS_ST
@CODE        ENDS
        extrn    CVSITSF:near

        extrn    SFADD:near

        extrn    SFSUB:near

        extrn    SFMUL:near

        extrn    SFINTRST:near

        extrn    SFINCLSV:near

        extrn    SFCMP:near

        extrn    RSFTSI:near

@CODE      SEGMENT   BYTE PUBLIC 'CODE'


CROSS_ST   PROC NEAR
.00:                ;10
        push BP
        mov  BP,SP
        sub  SP,66
        mov  SI,+4[BP]
        mov  AX,[SI]
        mov  -12[BP],AX
        mov  SI,+4[BP]
        mov  AX,+2[SI]
        mov  -10[BP],AX
        mov  SI,+6[BP]
        sub  SI,12
        mov  AX,[SI]
        mov  -8[BP],AX
        mov  SI,+6[BP]
        sub  SI,12
        mov  AX,+2[SI]
        mov  -6[BP],AX
        mov  SI,+6[BP]
        mov  AX,[SI]
        mov  -4[BP],AX
        mov  SI,+6[BP]
        mov  AX,+2[SI]
        mov  -2[BP],AX


cross st -1-
```

```
            mov   AX,-12[BP]
            cmp   AX,-8[BP]
            jne   .051
            mov   AX,-10[BP]
            cmp   AX,-6[BP]
            jne   .051
            jmp   SHORT .061
      .04F:                    ;22
            mov   AX,-12[BP]
            cmp   AX,-4[BP]
            jne   .078
            mov   AX,-10[BP]
            cmp   AX,-2[BP]
            jne   .078
      .061:                    ;22
            mov   SI,+8[BP]
            mov   [SI],AX
            mov   AX,-10[BP]
            mov   SI,+10[BP]
            mov   [SI],AX
            mov   AX,1
            mov   SP,BP
            pop   BP
            ret
      .078:                    ;27
            mov   SI,+4[BP]
            sub   SI,12
            mov   AX,[SI]
            mov   -16[BP],AX
            mov   SI,+4[BP]
            sub   SI,12
            mov   AX,+2[SI]
            mov   -14[BP],AX
            mov   AX,-16[BP]
            cmp   AX,-8[BP]
            jne   .0A1
            mov   AX,-14[BP]
            cmp   AX,-6[BP]
            jne   .0A1
            jmp   SHORT .0B1
      .0A1:                    ;29
            mov   AX,-16[BP]
            cmp   AX,-4[BP]
            jne   .0C8
            mov   AX,-14[BP]
            cmp   AX,-2[BP]
            jne   .0C3
      .0B1:                    ;29
            mov   AX,-16[BP]


      cross st -2-
```

```
        mov   SI,+8[BP]
        mov   [SI],AX
        mov   AX,-14[BP]
        mov   SI,+10[BP]
        mov   [SI],AX
        mov   AX,1
        mov   SP,BP
        pop   BP
        ret
.0C8:                    ;34
        mov   AX,0
        push  AX
        call  CVSITSF
        add   SP,2
        mov   -62[BP],AX
        mov   -60[BP],DX
        mov   -66[BP],AX
        mov   -64[BP],DX
        mov   AX,-12[BP]
        sub   AX,-16[BP]
        push  AX
        call  CVSITSF
        add   SP,2
        mov   -58[BP],AX
        mov   -56[BP],DX
        mov   AX,-10[BP]
        sub   AX,-14[BP]
        push  AX
        call  CVSITSF
        add   SP,2
        mov   -54[BP],AX
        mov   AX,-8[BP]
        sub   AX,-16[BP]
        push  AX
        call  CVSITSF
        add   SP,2
        mov   -50[BP],AX
        mov   -48[BP],DX
        mov   AX,-6[BP]
        sub   AX,-14[BP]
        push  AX
        call  CVSITSF
        add   SP,2
        mov   -46[BP],AX
        mov   -44[BP],DX
        mov   AX,-4[BP]
        sub   AX,-16[BP]
        push  AX
        call  CVSITSF


        cross st -3-
```

```
        add   SP,2
        mov   -42[BP],AX
        mov   -40[BP],DX
        mov   AX,-2[BP]
        sub   AX,-14[BP]
        push AX
        call CVSITSF
        add   SP,2
        mov   -38[BP],AX
        mov   -36[BP],DX
        mov   AX,20
        push AX
        call CVSITSF
        add   SP,2
        mov   -26[BP],AX
        mov   -24[BP],DX
        lea   SI,-30[BP]
        push SI
        lea   SI,-34[BP]
        push SI
        push WORD PTR -36[BP]
        push WORD PTR -38[BP]
        push WORD PTR -44[BP]
        push WORD PTR -46[BP]
        push WORD PTR -52[BP]
        push WORD PTR -54[BP]
        push WORD PTR -60[BP]
        push WORD PTR -62[BP]
        push WORD PTR -40[BP]
        push WORD PTR -42[BP]
        push WORD PTR -48[BP]
        push WORD PTR -50[BP]
        push WORD PTR -56[BP]
        push WORD PTR -58[BP]
        push WORD PTR -64[BP]
        push WORD PTR -66[BP]
        call SFINTRST
        add   SP,36
        or    AX,AX
        je    .01A4
        jmp   SHORT .01AB
.01A4:                    ;42
        mov   AX,0
        mov   SP,BP
        pop   BP
        ret
.01AB:                    ;44
        push WORD PTR -28[BP]
        push WORD PTR -30[BP]


cross st -4-
```

```
        push WORD PTR -52[BP]
        push WORD PTR -54[BP]
        push WORD PTR -60[BP]
        push WORD PTR -62[BP]
        push WORD PTR -32[BP]
        push WORD PTR -34[BP]
        push WORD PTR -56[BP]
        push WORD PTR -58[BP]
        push WORD PTR -64[BP]
        push WORD PTR -66[BP]
        call SFINCLSV
        add  SP,24
        mov  -22[BP],AX
        or   AX,AX
        je   .0216
        push WORD PTR -28[BP]
        push WORD PTR -30[BP]
        push WORD PTR -36[BP]
        push WORD PTR -38[BP]
        push WORD PTR -44[BP]
        push WORD PTR -46[BP]
        push WORD PTR -32[BP]
        push WORD PTR -34[BP]
        push WORD PTR -40[BP]
        push WORD PTR -42[BP]
        push WORD PTR -48[BP]
        push WORD PTR -50[BP]
        call SFINCLSV
        add  SP,24
        mov  -20[BP],AX
        or   AX,AX
        je   .0216
        mov  AX,1
        mov  -18[BP],AX
        jmp  .0426
.0216:                    ;46
        mov  AX,-22[BP]
        or   AX,AX
        je   .0220
        jmp  .0299
.0220:                    ;59
        push WORD PTR -24[BP]
        push WORD PTR -26[BP]
        push WORD PTR -28[BP]
        push WORD PTR -30[BP]
        push WORD PTR -60[BP]
        push WORD PTR -62[BP]
        call SFSUB
        add  SP,8


cross st -5-
```

```
        push DX
        push AX
        push WORD PTR -28[BP]
        push WORD PTR -30[BP]
        push WORD PTR -60[BP]
        push WORD PTR -62[BP]
        call SFSUB
        add  SP,8
        push DX
        push AX
        call SFMUL
        add  SP,8
        push DX
        push AX
        push WORD PTR -32[BP]
        push WORD PTR -34[BP]
        push WORD PTR -64[BP]
        push WORD PTR -66[BP]
        call SFSUB
        add  SP,8
        push DX
        push AX
        push WORD PTR -32[BP]
        push WORD PTR -34[BP]
        push WORD PTR -64[BP]
        push WORD PTR -66[BP]
        call SFSUB
        add  SP,8
        push DX
        push AX
        call SFMUL
        add  SP,8
        push DX
        push AX
        call SFADD
        add  SP,8
        push DX
        push AX
        call SFCMP
        add  SP,8
        cmp  AX,0
        jge  .029C
.0299:                  ;59
        jmp  .0313
.029C:                  ;59
        push WORD PTR -24[BP]
        push WORD PTR -26[BP]
        push WORD PTR -28[BP]
        push WORD PTR -30[BP]


        cross st -6-
```

```
                        push WORD PTR -52[BP]
                        push WORD PTR -54[BP]
                        call SFSUB
                        add  SP,8
                        push DX
                        push AX
                        push WORD PTR -28[BP]
                        push WORD PTR -30[BP]
                        push WORD PTR -52[BP]
                        push WORD PTR -54[BP]
                        call SFSUB
                        add  SP,8
                        push DX
                        push AX
                        call SFMUL
                        add  SP,8
                        push DX
                        push AX
                        push WORD PTR -32[BP]
                        push WORD PTR -34[BP]
                        push WORD PTR -56[BP]
                        push WORD PTR -58[BP]
                        call SFSUB
                        add  SP,8
                        push DX
                        push AX
                        push WORD PTR -32[BP]
                        push WORD PTR -34[BP]
                        push WORD PTR -56[BP]
                        push WORD PTR -58[BP]
                        call SFSUB
                        add  SP,8
                        push DX
                        push AX
                        call SFMUL
                        add  SP,8
                        push DX
                        push AX
                        call SFADD
                        add  SP,8
                        push DX
                        push AX
                        call SFCMP
                        add  SP,8
                        or   AX,AX
                        jl   ?1
                        jmp  .041F
                ?1:
                .0318:                  ;59


                cross st -7-
```

```
        mov   AX,-20[BP]
        or    AX,AX
        je    .0322
        jmp   .039B
  .0322:                      ;59
        push WORD PTR -24[BP]
        push WORD PTR -26[BP]
        push WORD PTR -28[BP]
        push WORD PTR -30[BP]
        push WORD PTR -44[BP]
        push WORD PTR -46[BP]
        call SFSUB
        add  SP,8
        push DX
        push AX
        push WORD PTR -28[BP]
        push WORD PTR -30[BP]
        push WORD PTR -44[BP]
        push WORD PTR -46[BP]
        call SFSUB
        add  SP,8
        push DX
        push AX
        call SFMUL
        add  SP,8
        push DX
        push AX
        push WORD PTR -32[BP]
        push WORD PTR -34[BP]
        push WORD PTR -48[BP]
        push WORD PTR -50[BP]
        call SFSUB
        add  SP,8
        push DX
        push AX
        push WORD PTR -32[BP]
        push WORD PTR -34[BP]
        push WORD PTR -48[BP]
        push WORD PTR -50[BP]
        call SFSUB
        add  SP,8
        push DX
        push AX
        call SFMUL
        add  SP,8
        push DX
        push AX
        call SFADD
        add   SP,8


cross st -8-
```

```
        push DX
        push AX
        call SFCMP
        add  SP,8
        cmp  AX,0
        jge  .039E
.039B:                      ;59
        jmp  .0417
.039E:                      ;59
        push WORD PTR -24[BP]
        push WORD PTR -26[BP]
        push WORD PTR -28[BP]
        push WORD PTR -30[BP]
        push WORD PTR -36[BP]
        push WORD PTR -38[BP]
        call SFSUB
        add  SP,8
        push DX
        push AX
        push WORD PTR -28[BP]
        push WORD PTR -30[BP]
        push WORD PTR -36[BP]
        push WORD PTR -38[BP]
        call SFSUB
        add  SP,8
        push DX
        push AX
        call SFMUL
        add  SP,8
        push DX
        push AX
        push WORD PTR -32[BP]
        push WORD PTR -34[BP]
        push WORD PTR -40[BP]
        push WORD PTR -42[BP]
        call SFSUB
        add  SP,8
        push DX
        push AX
        push WORD PTR -32[BP]
        push WORD PTR -34[BP]
        push WORD PTR -40[BP]
        push WORD PTR -42[BP]
        call SFSUB
        add  SP,8
        push DX
        push AX
        call SFMUL
        add  SP,8
```

cross st -9-

```
        push DX
        push AX
        call SFADD
        add  SP,8
        push DX
        push AX
        call SFCMP
        add  SP,8
        cmp  AX,0
        jge  .041F
   .0417:                   ;59
        mov  AX,2
        mov  -18[BP],AX
        jmp  SHORT .0426
   .041F:                   ;60
        mov  AX,0
        mov  SP,BP
        pop  BP
        ret
   .0426:                   ;61
        push WORD PTR -32[BP]
        push WORD PTR -34[BP]
        call RSFTSI
        add  SP,4
        add  AX,-16[BP]
        mov  SI,+8[BP]
        mov  [SI],AX
        push WORD PTR -28[BP]
        push WORD PTR -30[BP]
        call RSFTSI
        add  SP,4
        add  AX,-14[BP]
        mov  SI,+10[BP]
        mov  [SI],AX
        mov  AX,-18[BP]
        mov  SP,BP
        pop  BP
        ret
CROSS_ST  ENDP

@CODE     ENDS
@CODE     SEGMENT    BYTE PUBLIC 'CODE'
        include    epilogue.h
        end
```

cross st -10-

```
@BIGMODEL EQU   0
        include   prologue.h

@CODE       ENDS
@DATAC      SEGMENT
db    84,79,79,32,77,65,78,89,32,82,79,65,68,83,0
@DATAC      ENDS
@CODE       SEGMENT BYTE PUBLIC 'CODE'

        public    DSP_BLK
@CODE       ENDS
@DATAB      SEGMENT
        extrn     ROADS:word

        extrn     MIN_DIST:word

        extrn     XS1_DIST:word

        extrn     XS2_DIST:word

        extrn     XS1_ID:word

        extrn     XS2_ID:word

        extrn     SEG_DS:word

        extrn     SEG_PLOT:word

        extrn     NAV_LINE:word

        extrn     INTEN:word

        extrn     BUF_DB:word

        extrn     ERR_MSG:word

        extrn     ZOOM_TBL:word

        extrn     ZOOMF_PL:word

        extrn     ZOOMF_DB:word

@DATAB      ENDS
@CODE       SEGMENT   BYTE PUBLIC 'CODE'
@CODE       ENDS
        extrn     DISABLE:near

        extrn     MOVBLOCK:near


dsp blk -1-
```

```
        extrn       DSP_STRT:near

        extrn       SPRINTF:near

        extrn       ENABLE:near

@CODE       SEGMENT    BYTE PUBLIC 'CODE'


DSP_BLK    PROC NEAR
.00:               ;7
       push BP
       mov  BP,SP
       sub  SP,44
       lea  AX,ROADS
       add  AX,9
       mov  -22[BP],AX
       mov  SI,+4[BP]
       mov  AX,[SI]
       mov  -20[BP],AX
       mov  SI,+4[BP]
       mov  AX,+2[SI]
       mov  -8[BP],AX
       push WORD PTR NAV_LINE
       call DISABLE
       add  SP,2
       mov  SI,+4[BP]
       push WORD PTR +4[SI]
       push WORD PTR SEG_DS
       lea  AX,BUF_DB
       mov  -44[BP],AX
       push AX
       push WORD PTR SEG_PLOT
       mov  SI,+4[BP]
       push WORD PTR +6[SI]
       call MOVBLOCK
       add  SP,10
       mov  AX,-44[BP]
       mov  SI,-44[BP]
       add  AX,[SI]
       mov  -42[BP],AX
       mov  -40[BP],AX
       mov  AX,-40[BP]
       dec  WORD PTR -40[BP]
       mov  SI,-44[BP]
       add  AX,+10[SI]
       mov  -38[BP],AX
       mov  AX,-44[BP]
       mov  SI,-44[BP]


       dsp blk -2-
```

```
        add   AX,+2[SI]
        mov   -36[BP],AX
        mov   -34[BP],AX
        add   WORD PTR -34[BP],-8
        mov   SI,-44[BP]
        mov   DX,+12[SI]
        shl   DX,1
        shl   DX,1
        shl   DX,1
        add   AX,DX
        mov   -32[BP],AX
        mov   AX,-44[BP]
        mov   SI,-44[BP]
        add   AX,+4[SI]
        mov   -30[BP],AX
        mov   AX,-44[BP]
        mov   SI,-44[BP]
        add   AX,+6[SI]
        mov   -26[BP],AX
        mov   SI,-44[BP]
        mov   AL,+18[SI]
        and   AX,255
        or    AX,AX
        je    .0BE
        mov   AX,6
        jmp   SHORT .0C1
.0BE:                   ;40
        mov   AX,4
.0C1:                   ;40
        mov   -10[BP],AX
        mov   AX,-44[BP]
        mov   SI,-44[BP]
        add   AX,+8[SI]
        mov   -4[BP],AX
        mov   AX,0
        mov   -6[BP],AX
.0D6:                   ;43
        add   WORD PTR -34[BP],8
        mov   AX,-34[BP]
        cmp   AX,-32[BP]
        jb    ?1
        jmp   .02D6
?1:
        inc   WORD PTR -40[BP]
        lea   SI,INTEN
        mov   DI,-36[BP]
        mov   AL,+3[DI]
        and   AX,63
        add   SI,AX


dsp blk -3-
```

51

```
        mov    AL,[SI]
        and    AX,255
        mov    -12[BP],AX
        je     .010B
        jmp    SHORT .0101D
.010B:                      ;45
        jmp    SHORT .0D6
.010D:                      ;46
        mov    AX,-40[BP]
        cmp    AX,-38[BP]
        jae    .0161
        mov    SI,-40[BP]
        mov    AL,[SI]
        and    AX,255
        or     AX,AX
        je     .0161
        mov    AX,-30[BP]
        push   AX
        mov    BX,14
        mov    SI,-40[BP]
        mov    AL,[SI]
        and    AX,255
        sub    AX,1
        mul    BX
        pop    SI
        add    SI,AX
        mov    -28[BP],SI
        mov    SI,-28[BP]
        mov    AX,[SI]
        cmp    AX,-20[BP]
        jae    .0149
        jmp    SHORT .015E
.0149:                      ;50
        mov    SI,-28[BP]
        mov    AX,[SI]
        cmp    AX,-20[BP]
        jne    .0161
        mov    SI,-28[BP]
        mov    AX,+2[SI]
        cmp    AX,-8[BP]
        jge    .0161
.015E:                      ;50
        jmp    SHORT .0D6
.0161:                      ;52
        push   WORD PTR -12[BP]
        mov    SI,-34[BP]
        mov    AL,+2[SI]
        and    AX,255
        push   AX


dsp blk -4-
```

```
        push  WORD PTR -10[BP]
        mov   SI,-26[BP]
        mov   SI,-34[BP]
        add   AX,+4[SI]
        add   AX,+4[SI]
        push  AX
        call  DSP_START
        add   SP,8
        mov   -18[BP],AX
        or    AX,AX
        jne   .018B
        jmp   SHORT .018E
.018B:                      ;53
        jmp   .0D6
.018E:                      ;55
        mov   AX,32767
        and   AX,-18[BP]
        mov   DX,-6[BP]
        add   DX,AX
        mov   -6[BP],DX
        mov   AX,-4[BP]
        mov   SI,-34[BP]
        add   AX,+6[SI]
        mov   -2[BP],AX
        mov   SI,AX
        mov   AL,[SI]
        cbw
        or    AX,AX
        je    .01B3
        jmp   SHORT .01B5
.01B3:                        ;56
        jmp   SHORT .01C4
.01B5:                        ;56
        mov   SI,-2[BP]
        add   SI,1
        mov   AL,[SI]
        cbw
        or    AX,AX
        je    .01C4
        jmp   SHORT .01C7
.01C4:                        ;56
        jmp   SHORT .0D6
.01C7:                        ;58
        mov   SI,-34[BP]
        mov   AX,[SI]
        mov   -16[BP],AX
        sub   AX,5
        lea   AX,ROADS
```

dsp blk -5-

53

```
        mov   -24[BP],AX
.01D9:                      ;60
        add   WORD PTR -24[BP],5
        mov   SI,-24[BP]
        mov   AX,[SI]
        mov   -14[BP],AX
        or    AX,AX
        je    .01F6
        mov   AX,-14[BP]
        cmp   AX,-16[BP]
        jne   .0F4
        jmp   SHORT .01F6
.01F4:                      ;62
        jmp   SHORT .01D9
.01F6:                      ;62
        or    AX,AX
        je    .01F
        jmp   SHORT .024A
.01FF:                      ;63
        mov   AX,-24[BP]
        cmp   AX,-22[BP]
        jb    .0219
        lea   AX@SW
        push  AX
        lea   AX,ERR_MSG
        push  AX
        call  SPRINTF
        add   SP,4
        jmp   SHORT .0248
.0219:                      ;66
        mov   AX,-16[BP]
        mov   SI,-24[BP]
        mov   [SI],AX
        mov   SI,-34[BP]
        mov   AL,+3[SI]
        and   AX,255
        and   AX,63
        mov   SI,-24[BP]
        mov   +2,[SI],AL
        mov   AX,-18[BP]
        mov   SI,-24[BP]
        mov   +3,[SI],AX
        mov   AX,0
        mov   SI,-24[BP]
        add   SI,5
        mov   [SI],AX
.0248:                      ;71
        jmp   SHORT .0275
.024A:                      ;73


dsp blk -6-
```

54

```
        mov   AX,-18[BP]
        and   AX,32767
        mov   SI,-24[BP]
        mov   DX,+3[SI]
        add   DX,AX
        mov   +3[SI],DX
        mov   AX,-18[BP]
        and   AX,-32768
        or    AX,AX
        je    .0275
        mov   AX,-32768
        mov   SI,-24[BP]
        mov   DX,+3[SI]
        or    DX,AX
        mov   +3[SI],DX
.0275:                    ;76
        mov   AX,MIN_DIST
        cmp   AX,XS1_DIST
        ja    .02AD
        mov   SI,-34[BP]
        mov   AX,[SI]
        cmp   AX,XS1_ID
        je    .02A3
        mov   AX,XS1_DIST
        mov   XS2_DIST,AX
        mov   AX,XS1_ID
        mov   XS2_ID,AX
        mov   SI,-34[BP]
        mov   AX,[SI]
        mov   XS1_ID,AX
.02A3:                    ;83
        mov   AX,MIN_DIST
        mov   XS1_DIST,AX
        jmp   SHORT .02D3
.02AD:                    ;85
        mov   SI,-34[BP]
        mov   AX,[SI]
        cmp   AX,XS1_ID
        je    .02D3
        mov   AX,MIN_DIST
        cmp   AX,XS2_DIST
        jae   .02D3
        mov   AX,MIN_DIST
        mov   XS2_DIST,AX
        mov   SI,-34[BP]
        mov   AX,[SI]
        mov   XS2_ID,AX
.02DB:                    ;89
```

dsp blk -7-

55

```
        jmp   .0D6
    .02D6:                  ;89
        push  WORD PTR NAV_LINE
        call  ENABLE
        add   SP,2
        mov   AX,-6[BP]
        mov   SP,BP
        pop   BP
        ret
@CODE     ENDP

?DSP_BLK  ENDS
@CODE     SEGMENT   BYTE PUBLIC 'CODE'
        include   epilogue.h
        end

            .


            .


    dsp blk -8-
```

```
@BIGMODEL EQU    0
        include    prologue.h
@CODE       ENDS
@DATAC      SEGMENT
        db    6,0
        db    77,69,78,85,0
        db    84,82,65,75,0
        db    1,0
        db    7,0
@DATAC      ENDS
@CODE       SEGMENT BYTE PUBLIC 'CODE'

        public    DSP_MAP
@CODE       ENDS
@DATAB      SEGMENT
        extrn     CAR_POS:word

        extrn     CEN_POS:word

        extrn     PKEYS:word

        extrn     CRS:word

        extrn     STROKE:word   .

        extrn     REC_PTRS:word

        extrn     ROADS:word

        extrn     LCAR_X:word

        extrn     LCAR_Y:word

        extrn     LQEP_X:word

        extrn     LQEP_Y:word

        extrn     LMARK_Y:word

        extrn     CAR_DIST:word

        extrn     XS1_DIST:word

        extrn     XS2_DIST:word

        extrn     X_LEFT:word

        extrn     X_RIGHT:word


dsp map -1-
```

```
        extrn       Y_BOT:word

        extrn       Y_TOP:word

        extrn       BX_LEFT:word

        extrn       BX_RIGHT:word

        extrn       BX_BOT:word

        extrn       BX_TOP:word

        extrn       HOME:word

        extrn       NAV_MAP:word

        extrn       ON_STRT:word

        extrn       ZOOMF_PL:word

        extrn       DSP_QEP:word

        extrn       DSP_MSG:word

        extrn       ERR_MSG:word

        extrn       TAPE_MSG:word

@DATAB      ENDS
@CODE       SEGMENT     BYTE PUBLIC 'CODE'
@CODE       ENDS

        extrn       SET_ZOOM:near

        extrn       CAL_CNTR:near

        extrn       ISIN:near

        extrn       ICOS:near

        extrn       NAME:near

        extrn       DSP_KEY:near

        extrn       RT_VECTR:near

        extrn       BOX_CLIP:near

        extrn       ZM_NODE:near


        dsp map -2-
```

```
        extrn       VCAL:near

        extrn       MIN2:near

        extrn       MAX2:near

        extrn       SRT_BLKS:near

        extrn       LB_MAP:near

@CODE       SEGMENT   BYTE PUBLIC 'CODE'


DSP_MAP     PROC NEAR
@CODE       ENDS
        extrn       $LRSSHIFT:near

        extrn       $ISWITCH:near

@CODE       SEGMENT BYTE PUBLIC 'CODE'
.00:            ;6
    push BP
    mov  BP,SP
    sub  SP,46
    push WORD PTR ZOOMF_PL
    call SET_ZOOM
    add  SP,2
    call CAL_CNTR
    mov  AX,16384
    sub  AX,CEN_POS+4
    push AX
    call ISIN
    add  SP,2
    mov  CRS+2,AX
    mov  STROKE+2,AX
    mov  AX,16384
    sub  AX,CEN_POS+4
    push AX
    call ICOS
    add  SP,2
    mov  CRS+4,AX
    mov  STROKE+4,AX
    mov  AX,6
    push AX
    lea  AX,@SW
    push AX
    mov  AX,150
    push AX
    mov  AL,-23


dsp map -3-
```

```
        push AX
        call DSP_NAME
        add  SP,8
        mov  AX,NAV_MAP
        or   AX,AX
        je   .0BA
        mov  AX,PKEYS
        add  AX,18
        push AX
        mov  AX,7
        push AX
        mov  AL,0
        push AX
        lea  AX,@SW+2
        push AX
        mov  AX,25
        push AX
        mov  AX,-249
        push AX
        call DSP_KEY
        add  SP,12
        mov  AX,HOME
        or   AX,AX
        je   .089
        jmp  SHORT .0AC
.089:                    ;34
        mov  AX,PKEYS
        add  AX,24
        push AX
        mov  AX,7
        push AX
        mov  AL,0
        push AX
        mov  AL,0
        push AX
        lea  AX,@SW+7
        push AX
        mov  AX,-35
        push AX
        mov  AL,7
        push AX
        call DSP_KEY
        add  SP,12
        jmp  SHORT .0B8
.0AC:                    ;37
        mov  AX,0
        mov  SI,PKEYS
        add  SI,24
        mov  [SI],AX


        dsp map -4-
```

```
.0B8:                    ;38
     jmp   SHORT .0D2
.0BA:                    ;40
     mov   AX,0
     mov   SI,PKEYS
     add   SI,18
     mov   [SI],AX
     mov   AX,0
     mov   SI,PKEYS
     add   SI,24
     mov   [SI],AX
.0D2:                    ;43
     lea   SI,-32[BP]
     push SI
     lea   SI,-34[BP]
     push SI
     lea   SI,CRS
     push SI
     mov   AX,LCAR_Y
     mov   DX,LCAR_Y+2
     push DX
     push AX
     mov   AX,ZOOMF_DB
     cwd
     push DX
     push AX
     call $LRSSHIFT
     pop   AX
     pop   DX
     sub   AX,CEN_POS+2
     push AX
     mov   AX,LCAR_X
     mov   DX,LCAR_X+2
     push DX
     push AX
     mov   AX,ZOOMF_DB
     cwd
     push DX
     push AX
     call $LRSSHIFT
     pop   AX
     pop   DX
     sub   AX,CEN_POS
     push AX
     call RT_VECTR
     add   SP,10
     mov   AX,0
     mov   XS2_DIST,AX
     mov   XS1_DIST,AX


dsp map -5-
```

61

```
        mov   CAR_DIST,AX
        mov   -36[BP],AX
        mov   -38[BP],AX
        lea   SI,-44[BP]
        push  SI
        lea   SI,-32[BP]
        push  SI
        lea   SI,-34[BP]
        push  SI
        lea   SI,-36[BP]
        push  SI
        lea   SI,-38[BP]
        push  SI
        call  BOX_CLIP
        add   SP,10
        cmp   AX,4
        jne   .01C1
        mov   AX,HOME
        or    AX,AX
        je    .0178
        mov   AX,ON_STRT
        or    AX,AX
        je    .0178
        mov   AX,-32[BP]
        sub   AX,Y_BOT
        sub   AX,5     .
        mov   CAR_DIST,AX
        mov   AX,-1
        mov   XS2_DIST,AX
        mov   XS1_DIST,AX
.0178:                    ;53
        mov   AX,CAR_POS+4
        sub   AX,CEN_POS+4
        push  AX
        call  ISIN
        add   SP,2
        mov   STROKE+2,AX
        mov   AX,CAR_POS+4
        sub   AX,CEN_POS+4
        push  AX
        call  ICOS
        add   SP,2
        mov   STROKE+4,AX
        lea   SI,-32[BP]
        push  SI
        lea   SI,-34[BP]
        push  SI
        call  ZM_NODE
        add   SP,4


        dsp map -6-
```

```
        mov   AX,3
        push  AX
        lea   AX,@SW+12
        push  AX
        push  WORD PTR -32[BP]
        push  WORD PTR -34[BP]
        call  DSP_NAME
        add   SP,8
.01C1                        ;59
        mov   AX,DSP_QEP
        or    AX,AX
        jne   ?1
        jmp   .044B
?1:
        lea   SI,-44[BP]
        push  SI
        mov   AX,7
        push  AX
        mov   AL,0
        push  AX
        lea   AX,DSP_MSG
        push  AX
        mov   AX,175
        push  AX
        mov   AX,-255
        push  AX
        call  DSP_KEY
        add   SP,12
        lea   SI,-44[BP]
        push  SI
        mov   AX,7
        push  AX
        mov   AL,0
        push  AX
        lea   AX,ERR_MSG
        push  AX
        mov   AX,151
        push  AX
        mov   AX,-191
        push  AX
        call  DSP_KEY
        add   SP,12
        lea   SI,-44[BP]
        push  SI
        mov   AX,7
        push  AX
        mov   AL,0
        push  AX
        lea   AX,TAPE_MSG


dsp map -7-
```

```
        push AX
        mov  AX,127
        push AX
        mov  AX,-191
        push AX
        call DSP_KEY
        add  SP,12
        lea  SI,-32[BP]
        push SI
        lea  SI,034[BP]
        push SI
        lea  SI,CRS
        push SI
        mov  AX,LMARK_Y
        mov  DX,LMARK_Y+2
        push DX
        push AX
        mov  AX,ZOOMF_DB
        cwd
        push DX
        push AX
        call $LRSSHIFT
        pop  AX
        pop  DX
        sub  AX,CEN_POS+2
        push AX
        mov  AX,LMARK_X
        mov  DX,LMARK_X+2
        push DX
        push AX
        mov  AX,ZOOMF_DB
        cwd
        push DX
        push AX
        call $LRSSHIFT
        pop  AX
        pop  DX
        sub  AX,CEN_POS
        push AX
        call RT_VECTR
        add  SP,10
        mov  AX,0
        mov  -36[BP],AX
        mov  -38[BP],AX
        lea  SI,-44[BP]
        push SI
        lea  SI,-32[BP]
        push SI
        lea  SI,-34[BP]
```

dsp map -8-

```
        push SI
        lea  SI,-36[BP]
        push SI
        lea  SI,-38[BP]
        push SI
        call BOX_CLIP
        add  SP,10
        cmp  AX,4
        jne  .02C1
        lea  SI,-32[BP]
        push SI
        lea  SI,-34[BP]
        push SI
        call ZM_NODE
        add  SP,4
        lea  SI,-44[BP]
        push SI
        mov  AX,3
        push AX
        mov  AL,1
        push AX
        lea  AX,@SW+14
        push AX
        push WORD PTR -32[BP]
        push WORD PTR -34[BP]
        call DSP_KEY
        add  SP,12
.02C1:                     ;80
        lea  SI,-10[BP]
        push SI
        lea  SI,-12[BP]
        push SI
        lea  SI,CRS
        push SI
        lea  SI,LQEP_Y
        mov  AX,[SI]
        mov  DX,+2[SI]
        push DX
        push AX
        mov  AX,ZOOMF_DB
        cwd
        push DX
        push AX
        call $LRSSHIFT
        pop  AX
        pop  DX
        sub  AX,CEN_POS+2
        push AX
        lea  SI,LQEP_X
```

dsp map -9-

```
        mov   AX,[SI]
        mov   DX,+2[SI]
        push  DX
        push  AX
        mov   AX,ZOOMF_DB
        cwd
        push  DX
        push  AX
        call  $LRSSHIFT
        pop   AX
        pop   DX
        sub   AX,CEN_POS
        push  AX
        call  RT_VECTR
        add   SP,10
        mov   AX,-12[BP]
        mov   -38[BP],AX
        mov   AX,-10[BP]
        mov   -36[BP],AX
        mov   AX,0
        mov   -32[BP],AX
        mov   -34[BP],AX
        lea   SI,-44[BP]
        push  SI
        lea   SI,-32[BP]
        push  SI
        lea   SI,-34[BP]
        push  SI
        lea   SI,-36[BP]
        push  SI
        lea   SI,-38[BP]
        push  SI
        call  BOX_CLIP
        add   SP,10
        cmp   AX,4
        jne   .0350
        mov   AX,4
        push  AX
        push  WORD PTR -10[BP]
        push  WORD PTR -12[BP]
        call  VCAL
        add   SP,6
.0350:                      ;88
        mov   AX,1
        mov   -2[BP],AX
.0356:                      ;88
        cmp   WORD PTR -2[BP],5
        jl    ?2
        jmp   .044B


dsp map -10-
```

```
?2:
        mov   AX,4
        push  AX
        mov   AX,-2[BP]
        pop   BX
        cwd
        idiv  BX
        mov   -4[BP],DX
        lea   SI,-6[BP]
        push  SI
        lea   SI,-8[BP]
        push  SI
        lea   SI,CRS
        push  SI
        lea   SI,LQEP_Y
        mov   AX,-4[BP]
        shl   AX,1
        shl   AX,1
        add   SI,AX
        mov   AX,[SI]
        mov   DX,+2[SI]
        push  DX
        push  AX
        mov   AX,ZOOMF_DB
        cwd
        push  DX ·
        push  AX
        call  $LRSSHIFT
        pop   AX
        pop   DX
        sub   AX,CEN_POS+2
        push  AX
        lea   SI,LQEP_X
        mov   AX,-4[BP]
        shl   AX,1
        shl   AX,1
        add   SI,AX
        mov   AX,[SI]
        mov   DX,+2[SI]
        push  DX
        push  AX
        mov   AX,ZOOMF_DB
        cwd
        push  DX
        push  AX
        call  $LRSSHIFT
        pop   AX
        pop   DX
        sub   AX,CEN_POS
```

dsp map -11-

```
        push AX
        call RT_VECTR
        add  SP,10
        mov  AX,-12[BP]
        mov  -38[BP],AX
        mov  AX,-10[BP]
        mov  -36[BP],AX
        mov  AX,-8[BP]
        mov  -34[BP],AX
        mov  AX,-6[BP]
        mov  -32[BP],AX
        lea  SI,-44[BP]
        push SI
        lea  SI,-32[BP]
        push SI
        lea  SI,-34[BP]
        push SI
        lea  SI,-36[BP]
        push SI
        lea  SI,-38[BP]
        push SI
        call BOX_CLIP
        add  SP,10
        push AX
        jmp  SHORT .0422
.0400:                    ;101
        mov  AX,4
        push AX
        push WORD PTR -36[BP]
        push WORD PTR -38[BP]
        call VCAL
        add  SP,6
        jmp  SHORT .0439
.0422:                    ;107
        call $ISWITCH
        dw   4
        dw   4
        dw   3
        dw   2
        dw   1
        dw   .0439
        dw   .0410
        dw   .0410
        dw   .0400
        dw   .0400
.0439:                    ;107
        mov  AX,-8[BP]
        mov  -12[BP],AX
        mov  AX,-6[BP]


dsp map -12-
```

```
        mov  -10[BP],AX
.0445:                  ;110
        inc  WORD PTR -2[BP]
        jmp  .0356
.044B:                  ;113
        mov  AX,CRS+2
        neg  AX
        mov  STROKE+2,AX
        mov  AX,CRS+4
        mov  STROKE+4,AX
        lea  SI,-36[BSP]
        push SI
        lea  SI,-38[BP]
        push SI
        lea  SI,STROKE
        push SI
        push WORD PTR Y_TOP
        push WORD PTR X_RIGHT
        call RT_VECTR
        add  SP,10
        lea  SI,-32[BP]
        push SI
        lea  SI,-34[BP]
        push SI
        lea  SI,STROKE
        push SI
        push WORD PTR Y_TOP
        push WORD PTR X_LEFT
        call RT_VECTR
        add  SP,10
        lea  SI,-28[BP]
        push SI
        lea  SI,-30[BP]
        push SI
        lea  SI,STROKE
        push SI
        push WORD PTR Y_BOT
        push WORD PTR X_LEFT
        call RT_VECTR
        add  SP,10
        lea  SI,-24[BP]
        push SI
        lea  SI,-26[BP]
        push SI
        lea  SI,STROKE
        push SI
        push WORD PTR Y_BOT
        push WORD PTR X_RIGHT
        call RT_VECTR


dsp map -13-
```

```
add   SP,10
push WORD PTR -26[BP]
push WORD PTR -30[BP]
call MIN2
add   SP,4
push AX
push WORD PTR -34[BP]
push WORD PTR -38[BP]
call MIN2
add   SP,4
push AX
call MIN2
add   SP,4
push AX
call MIN2
add   SP,4
mov   BX_LEFT,AX
push WORD PTR -26[BP]
push WORD PTR -30[BP]
call MAX2
add   SP,4
push AX
push WORD PTR -34[BP]
push WORD PTR -38[BP]
call MAX2
add   SP,4
push AX
call MAX2
add   SP,4
mov   BX_RIGHT,AX
push WORD PTR -24[BP]
push WORD PTR -28[BP]
call MIN2
add   SP,4
push AX
push WORD PTR -32[BP]
push WORD PTR -36[BP]
call MIN2
add   SP,4
push AX
call MIN2
add   SP,4
mov   BX_BOT,AX
push WORD PTR -24[BP]
push WORD PTR -28[BP]
call MAX2
add   SP,4
push AX
push WORD PTR -32[BP]
```

dsp map -14-

```
        push WORD PTR -36[BP]
        call MAX2
        add  SP,4
        push AX
        call MAX2
        add  SP,4
        mov  BX_TOP,AX
        push WORD PTR +4[BP]
        call SRT_BLKS
        add  SP,2
        mov  AX,-1
        lea  SI,ROADS
        mov  +2[SI],AL
        mov  AX,0
        lea  SI,ROADS
        mov  [SI],AX
        mov  AX,0
        mov  -20[BP],AX
        lea  AX,REC_PTRS
        mov  -14[BP],AX
        mov  -16[BP],AX
.0585:                  ;128
        mov  SI,-16[BP]
        add  WORD PTR -16[BP],2
        mov  AX,[SI]
        mov  -46[BP],AX
        or   AX,AX
        je   .05BB
        push WORD PTR -46[BP]
        call DSP_BLK
        add  SP,2
        mov  -18[BP],AX
        or   AX,AX
        je   .05B9
        mov  AX,-18[BP]
        add  -20[BP],AX
        mov  AX,-46[BP]
        mov  SI,-14[BP]
        add  WORD PTR -14[BP],2
        mov  [SI],AX
.05B9:                  ;133
        jmp  SHORT .0585
.05BB:                  ;133
        mov  AX,0
        mov  SI,-14[BP]
        mov  [SI],AX
        call LB_MAP
        mov  AX,128
        push AX


dsp map -15-
```

```
        mov   AL,0
        push  AX
        push  AX
        call  VCAL
        add   SP,6
        mov   AX,-20[BP]
        mov   SP,BP
        pop   BP
        ret
DSP_MAP    ENDP

@CODE      ENDS
@CODE      SEGMENT   BYTE PUBLIC 'CODE'
        include   epilogue.h
        end
```

dsp map -16-

```
@BIGMODEL EQU   0
        include   prologue.h

        public    DSP_NAME
@CODE       ENDS
@DATAB      SEGMENT
        extrn     PCHR_SET:word

        extrn     STRK_SET:word

        extrn     STROKE:word

        extrn     COL_GRID:word

        extrn     BEAM_X:word

        extrn     BEAM_Y:word

        extrn     RESET_CT:word

@DATAB      ENDS
@CODE       SEGMENT   BYTE PUBLIC 'CODE'
@CODE       ENDS
        extrn     SET_PIN:far

        extrn     CHAR_MNX:far

        extrn     VCAL:far

        extrn     RT_VECTR:far

        extrn     V_STUFF:far

        extrn     CLR_PIN:far

@CODE       SEGMENT   BYTE PUBLIC 'CODE'


DSP_NAME    PROC NEAR
@CODE       ENDS
        extrn     $LRUSHIFT:near

        extrn     $LLSHIFT:near

@CODE       SEGMENT   BYTE PUBLIC 'CODE'
.00:                  ;7
    push BP
    mov  BP,SP
    sub  SP,32


dsp name  -1-
```

```
        mov   AX,9
        push  AX
        call  SET_PIN
        add   SP,2
        lea   SI,-12[BP]
        push  SI
        lea   SI,-14[BP]
        push  SI
        call  CHAR_MNX
        add   SP,4
        add   WORD PTR -14[BP],254
        add   WORD PTR -12[BP],254
        mov   AX,STRK_SET
        add   AX,40
        mov   -30[BP],AX
.032:                   ;27
        mov   SI,-30[BP]
        mov   AX,[SI]
        cmp   AX,-1
        je    .04B
        mov   AX,0
        mov   SI,-30[BP]
        add   WORD PTR -30[BP],10
        mov   [SI],AX
        jmp   SHORT .032
.04B:                   ;28
        mov   AX,0
        mov   DX,-16384
        push  DX
        push  AX
        mov   AX,-14[BP]
        add   AX,+4[BP]
        and   AX,-16
        mov   -10[BP],AX
        mov   DX,4
        mov   CX,DX
        sar   AX,CL
        xor   DX,DX
        push  DX
        push  AX
        call  $LRUSHIFT
        pop   AX
        pop   DX
        mov   -28[BP],AX
        mov   -26[BP],DX
        mov   AX,16
        push  AX
        mov   AL,0
        push  AX


        dsp name -2-
```

```
        push AX
        call VCAL
        add  SP,6
        mov  AX,-12
        mov  -16[BP],AX
.089:                    ;33
        mov  SI,+8[BP]
        inc  WORD PTR +8[BP]
        mov  AL,[SI]
        and  AX,255
        mov  -2[BP],AX
        or   AX,AX
        jne  ?1
        jmp  .0254
?1:
        lea  SI,-18[BP]
        push SI
        lea  SI,-20[BP]
        push SI
        lea  SI,STROKE
        push SI
        mov  AX,0
        push AX
        mov  AL,12
        mov  DX,-16[BP]
        add  DX,AX
        mov  -16[BP],DX
        push DX
        call RT_VECTR
        add  SP,10
        mov  AX,-18[BP]
        add  AX,+6[BP]
        mov  -22[BP],AX
        sub  AX,BEAM_Y
        push AX
        mov  AX,-20[BP]
        add  AX,+4[BP]
        mov  -24[BP],AX
        sub  AX,BEAM_X
        push AX
        mov  AX,4
        push AX
        call V_STUFF
        add  SP,6
        mov  AX,-14[BP]
        add  AX,-24[BP]
        and  AX,-16
        sub  AX,-10[BP]
        mov  -8[BP],AX


        dsp name -3-
```

```
        cmp   AX,0
        jle   .011D
        mov   AX,1
        mov   DX,0
        mov   BX,-28[BP]
        mov   CX,-26[BP]
        push  CX
        push  BX
        push  DX
        push  AX
        call  $LRUSHIFT
        pop   AX
        pop   DX
        mov   -28[BP],AX
        mov   -26[BP],DX
        add   WORD PTR -10[BP],16
        jmp   SHORT .0144
.011D:                    ;41
        cmp   WORD PTR -8[BP],0
        jge   .0144
        mov   AX,1
        mov   DX,0
        mov   BX,-28[BP]
        mov   CX,-26[BP]
        push  CX
        push  BX
        push  DX
        push·AX
        call  $LLSHIFT
        pop   AX
        pop   DX
        mov   -28[BP],AX
        mov   -26[BP],DX
        sub   WORD PTR -10[BP],16
.0144:                    ;45
        mov   AX,-28[BP]
        mov   DX,-26[BP]
        lea   SI,COL_GRID
        mov   BX,-12[BP]
        add   BX,-22[BP]
        mov   CX,4
        sar   BX,CL
        mov   -6[BP],BX
        shl   BX,1
        shl   BX,1
        add   SI,BX
        mov   BX,[SI]
        mov   CX,+2[SI]
        or    BX,AX


     dsp name -4-
```

```
        or    CX,DX
        mov   [SI],BX
        mov   +2[SI],CX
        mov   AX,-28[BP]
        mov   DX,-26[BP]
        lea   SI,COL_GRID
        mov   BX,-6[BP]
        add   BX,1
        shl   BX,1
        shl   BX,1
        add   SI,BX
        mov   BX,[SI]
        mov   CX,+2[SI]
        or    BX,AX
        or    CX,DX
        mov   [SI],BX
        mov   +2[SI],CX
        mov   SI,offset PCHR_SET
        mov   AX,-2[BP]
        shl   AX,1
        add   SI,AX
        mov   SI,[SI]
        mov   -32[BP],SI
.01A4:                        ;48
        mov   SI,-32[BP]
        mov   AX,[SI]
        mov   -4[BP],AX
        cmp   AX,0
        jge   ?2
        jmp   .0251
?2:
        mov   SI,-32[BP]
        mov   SI,+2[SI]
        mov   -30[BP],SI
        mov   SI,-30[BP]
        mov   AX,[SI]
        or    AX,AX
        je    .01C8
        jmp   SHORT .1F5
.01C8:                        ;50
        mov   AX,-30[BP]
        add   AX,4
        push  AX
        mov   AX,-30[BP]
        add   AX,2
        push  AX
        lea   SI,STROKE
        push  SI
        mov   SI,-30[BP]


        dsp name -5-
```

```
        push WORD PTR +8[SI]
        mov  SI,-30[BP]
        push WORD PTR +6[SI]
        call RT_VECTR
        add  SP,10
        mov  AX,1
        mov  SI,-30[BP]
        mov  [SI],AX
.01F5:                    ;55
        mov  AX,-4[BP]
        or   AX,AX
        je   .0223
        mov  SI,-30[BP]
        mov  AX,+4[SI]
        add  AX,-22[BP]
        sub  AX,BEAM_Y
        push AX
        mov  SI,-30[BP]
        mov  AX,+2[SI]
        add  AX,-24[BP]
        sub  AX,BEAM_X
        push AX
        push WORD PTR +10[BP]
        call V_STUFF
        add  SP,6
        jmp  SHORT .0249
.0223:                    ;58
        mov  SI,-30[BP]
        mov  AX,+4[SI]
        add  AX,-22[BP]
        sub  AX,BEAM_Y
        push AX
        mov  SI,-30[BP]
        mov  AX,+2[SI]
        add  AX,-24[BP]
        sub  AX,BEAM_X
        push AX
        mov  AX,4
        push AX
        call V_STUFF
        add  SP,6
.0249:                    ;60
        add  WORD PTR -32[BP],4
        jmp  .01A4
.0251:                    ;62
        jmp  .089
.0254:                    ;63
        mov  AX,513
        mov  RESET_CT,AX


dsp name -6-
```

```
        mov   AX,9
        push  AX
        call  CLR_PIN
        add   SP,2
        mov   SP,BP
        pop   BP
        ret
DSP_NAME   ENDP

@CODE      ENDS
@CODE      SEGMENT   BYTE PUBLIC 'CODE'
        include   epilogue.h
        end
```

dsp name -7-

```
@BIGMODEL EQU   0
        include   prologue.h

        public    DSP_STRT
@CODE       ENDS
@DATAB      SEGMENT
        extrn     CEN_POS:word

        extrn     CRS:word

        extrn     CAR_DIST:word

        extrn     MIN_DIST:word

        extrn     BX_LEFT:word

        extrn     BX_RIGHT:word

        extrn     BX_BOT:word

        extrn     BX_TOP:word

        extrn     CEN_OFF:word

@DATAB.     ENDS
@CODE       SEGMENT   BYTE PUBLIC 'CODE'
@CODE       ENDS
        extrn     RT_VECTR:near

        extrn     BOX_CLIP:near

        extrn     VCAL:near

        extrn     MAX2:near

        extrn     MIN2:near

@CODE       SEGMENT BYTE PUBLIC 'CODE'


DSP_STRT   PROC NEAR
.00:                ;7
        push BP
        mov  BP,SP
        sub  SP,32
        mov  AX,-1
        mov  MIN_DIST,AX
        mov  AX,0
        mov  -2[BP],AX


dsp strt -1-
```

```
mov    -22[BP],AX
lea    SI,-18[BP]
push   SI
lea    SI,-20[BP]
lea    SI,CRS
push   SI
mov    SI,+4[BP]
mov    AX,+2[SI]
sub    AX,CEN_POS+2
mov    -28[BP],AX
push   AX
mov    SI,+4[BP]
mov    AX,[SI]
sub    AX,CEN_POS
mov    -30[BP],AX
push   AX
call   RT_NODE
add    SP,10
mov    AX,-20[BP]
mov    -12[BP],AX
mov    AX,-18[BP]
mov    -10[BP],AX
mov    AX,0
mov    -6[BP],AX
mov    -8[BP],AX
lea    SI,-32[BP]
push   SI
lea    SI,-6[BP]
push   SI
lea    SI,-8[BP]
push   SI
lea    SI,-10[BP]
push   SI
lea    SI,-12[BP]
push   SI
call   BOX_CLIP
add    SP,10
cmp    AX,4
jne    .099
mov    AX,4
push   AX
push   WORD PTR -10[BP]
push   WORD PTR -14[BP]
call   VCAL
add    SP,6
mov    AX,CEN_OFF
neg    AX
cmp    AX,-10[BP]
jge    .099
```

dsp strt -2-

```
            mov    AX,-32768
            mov    -2[BP],AX
    .099:                        ;32
            dec    WORD PTR +8[BP]
            mov    AX,+8[BP]
            or     AX,AX
            jne    ?1
            jmp    .0219
    ?1:
            mov    AX,+4[BP]
            add    AX,+6[BP]
            mov    +4[BP],AX
            mov    SI,+4[BP]
            mov    AX,[SI]
            sub    AX,CEN_POS
            mov    -26[BP],AX
            mov    SI,+4[BP]
            mov    AX,+2[SI]
            sub    AX,CEN_POS+2
            mov    -24[BP],AX
            push   WORD PTR -26[BP]
            push   WORD PTR -30[BP]
            call   MAX2
            add    SP,4
            cmp    AX,BX_LEFT
            jge    .0DC
            jmp    SHORT .0EE
    .0DC:                        ;37
            push   WORD PTR -26[BP]
            push   WORD PTR -30[BP]
            call   MIN2
            add    SP,4
            cmp    AX,BX_RIGHT
            jle    .0F0
    .0EE:                        ;37
            jmp    SHORT .0102
    .0F0:                        ;37
            push   WORD PTR -24[BP]
            push   WORD PTR -28[BP]
            call   MAX2
            add    SP,4
            cmp    AX,BX_BOT
            jge    .0104
    .0102:                       ;37
            jmp    SHORT .0116
    .0104:                       ;37
            push   WORD PTR -24[BP]
            push   WORD PTR -28[BP]
            call   MIN2


    dsp strt -3-
```

EP 0 199 780 B1

```
          add   SP,4
          cmp   AX,BX_TOP
          jle   .011F
   .0116:                   ;37
          mov   AX,1
          mov   -22[BP],AX
          jmp   .020A
   .011F:                   ;39
          mov   AX,-22[BP]
          or    AX,AX
          je    .0145
          lea   SI,-18[BP]
          push  SI
          lea   SI,CRS
          push  SI
          push  WORD PTR -28[BP]
          push  WORD PTR -30[BP]
          call  RT_NODE
          add   SP,10
          mov   AX,0
          mov   -22[BP],AX
   .0145:                   ;44
          lea   SI,-14[BP]
          push  SI
          lea   SI,-16[BP]
          push  SI
          lea   SI,CRS
          push  SI
          push  WORD PTR -24[BP]
          push  WORD PTR -26[BP]
          call  VECTR
          add   SP,10
          mov   AX,-20[BP]
          mov   -12[BP],AX
          mov   AX,-18[BP]
          mov   -10[BP],AX
          mov   AX,-16[BP]
          mov   -8[BP],AX
          mov   AX,-14[BP]
          mov   -6[BP],AX
          lea   SI,-32[BP]
          push  SI
          lea   SI,-6[BP]
          push  SI
          lea   SI,-8[BP]
          push  SI
          lea   SI,-10[BP]
          push  SI
          lea   SI,-12[BP]


          dsp strt -4-
```

83

```
        push SI
        call BOX_CLIP
        add  SP,10
        mov  -4[BP],AX
        or   AX,AX
        je   .01FE
        cmp  WORD PTR -4[BP],2
        jg   .01BE
        mov  AX,4
        push AX
        push WORD PTR -10[BP]
        push WORD PTR -12[BP]
        call VCAL
        add  SP,6
        mov  AX,CEN_OFF
        neg  AX
        cmp  AX,-10[BP]
        jge  .01BE
        or   WORD PTR -2[BP],-32768
.01BE:                   ;56
        push WORD PTR +10[BP]
        push WORD PTR -6[BP]
        push WORD PTR -8[BP]
        call VCAL
        add  SP,6
        mov  DX,-2[BP]
        add  AX
        mov  -2[BP],DX
        mov  AX,CEN_OFF
        neg  AX
        cmp  AX,-6[BP]
        jge  .01E5
        or   WORD PTR -2[BP],-32768
.01E5:                   ;58
        mov  AX,-32[BP]
        cmp  AX,CAR_DIST
        jbe  .01FE
        mov  AX,-32[BP]
        cmp  AX,MIN_DIST
        jae  .01FE
        mov  AX,-32[BP]
        mov  MIN_DIST,AX
.01FE:                   ;61
        mov  AX,-16[BP]
        mov  -20[BP],AX
        mov  AX,-14[BP]
        mov  -18[BP],AX
.020A:                   ;63
        mov  AX,-26[BP]


dsp strt -5-
```

```
        mov   -30[BP],AX
        mov   AX,-24[BP]
        mov   -28[BP],AX
        jmp   .099
.0219:                    ;66
        mov   AX,-2[BP]
        mov   SP,BP
        pop   BP
        ret
DSP_STRT  ENDP

@CODE     ENDS
@CODE     SEGMENT   BYTE PUBLIC 'CODE'
        include   epilogue.h
        end
```

dsp strt -6-

```
@BIGMODEL EQU    0
         include   prologue.h

         public    GET_POS
@CODE       ENDS
@DATAB      SEGMENT
         extrn     DRPX:word

         extrn     DRPY:word

         extrn     PSEGUPDT:word

         extrn     CAR_POS:word

         extrn     LCAR_X:word

         extrn     LCAR_Y:word

         extrn     IQEPX:word

         extrn     IQEPY:word

         extrn     LQEP_X:word

         extrn     LQEP_Y:word

         extrn     MXDEVDIR:word

         extrn     ICOURSE:word

         extrn     ST_WIDTH:word

         extrn     ON_STRT:word

         extrn     NAV_LINE:word

         extrn     PNAV_MSG:word

         extrn     DSP_MSG:word

@DATAB      ENDS
@CODE       SEGMENT   BYTE PUBLIC 'CODE'
@CODE       ENDS

         extrn     CK_VARS:near

         extrn     DISABLE:near

         extrn     SET_PIN:near


get pos -1-
```

```
        extrn       IATAN2:near

        extrn       IMUL:near

        extrn       PRIORITY

        extrn       CLR_PIN:near

        extrn       ENABLE:near

        extrn       ISMUL:near

        extrn       ISIN:near

        extrn       ICOS:near

@CODE       SEGMENT    BYTE PUBLIC 'CODE'


?GET_POS    PROC NEAR
@CODE       ENDS
        extrn       $LRSSHIFT:near

@CODE       SEGMENT    BYTE PUBLIC 'CODE'
.00:            ;5
    push BP
    mov  BP,SP
    sub  SP,6
    call CK_VARS
    push WORD PTR NAV_LINE
    call far ptr DISABLE
    add  SP,2
    mov  AX,3
    push AX
    call SET_PIN
    add  SP,2
    mov  AX,DRPX+2
    mov  DX,DRPX+4
    mov  LCAR_X,AX
    mov  LCAR_X+2,DX
    mov  AX,DRPY+2
    mov  DX,DRPY+4
    mov  LCAR_Y,AX
    mov  LCAR_Y+2,DX
    mov  AX,ICOURSE
    mov  CAR_POS+4,AX
    mov  AX,0
    mov  ON_STRT,AX
    mov  AX,PSEGUPDT
```

get pos -2-

```
        or    AX,AX
        jne   ?1
        jmp   .0123
?1:
        mov   SI,PSEGUPDT
        mov   AX,+4[SI]
        mov   SI,PSEGUPDT
        sub   AX,[SI]
        push  AX
        mov   SI,PSEGUPDT
        mov   AX,+6[SI]
        mov   SI,PSEGUPDT
        sub   AX,+2[SI]
        push  AX
        call  IATAN2
        add   SP,4
        mov   -6[BP],AX
        mov   -4[BP],AX
        mov   AX,-6[BP]
        sub   AX,CAR_POS+4
        xor   DX,DX
        cmp   DX,0
        jb    09E
        jne   .096
        cmp   AX,-32768
        jbe   .09E
.096:                      ;34
        mov   AX,-4[BP]
        neg   AX
        mov   -4[BP],AX
.09E:                      ;36
        mov   AX,-4[BP]
        cmp   AX,MXDEVDIR
        jae   .0CE
        mov   SI,PSEGUPDT
        mov   AL,+8[SI]
        cbw
        push  AX
        call  PRIORITY
        add   SP,2
        mov   ST_WIDTH,AX
        mov   AX,-6[BP]
        mov   CAR_POS+4,AX
        mov   SI,PSEGUPDT
        mov   AX,+9[SI]
        mov   ON_STRT,AX
        jmp   SHORT .0123
.0CE:                      ;41
        mov   AX,-4[BP]


get pos -3-
```

```
        xor   DX,DX
        push  DX
        push  AX
        mov   AX,-32768
        mov   DX,0
        push  DX
        push  AX
        mov   AX,MXDEVDIR
        xor   DX,DX
        pop   BX
        pop   CX
        sub   BX,AX
        sbb   CX,DX
        pop   AX
        pop   DX
        cmp   CX,DX
        ja    .0123
        jne   .0F5
        cmp   BX,AX
        jae   .0123
.0F5:                      ;41
        mov   SI,PSEGUPDT
        mov   AL,+8[SI]
        cbw
        push  AX
        call  PRIORITY
        add   SP,2
        mov   ST_WIDTH,AX
        mov   AX,-6[BP]
        xor   DX,DX
        add   AX,-32768
        adc   DX,0
        mov   CAR_POS+4,AX
        mov   SI,PSEGUPDT
        mov   AX,+9[SI]
        mov   ON_STRT,AX
.0123:                     ;48
        mov   AX,0
        mov   -2[BP],AX
.0129:                     ;48
        cmp   WORD PTR -2[BP],4
        jl    ?2
        jmp   .01AF
?2:
        lea   SI,IQEPX
        mov   AX,-2[BP]
        shl   AX,1
        shl   AX,1
        add   SI,AX


get pos -4-
```

```
        mov   AX,[SI]
        mov   DX,+2[SI]
        push  DX
        push  AX
        mov   AX,16
        mov   DX,0
        push  DX
        push  AX
        call  $LRSSHIFT
        pop   AX
        pop   DX
        add   AX,LCAR_X
        adc   DX,LCAR_X+2
        lea   SI,LQEP_X
        mov   BX,-2[BP]
        shl   BX,1
        shl   BX,1
        add   SI,BX
        mov   [SI],AX
        mov   +2[SI],DX
        lea   SI,IQEPY
        mov   AX,-2[BP]
        shl   AX,1
        shl   AX,1
        add   SI,AX
        mov   AX,[SI]
        mov   DX,+2[SI]
        push  DX
        push  AX
        mov   AX,16
        mov   DX,0
        push  DX
        push  AX
        call  $LRSSHIFT
        pop   AX
        pop   DX
        add   AX,LCAR_Y
        adc   DX,LCAR_Y+2
        lea   SI,LQEP_Y
        mov   BX,-2[BP]
        shl   BX,1
        shl   BX,1
        add   SI,BX
        mov   [SI],AX
        mov   +2[SI],DX
.01A9:                   ;51
        inc   WORD PTR -2[BP]
        jmp   .0129
.01AF:                   ;51


        get pos -5-
```

90

```
        mov    AX,0
        mov    -2[BP],AX
    .01B5:                    ;53
        cmp    WORD PTR -2[BP],35
        jge    .01DD
        lea    SI,PNAV_MSG
        add    SI,-2[BP]
        mov    AL,[SI]
        cbw
        lea    SI,DSP_MSG
        add    SI,-2[BP]
        mov    [SI],AL
        cbw
        or     AX,AX
        je     .01D6
        jmp    SHORT .01D8
    .01D6:                    ;54
        jmp    SHORT .01DD
    .01D8:                    ;55
        inc    WORD PTR -2[BP]
        jmp    SHORT .01B5
    .01DD:                    ;55
        mov    AX,0
        lea    SI,DSP_MSG
        add    SI,-2[BP]
        mov    [SI],AL
        mov    AX,3
        push   AX
        call   CLR_PIN
        add    SP,2
        push   WORD PTR NAV_LINE
        call   ENABLE
        add    SP,2
        push   WORD PTR CAR_POS+4
        call   ISIN
        add    SP,2
        push   AX
        push   WORD PTR ST_WIDTH
        call   ISMUL
        add    SP,4
        cwd
        mov    BX,LCAR_X
        mov    CX,LCAR_X+2
        sub    BX,AX
        sbb    CX,DX
        mov    LCAR_X,BX
        mov    LCAR_X+2,CX
        mov    CAR_POS,BX
        push   WORD PTR CAR_POS+4


    get pos -6-
```

```
        call ICOS
        add  SP,2
        push AX
        push WORD PTR ST_WIDTH
        call ISMUL
        add  SP,4
        cwd
        mov  BX,LCAR_Y
        mov  CX,LCAR_Y+2
        add  BX,AX
        adc  CX,DX
        mov  LCAR_Y,BX
        mov  LCAR_Y+2,CX
        mov  CAR_POS+2,BX
        mov  SP,BP
        pop  BP
        ret
GET_POS     ENDP

@CODE       ENDS
@CODE       SEGMENT   BYTE PUBLIC 'CODE'
        include   epilogue.h
        end
```

get pos -7-

EP 0 199 780 B1

```
@BIGMODEL EQU    0
        include    prologue.h

        public     INDEX
@CODE       ENDS
@DATAB      SEGMENT
        extrn      STREETS:word

@DATAB      ENDS
@CODE       SEGMENT    BYTE PUBLIC 'CODE'
@CODE       ENDS
        extrn      SELCT_ST:near

        extrn      SEG_MNMX:near

        extrn      CROSS_ST:near

@CODE       SEGMENT    BYTE PUBLIC 'CODE'


INDEX       PROC NEAR
@CODE       ENDS
        extrn      $ISWITCH:near
@CODE       SEGMENT    BYTE PUBLIC 'CODE'
.00:               ;7
    push BP
    mov  BP,SP
    sub  SP,22
    mov  AX,0
    mov  -2[BP],AX
    push WORD PTR +10[BP]
    call SELCT_ST
    add  SP,2
    mov  -16[BP],AX
    or   AX,AX
    jne  ?1
    jmp  .01EE
?1:
    mov  AX,+4[BP]
    mov  -22[BP],AX
    lea  AX,STREETS
    mov  -14[BP],AX
    mov  SI,-16[BP]
    mov  AX,+6[SI]
    shl  AX,1
    mov  DX,-14[BP]
    add  DX,AX
    mov  -14[BP],DX
    mov  AX,-14[BP]


index -1-
```

EP 0 199 780 B1

```
        mov   SI,-16[BP]
        mov   DL,+4[SI]
        and   DX,255
        mov   BX,1
        mov   CX,BX
        shl   DX,CL
        shl   DX,1
        add   AX,DX
        mov   -12[BP],AX
.057:                   ;22
        mov   AX,-14[BP]
        cmp   AX,-12[BP]
        jae   .085
        mov   SI,-14[BP]
        add   WORD PTR -14[BP],2
        mov   AX,[SI]
        mov   SI,+4[BP]
        mov   [SI],AX
        mov   SI,-14[BP]
        add   WORD PTR -14[BP],2
        mov   AX,[SI]
        mov   SI,+4[BP]
        add   WORD PTR +4[BP],12
        mov   +2[SI],AX
        jmp   SHORT .057
.085:                   ;25
        push  WORD PTR +10[BP]
        call  SELCT_ST
        add   SP,2
        mov   -16[BP],AX
        or    AX,AX
        jne   ?2
        jmp   .01EE
?2:
        mov   AX,+4[BP]
        mov   -20[BP],AX
        lea   AX,STREETS
        mov   -14[BP],AX
        mov   SI,-16[BP]
        mov   AX,+6[SI]
        shl   AX,1
        mov   DX,-14[BP]
        add   DX,AX
        mov   -14[BP],DX
        mov   AX,-14[BP]
        mov   SI,-16[BP]
        mov   DL,+4[SI]
        and   DX,255
        mov   BX,1


        index -2-
```

94

```
        mov   CX,BX
        shl   DX,CL
        shl   DX,1
        add   AX,DX
        mov   -12[BP],AX
.0D0:                     ;31
        mov   AX,-14[BP]
        cmp   AX,-12[BP]
        jae   .0FE
        mov   SI,-14[BP]
        add   WORD PTR -14[BP],2
        mov   AX,[SI]
        mov   SI,+4[BP]
        mov   [SI],AX
        mov   SI,-14[BP]
        add   WORD PTR -14[BP],2
        mov   AX,[SI]
        mov   SI,+4[BP]
        add   WORD PTR +4[BP],12
        mov   +2[SI],AX
        jmp   SHORT .0D0
.0FE:                     ;34
        mov   AX,+4[BP]
        mov   -18[BP],AX
        mov   AX,-20[BP]
        mov   +4[BP],AX
.010A:                    ;37
        add   WORD PTR +4[BP],12
        mov   AX,+4[BP]
        cmp   AX,-18[BP]
        jae   .0122
        push  WORD PTR +4[BP]
        call  SEG_MNMX
        add   SP,2
        jmp   SHORT .010A
.0122:                    ;39
        add   WORD PTR -22[BP],12
        mov   AX,-22[BP]
        cmp   AX,-20[BP]
        jb    ?3
        jmp   .01EE
?3:
        push  WORD PTR -22[BP]
        call  SEG_MNMX
        add   SP,2
        mov   SI,-22[BP]
        mov   AX,+4[SI]
        mov   -10[BP],AX
        mov   SI,-22[BP]
```

index -3-

```
        mov   AX,+6[SI]
        mov   -8[BP],AX
        mov   SI,-22[BP]
        mov   AX,+8[SI]
        mov   -6[BP],AX
        mov   SI,-22[BP]
        mov   AX,+10[SI]
        mov   -4[BP],AX
        mov   AX,-20[BP]
        mov   +4[BP],AX
.0165:                     ;46
        add   WORD PTR +4[BP],12
        mov   AX,+4[BP]
        cmp   AX,-18[BP]
        jae   .01E2
        mov   SI,+4[BP]
        mov   AX,+4[SI]
        cmp   AX,-8[BP]
        jle   .017E
        jmp   SHORT .018A
.017F:                     ;50
        mov   SI,+4[BP]
        mov   AX,+6[SI]
        cmp   AX,-10[BP]
        jge   .018C
.018A:                     ;50
        jmp   SHORT .0197
.018C:                     ;50
        mov   SI,+4[BP]
        mov   AX,+8[SI]
        cmp   AX,-4[BP]
        jle   .0199
.0197:                     ;50
        jmp   SHORT .01A4
.0199:                     ;50
        mov   SI,+4[BP]
        mov   AX,+10[SI]
        cmp   AX,-6[BP]
        jge   .01A6
.01A4:                     ;50
        jmp   SHORT .0165
.01A7:                     ;51
        push WORD PTR +8[BP]
        push WORD PTR +6[BP]
        push WORD PTR +4[BP]
        push WORD PTR -22[BP]
        call CROSS_ST
        add   SP,8
        push AX


index -4-
```

```
            jmp    SHORT .01CD
    .01BB:                  ;53
            jmp    SHORT .0165
    .01BD:                  ;55
            mov    AX,1
            mov    -2[BP],AX
            jmp    SHORT .01E0
    .01C5:                  ;58
            mov    AX,2
            mov    -2[BP],AX
            jmp    SHORT .0165
    .01CD:                  ;61
            call   $ISWITCH
            dw     3
            dw     2
            dw     2
            dw     0
            dw     .01E0
            dw     .01C5
            dw     .01BD
            dw     .01BB
    .01E0:                  ;61
            jmp    SHORT .01E2
    .01E2:                  ;63
            cmp    WORD PTR -2[BP],1
            jne    .01EB
            jmp    SHORT .01EE
    .01EB:                  ;65
            jmp    .0122
    .01EE:                  ;68
            mov    AX,-2[BP]
            mov    SP,BP
            pop    BP
            ret
    INDEX      ENDP

    @CODE      ENDS
    @CODE      SEGMENT   BYTE PUBLIC 'CODE'
            include   epilogue.h
            end
```

index -5-

```
@BIGMODEL EQU    0
         include  prologue.h

         public   LB_MAP
@CODE        ENDS
@DATAB       SEGMENT
         extrn    ROADS:word

         public   NX_ROAD
         public   FND_RD
         extrn    LB_SAV1:word

         extrn    LB_SAV2:word

         extrn    POLD_LBS:word

         public   NX_LABEL
         extrn    COL_GRID:word

         extrn    XS1_ID:word

         extrn    XS2_ID:word

         extrn    XS1_DIST:word

         extrn    XS2_DIST:word

         extrn    HOME:word

         extrn    ON_STRT:word

         extrn    LB_ADDED:word

         public   LB_ROAD
         public   FND_LB
@DATAB       ENDS
@CODE        SEGMENT   BYTE PUBLIC 'CODE'
@CODE        ENDS
         extrn    LB_STRT:near

         extrn    PRIOR_LB:near

         extrn    MOVMEM:near

@CODE        SEGMENT   BYTE PUBLIC 'CODE'


LB_MAP       PROC NEAR
.00:                   ;5


lb map -1-
```

```
        push BP
        mov  BP,SP
        sub  SP,20
        mov  AX,0
        mov  -4[BP],AX
.0C:             ;18
        cmp  WORD PTR -4[BP],32
        jge  .030
.013:                    ;19
        mov  AX,0
        mov  DX,0
        lea  SI,COL_GRID
        mov  BX,-4[BP]
        inc  WORD PTR -4[BP]
        shl  BX,1
        shl  BX,1
        add  SI,BX
        mov  [SI],AX
        mov  +2[SI],DX
        jmp  SHORT .0C
.030:                    ;19
        mov  AX,0
        mov  LB_ADDED,AX
        lea  AX,LB_SAV1
        mov  DX,POLD_LBS
        cmp  DX,AX
        jne  .049
        lea  AX,LB_SAV2
        jmp  SHORT .04D
.049:                    ;21
        lea  AX,LB_SAV1
.04D:                    ;21
        mov  -16[BP],AX
        mov  -14[BP],AX
        mov  AX,-16[BP]
        add  AX,315
        mov  -12[BP],AX
        push WORD PTR -14[BP]
        push WORD PTR POLD_LBS
        push WORD PTR XS1_ID
        call LB_ROAD
        add  SP,7
        or   AX,AX
        je   .070
        add  WORD PTR -14[BP],63
.077:                    ;24
        push WORD PTR -14[BP]
        push WORD PTR POLD_LBS
        push WORD PTR XS2_ID
```

lb map -2-

```
        call  LB_ROAD
        add   SP,6
        or    AX,AX
        je    .091
        add   WORD PTR -14[BP],63
.091:                     ;25
        lea   AX,ROADS
        sub   AX,5
        mov   -20[BP],AX
.09B:                     ;26
        add   WORD PTR -20[BP],5
        mov   SI,-20[BP]
        mov   AX,[SI]
        mov   -8[BP],AX
        or    AX,AX
        je    .0E2
        mov   SI,-20[BP]
        mov   AX,+3[SI]
        cmp   AX,-32704
        jae   .0BA
        jmp   SHORT .0C3
.0BA:                     ;28
        mov   AX,-8[BP]
        cmp   AX,XS1_ID
        jne   .0C5
.0C3:                     ;28
        jmp   SHORT .0CE
.0C5:                     ;28
        mov   AX,-8[BP]
        cmp   AX,XS2_ID
        jne   .0E0
.0CE:                     ;28
        mov   AX,-1
        mov   SI,-20[BP]
        mov   +2[SI],AL
        mov   AX,0
        mov   SI,-20[BP]
        mov   +3[SI],AX
.0E0:                     ;32
        jmp   SHORT .09B
.0E2:                     ;32
        mov   AX,6
        mov   -6[BP],AX
        call  NX_ROAD
        mov   -18[BP],AX
        mov   SI,AX
        mov   AL,+2[SI]
        and   AX,255
        mov   -2[BP],AL


        lb map -3-
```

```
        push WORD PTR POLD_LBS
        call NX_LABEL
        add  SP,2
        mov  -10[BP],AX
        mov  SI,AX
        mov  AL,+2[SI]
        and  AX,255
        mov  -1[BP],AL
.0113:                      ;36
        mov  AX,-6[BP]
        or   AX,AX
        jne  ?1
        jmp  .0244
?1:
        mov  AX,-14[BP]
        cmp  AX,-12[BP]
        jb   ?2
        jmp  .0244
?2:
        mov  AL,-1[BP]
        and  AX,255
        and  AX,255
        mov  DL,-2[BP]
        and  DX,255
        and  DX,255
        cmp  DX,AX
        jae  .0183
        dec  WORD PTR -6[BP]
        push WORD PTR -14[BP]
        mov  SI,-18[BP]
        push WORD PTR [SI]
        call LB_STRT
        add  SP,4
        or   AX,AX
        je   .015C
        add  WORD PTR -14[BP],63
.015C:                      ;40
        mov  AX,-1
        mov  SI,-18[BP]
        mov  +2[SI],AL
        mov  AX,0
        mov  SI,-18[BP]
        mov  +3[SI],AX
        call NX_ROAD
        mov  -18[BP],AX
        mov  SI,AX
        mov  AL,+2[SI]
        and  AX,255
        mov  -2[BP],AL


lb map -4-
```

```
        jmp   .0241
.0183:                    ;44
        mov   AL,-1[BP]
        and   AX,255
        and   AX,255
        cmp   AX,255
        jne   .0197
        jmp   .0244
.0197:                    ;46
        push  WORD PTR -10[BP]
        call  PRIOR_LB
        add   SP,2
        or    AX,AX
        je    .0217
        mov   AX,63
        push  AX
        mov   AX,-14[BP]
        add   WORD PTR -14[BP],63
        push  AX
        push  WORD PTR -10[BP]
        call  MOVMEM
        add   SP,6
        and   AX,255
        and   AX,255
        mov   DL,-2[BP]
        and   DX,255
        and   DX,255
        cmp   DX,AX
        jne   .0217
        mov   SI,-10[BP]
        push  WORD PTR [SI]
        lea   AX,ROADS
        push  AX
        call  FND_RD
        add   SP,4
        mov   -20[BP],AX
        or    AX,AX
        je    .0217
        mov   AX,-1
        mov   SI,-20[BP]
        mov   +2[SI],AL
        mov   AX,0
        mov   SI,-20[BP]
        mov   +3[SI],AX
        mov   AX,-20[BP]
        cmp   AX,-18[BP]
        jne   .0217
        call  NX_ROAD
        mov   -18[BP],AX


        lb map -5-
```

```
        mov   SI,AX
        mov   AL,+2[SI]
        and   AX,255
        mov   -2[BP],AL
.0217:                    ;56
        mov   AX,-1
        mov   SI,-10[BP]
        mov   +2[SI],AL
        mov   AX,0
        mov   SI,-10[BP]
        mov   [SI],AX
        push  WORD PTR POLD_LBS
        call  far ptr NX_LABEL
        add   SP,2
        mov   -10[BP],AX
        mov   SI,AX
        mov   AL,+2[SI]
        and   AX,255
        mov   -1[BP],AL
.0241:                    ;59
        jmp   .0113
.0244:                    ;61
        mov   AX,-14[BP]
        cmp   AX,-12[BP]
        jb    ?3
        jmp   .02CB
        mov   AL,-1[BP]
        and   AX,255
        cmp   AX,255
        je    .02AF
        push  WORD PTR -10[BP]
        call  PRIOR_LB
        add   SP,2
        or    AX,AX
        je    .0283
        mov   AX,63
        push  AX
        mov   AX,-14[BP]
        add   WORD PTR -14[BP],63
        push  AX
        push  WORD PTR -10[BP]
        call  MOVMEM
        add   SP,6
.0283:                    ;65
        mov   AX,-1
        mov   SI,-10[BP]
        mov   +2[SI],AL
        mov   AX,0
        mov   SI,-10[BP]


        lb map -6-
```

```
        mov   [SI],AX
        push  WORD PTR POLD_LBS
        call  NX_LABEL
        add   SP,2
        mov   -10[BP],AX
        mov   SI,AX
        mov   AL,+2[SI]
        and   AX,255
        mov   -1[BP],AL
        jmp   SHORT .02C5
.02AF:                      ;69
        mov   AX,-1
        mov   SI,-14[BP]
        mov   +2[SI],AL
        mov   AX,0
        mov   SI,-14[BP]
        add   WORD PTR -14[BP],63
        mov   [SI],AX
.02C5:                      ;72
        jmp   SHORT .0244
.02C8:                      ;73
        mov   AX,-16[BP]
        mov   POLD_LBS,AX
        mov   SP,BP
        pop   BP
        ret
LB_MAP      ENDP


NX_ROAD     PROC NEAR
.02D3:                      ;79
        push  BP
        mov   BP,SP
        sub   SP,8
        mov   AX,ROADS
        mov   -8[BP],AX
        mov   -6[BP],AX
        mov   SI,AX
        mov   AX,+3[SI]
        mov   -4[BP],AX
        mov   SI,-6[BP]
        mov   AL,+2[SI]
        and   AX,255
        mov   -2[BP],AL
.02F8:                      ;88
        add   WORD PTR -8[BP],5
        mov   SI,-8[BP]
        mov   AX,[SI]
        or    AX,AX
        je    .036D


lb map -7-
```

```
        mov    AL,-2[BP]
        and    AX,255
        mov    SI,-8[BP]
        mov    DL,+2[SI]
        and    DX,255
        mov    -1[BP],DL
        and    DX,255
        cmp    DX,AX
        jbe    .0328
        jmp    SHORT .034D
.0328:                     ;90
        mov    AL,-2[BP]
        and    AX,255
        and    DX,255
        mov    DL,-1[BP]
        and    DX,255
        and    DX,255
        cmp    DX,AX
        jne    .03FA
        mov    SI,-8[BP]
        mov    AX,+3[SI]   ·
        cmp    AX,-4[BP]
        ja     .02FA              ·
.034D:                     ;90
        jmp    SHORT .02F8
.03FA:                     ;92
        mov    AX,-8[BP]
        mov    -6[BP],AX
        mov    SI,AX
        mov    AX,+3[SI]
        mov    -4[BP],AX
        mov    AL,-1[BP]
        and    AX,255
        and    AX,255
        mov    -2[BP],AL
        jmp    SHORT .02F8
.0360:                     ;94
        mov    AX,-6[BP]
        mov    SP,BP
        pop    BP
        ret
NX_ROAD    ENDP

FND_RD     PROC NEAR
.0374:                     ;101
        push BP
        mov    BP,SP
        add    WORD PTR +4[BP],-5
.037C:                     ;103


lb map -8-
```

```
        add   WORD PTR +4[BP],5
        mov   SI,+6[BP]
        mov   AX,[SI]
        or    AX,AX
        je    .0396
        mov   SI,+4[BP]
        mov   AX,[SI]
        cmp   AX,+6[BP]
        je    .0396
        jmp   SHORT .037C
.0396:                    ;104
        mov   SI,+4[BP]
        mov   AX,[SI]
        or    AX,AX
        je    .03A6
        mov   AX,+4[BP]
        mov   SP,BP
        pop   BP
        ret
.03A6:                    ;107
        mov   AX,0
        mov   SP,BP
        pop   BP
        ret
.03AD:                    ;108
        mov   SP,BP
        pop   BP
        ret
FND_RD     ENDP

LB_ROAD    PROC NEAR
.03B1:                    ;114
        push  BP
        mov   BP,SP
        sub   SP,4
        push  WORD PTR +4[BP]
        push  WORD PTR +6[BP]
        call  FND_LB
        add   SP,4
        mov   -2[BP],AX
        or    AX,AX
        je    .0410
        push  WORD PTR -2[BP]
        call  PRIOR_LB
        add   SP,2
        or    AX,AX
        je    .03FF
        mov   AX,63
        push  AX


        lb map -9-
```

```
          push WORD PTR +8[BP]
          push WORD PTR -2[BP]
          call MOVMEM
          add  SP,6
          mov  AX,-1
          mov  SI,-2[BP]
          mov  +2[SI],AL
          mov  AX,0
          mov  SI,-2[BP]
          mov  [SI],AX
          mov  AX,1
          mov  SP,BP
          pop  BP
          ret
.03FF:                    ;126
          mov  AX,-1
          mov  SI,-2[BP]
          mov  +2[SI],AL
          mov  AX,0
          mov  SI,-2[BP]
          mov  [SI],AX
          push WORD PTR +8[BP]
          push WORD PTR +4[BP]
          call LB_STRT
          add  SP,4
          mov  SP,BP
          pop  BP
          ret
LB_ROAD   ENDP

NX_LABEL  PROC NEAR
.0420:                    ;136
          push BP
          mov  BP,SP
          sub  SP,6
          mov  AX,+6[BP]
          mov  -6[BP],AX
          mov  SI,AX
          mov  AL,+2[SI]
          and  AX,255
          mov  -2[BP],AL
          mov  AX,5
          mov  -4[BP],AX
.043E:                    ;143
          dec  WORD PTR -4[BP]
          mov  AX,-4[BP]
          or   AX,AX
          je   .047C
          mov  AL,-2[BP]


lb map -10-
```

```
        and   AX,255
        and   AX,255
        add   WORD PTR +4[BP],63
        mov   SI,+4[BP]
        mov   DL,+2[SI]
        and   DX,255
        cmp   DX,AX
        jb    .0468
        jmp   SHORT .043E
.0468:                ;145
        mov   AX,+6[BP]
        mov   -6[BP],AX
        mov   SI,AX
        mov   AL,+2[SI]
        and   AX,255
        mov   -2[BP],AL
        jmp   SHORT .043F
.047C:                ;146
        mov   AX,-6[BP]
        mov   SP,BP
        pop   BP
        ret
NX_LABEL  ENDP

FND_LB    PROC NEAR
.0483:                ;153
        push  BP
        mov   BP,SP
        sub   SP,2
        mov   AX,+6[BP]
        or    AX,AX
        je    .0492
        jmp   SHORT .0499
.0492:                ;156
        mov   AX,0
        mov   SP,BP
        pop   BP
        ret
.0499:                ;157
        mov   AX,6
        mov   -2[BP],AX
.049F:                ;158
        dec   WORD PTR -2[BP]
        mov   AX,-2[BP]
        or    AX,AX
        je    .04BC
        mov   SI,+4[BP]
        add   WORD PTR +6[BP],63
        mov   AX,[SI]
```

lb map -11-

```
        cmp   AX,+6[BP]
        jne   .04BA
        jmp   SHORT .04BC
.04BA:                    ;160
        jmp   SHORT .049F
.04BC:                    ;160
        mov   AX,-2[BP]
        or    AX,AX
        je    .04CD
        mov   AX,+6[BP]
        sub   AX,63
        mov   SP,BP
        pop   BP
        ret
.04CD:                    ;163
        mov   AX,0
        mov   SP,BP
        pop   BP
        ret
.04D4:                    ;164
        mov   SP,BP
        pop   BP
        ret
FND_LB      ENDP

@CODE       ENDS
@CODE       SEGMENT   BYTE PUBLIC 'CODE'
        include   epilogue.h
        end
```

lb map -12-

```
@BIGMODEL EQU   0
      include   prologue.h

      public    LB_SEGMT
@CODE       ENDS
@DATAB      SEGMENT
      extrn     STROKE:word

      extrn     LB_ADDED:word

@DATAB      ENDS
@CODE       SEGMENT   BYTE PUBLIC 'CODE'
@CODE       ENDS
      extrn     IATAN2:near

      extrn     ISIN:near

      extrn     ICOS:near

      extrn     ZM_NODE:near

      extrn     RT_VECTR:near

      extrn     COL_TEST:near

      extrn     DSP_NAME:near

@CODE       SEGMENT   BYTE PUBLIC 'CODE'


LB_SEGMT    PROC NEAR
.00:                  ;6
      push BP
      mov  BP,SP
      sub  SP,14
      mov  AX,+8[BP]
      sub  AX,+4[BP]
      push AX
      mov  AX,+10[BP]
      sub  AX,+6[BP]
      push AX
      call IATAN2
      add  SP,4
      mov  -14[BP],AX
      cmp  AX,16384
      jbe  .043
      cmp  WORD PTR -14[BP],-16384
      jae  .043
      mov  AX,0


lb segmt -1-
```

```
        mov   -12[BP],AX
        mov   AX,+8[BP]
        mov   -8[BP],AX
        mov   AX,+10[BP]
        mov   -6[BP],AX
        add   WORD PTR -14[BP],-32768
        jmp   SHORT .055
.043:                      ;19
        mov   AX,1
        mov   -12[BP],AX
        mov   AX,+4[BP]
        mov   -8[BP],AX
        mov   AX,+6[BP]
        mov   -6[BP],AX
.055:                      ;23
        push WORD PTR -14[BP]
        call ISIN
        add   SP,2
        mov   STROKE+2,AX
        push WORD PTR -14[BP]
        call ICOS
        add   SP,2
        mov   STROKE+4,AX
        lea   SI,-6[BP]
        push SI
        lea   SI,-8[BP]
        push SI
        call ZM_NODE
        add   SP,4
        lea   SI,-2[BP]
        push SI
        lea   SI,-4[BP]
        push SI
        lea   SI,STROKE
        push SI
        mov   AX,8
        push AX
        mov   AL,16
        mov   -10[BP],AX
        push AX
        call RT_VECTR
        add   SP,10
        mov   AX,0
        push AX
        push WORD PTR +12[BP]
        mov   AX,-2[BP]
        mov   DX,-6[BP]
        add   DX,AX
        mov   -6[BP],DX


        lb segmt -2-
```

111

```
          push  DX
          mov   AX,-4[BP]
          mov   DX,-8[BP]
          add   DX,AX
          mov   -8[BP],DX
          push  DX
          call  COL_TEST
          add   SP,8
          or    AX,AX
          je    .0C5
          jmp   SHORT .0CC
     .0C5:                  ;28
          mov   AX,0
          mov   SP,BP
          pop   BP
          ret
     .0CC:                  ;30
          mov   AX,1
          mov   LB_ADDED,AX
          mov   AL,7
          push  AX
          push  WORD PTR +14[BP]
          push  WORD PTR -6[BP]
          push  WORD PTR -8[BP]
          call  DSP_NAME
          add   SP,8
          mov   AX,-12[BP]
          or    AX,AX
          je    .0F3
          mov   AX,-10[BP]
          mov   SP,BP
          pop   BP
          ret
     .0F3:                  ;34
          mov   AX,-10[BP]
          neg   AX
          mov   SP,BP
          pop   BP
          ret
     .0FC:                  ;35
          mov   SP,BP
          pop   BP
          ret
     LB_SEGMT   ENDP

     @CODE      ENDS
     @CODE      SEGMENT   BYTE PUBLIC 'CODE'
          include   epilogue.h
          end


     lb segmt -3-
```

```
@BIGMODEL EQU    0
         include  prologue.h
         public   LB_STRT
         public   MAX_VCTR
@CODE      ENDS
@DATAB     SEGMENT
         extrn      VECTORS:word

         extrn      REC_PTRS:word

         extrn      STROKE:word

         extrn      CRS:word

         extrn      CEN_POS:word

         extrn      SEG_PLOT:word

         extrn      SEG_DS:word

         extrn      ZOOM_TBL:word

         extrn      ZOOMF_PL:word

         extrn      ZOOMF_DB:word

         extrn      NAV_LINE:word

         extrn      BUF_DB:word

@DATAB     ENDS
@CODE      SEGMENT   BYTE PUBLIC 'CODE'
@CODE      ENDS
         extrn      DISABLE:near

         extrn      MOVBLOCK:near

         extrn      SRT_STRT:near

         extrn      ENABLE:near

         extrn      LB_SEGMT:near

         extrn      RT_VECTR:near

@CODE      SEGMENT   BYTE PUBLIC 'CODE'




         lb strt -1-
```

```
LB_STRT     PROC NEAR
.00:                 ;7
     push BP
     mov  BP,SP
     sub  SP,42
     mov  AX,0
     lea  SI,-51[BP]
     mov  [SI],AL
     lea  AX,VECTORS
     sub  AX,18
     mov  -92[BP],AX
     lea  AX,VECTORS
     add  AX,72
     mov  -90[BP],AX
.022:                  ;32
     add  WORD PTR -92[BP],18
     mov  AX,-92[BP]
     cmp  AX,-90[BP]
     jae  .039
     mov  AX,0
     mov  SI,-92[BP]
     mov  [SI],AX
     jmp  SHORT .022.
.039:                  ;33
     lea  AX,BUF_DB
     mov  -88[BP],AX
     lea  AX,REC_PTRS
     mov  -64[BP],AX
.047:                  ;36
     mov  SI,-64[BP]
     add  WORD PTR -64[BP],2
     mov  AX,[SI]
     mov  -94[BP],AX
     or   AX,AX
     jne  ?1
     jmp  .0237
?1:
     mov  SI,-94[BP]
     mov  AX,[SI]
     mov  -72[BP],AX
     mov  SI,-94[BP]
     mov  AX,+2[SI]
     mov  -66[BP].AX
     push WORD PTR NAV_LINE
     call DISABLE
     add  SP,2
     mov  SI,-94[BP]
     push WORD PTR +4[SI]
     push WORD PTR SEG_DS


lb strt -2-
```

```
        push WORD PTR -88[BP]
        push QORD PTR SEG_PLOT
        mov  SI,-94[BP]
        push WORD PTR +6[SI]
        call MOVBLOCK
        add  SP,10
        mov  AX,-88[BP]
        mov  SI,-88[BP]
        add  AX,[SI]
        mov  -86[BP],AX
        mov  AX,-86[BP]
        dec  WORD PTR -86[BP]
        mov  SI,-88[BP]
        add  AX,+10[SI]
        mov  -84[BP],AX
        mov  AX,-88[BP]
        mov  SI,-88[BP]
        add  AX,+2[SI]
        mov  -82[BP],AX
        mov  AX,-82[BP]
        add  WORD PTR -82[BP],-8
    .   lea  SI,ZOOM_TBL
        mov  DX,ZOOMF_PL
        add  DX,2
        shl  DX,1
        add  SI,DX
        mov  DX,[SI]
        cmp  DX,ZOOMF_DB
        jle  .0E0
        mov  SI,-88[BP]
        mov  DX,+10[SI]
        jmp  SHORT .01E6
.0E0:                    ;46
        mov  SI,-88[BP]
        mov  DX,+12[SI]
.0E6:                    ;46
        shl  DX,1
        shl  DX,1
        shl  DX,1
        add  AX,DX
        mov  -80[BP],AX
        mov  AX,-88[BP]
        mov  SI,-88[BP]
        add  AX,+4[SI]
        mov  -78[BP],AX
        mov  AX,-88[BP]
        mov  SI,-88[BP]
        add  AX,+6[SI]
        mov  -74[BP],AX


        lb strt -3-
```

```
        mov   SI,-88[BP]
        mov   AL,+18[SI]
        and   AX,255
        or    AX,AX
        je    .011C
        mov   AX,6
        jmp   SHORT .011F
.011C:                   ;50
        mov   AX,4
.011F:                   ;50
        mov   -68[BP],AX
.0122:                   ;51
        add   WORD PTR -82[BP],8
        mov   AX,-82[BP]
        cmp   AX,-80[BP]
        jb    ?2
        jmp   .022A
?2:           .
        inc   WORD PTR -86[BP]
        mov   SI,-82[BP]
        mov   AX,[SI]
        cmp   AX,+4[BP]
        je    .0141
        jmp   SHORT .0122
.0141:                   ;54
        mov   AX,-86[BP]
        cmp   AX,-84[BP]
        jae   .0194
        mov   SI,-86[BP]
        mov   AL,[SI]
        and   AX,255
        or    AX,AX
        je    .0194
        mov   AX,-78[BP]
        push  AX
        mov   BX,14
        mov   SI,-86[BP]
        mov   AL,[SI]
        and   AX,255
        sub   AX,1
        mul   BX
        pop   SI
        add   SI,AX
        mov   -76[BP],SI
        mov   SI,-76[BP]
        mov   AX,[SI]
        cmp   AX,-72[BP]
        jae   .017D
        jmp   SHORT .0192


        lb strt -4-
```

```
.017D:                      ;58
      mov  SI,-76[BP]
      mov  AX,[SI]
      cmp  AX,-72[BP]
      jne  .0194
      mov  SI,-76[BP]
      mov  AX,+2[SI]
      cmp  AX,-66[BP]
      jge  .0194
.0192:                      ;58
      jmp  SHORT .0122
.194:                       ;60
      lea  SI,-51[BP]
      mov  AL,[SI]
      cbw
      or   AX,AX
      je   .01A0
      jmp  SHORT .01F5
.01A0:                      ;60
      mov  SI,-82[BP]
      mov  AL,+3[SI]
      and  AX,255
      and  AX,63
      mov  -54[BP],AL
      mov  AX,-88[BP]
      mov  SI,-88[BP]
      add  AX,+8[SI]
      mov  SI,-82[BP]
      add  AX,+6[SI]
      mov  -53[BP],AX
      mov  AX,1
      mov  -70[BP],AX
.01C8:                      ;65
      mov  SI,-53[BP]
      inc  WORD PTR -53[BP]
      mov  AL,[SI]
      cbw
      lea  SI,-51[BP]
      inc  WORD PTR -70[BP]
      mov  DX,-70[BP]
      add  SI,DX
      mov  [SI],AL
      cbw
      or   AX,AX
      je   .01E5
      jmp  SHORT .01C8
.01E5:                      ;66
      mov  AX,-70[BP]
      or   AX,AX


lb strt -5-
```

```
        je    .01EE
        jmp   SHORT .01F5
.01EE:                  ;67
        mov   AX,0
        mov   SP,BP
        pop   BP
        ret
.01F5:                  ;69
        mov   SI,-82[BP]
        mov   AL,+2[SI]
        and   AX,255
        push  AX
        mov   SI,-88[BP]
        mov   AL,+18[SI]
        and   AX,255
        or    AX,AX
        je    .0213
        mov   AX,6
        jmp   SHORT .216
.0213:                  ;72
        mov   AX,4
.216:                   ;72
        push  AX
        mov   AX,-74[BP]
        mov   SI,-82[BP]
        add   AX,+4[SI]
        push  AX
        call  SRT_STRT
        add   SP,6
        jmp   .0122
.022A:                  ;73
        push  WORD PTR NAV_LINE
        call  ENABLE
        add   SP,2
        jmp   .047
.0237:                  ;76
        call  MAX_VCTR
        mov   -92[BP],AX
        or    AX,AX
        je    .0279
        lea   AX,-51[BP]
        push  AX
        push  WORD PTR -70[BP]
        mov   SI,-92[BP]
        push  WORD PTR +16[SI]
        mov   SI,-92[BP]
        push  WORD PTR +14[SI]
        mov   SI,-92[BP]
        push  WORD PTR +12[SI]


lb strt -6-
```

```
        mov   SI,-92[BP]
        push  WORD PTR +10[SI]
        call  LB_SEGMT
        add   SP,12
        mov   -58[BP],AX
        or    AX,AX
        je    .026F
        jmp   SHORT .0279
.026F:                      ;80
        mov   AX,0
        mov   SI,-92[BP]
        mov   [SI],AX
        jmp   SHORT .0237
.0279:                      ;81
        mov   AX,-92[BP]
        or    AX,AX
        je    .0282
        jmp   SHORT .0289
.0282:                      ;82
        mov   AX,0
        mov   SP,BP
        pop   BP
        ret
.0289:                      ;83
        mov   AX,+4[BP]
        mov   SI,+6[BP]
        mov   [SI],AX
        mov   AL,-54[BP]
        and   AX,255
        and   AX,255
        mov   SI,+6[BP]
        mov   +2[SI],AL
        lea   AX,-51[BP]
        mov   -53[BP],AX
        mov   AX,0
        mov   -70[BP],AX
.02AE:                      ;87
        mov   SI,-53[BP]
        inc   WORD PTR -53[BP]
        mov   AL,[SI]
        cbw
        mov   SI,+6[BP]
        lea   DX,+3[SI]
        mov   BX,-70[BP]
        inc   WORD PTR -70[BP]
        add   DX,BX
        mov   [SI],AL
        cbw
        or    AX,AX
```

lb strt -7-

119

```
            je    .02D0
            jmp   SHORT .02AE
      .02D0:                  ;88
            mov   AX,STROKE+2
            neg   AX
            mov   STROKE+2,AX
            cmp   WORD PTR -58[BP],0
            jg    ?3
            jmp   .035D
      ?3:
            lea   SI,-60[BP]
            push  SI
            lea   SI,-62[BP]
            push  SI
            lea   SI,CRS
            push  SI
            mov   SI,-92[BP]
            mov   AX,+4[SI]
            mov   SI,+6[BP]
            mov   +57[SI],AX
            sub   AX,CEN_POS+2
            push  AX
            mov   SI,-92[BP]
            mov   AX,+2[SI]
            mov   SI,+6[BP]
            mov   +55[SI],AX
            sub   AX,CEN_POS
            push  AX
            call  RT_VECTR
            add   SP,10
            lea   SI,-56[BP]
            push  SI
            mov   AX,+6[BP]
            add   AX,53
            push  AX
            lea   SI,STROKE
            push  SI
            mov   SI,-92[BP]
            mov   AX,+12[BP]
            sub   AX,-60[BP]
            push  AX
            mov   SI,-92[BP]
            mov   AX,+10[SI]
            sub   AX,-62[BP]
            push  AX
            call  RT_VECTR
            add   SP,10
            mov   SI,-92[BP]
            mov   AX,+6[SI]


      lb strt -8-
```

```
        mov   SI,+6[BP]
        mov   +59[SI],AX
        mov   SI,-92[BP]
        mov   AX,+8[SI]
        mov   SI,+6[BP]
        mov   +61[SI],AX
        jmp   SHORT .03D4
.035D:                    ;100
        lea   SI,-60[BP]
        push  SI
        lea   SI,-62[BP]
        push  SI
        lea   SI,CRS
        push  SI
        mov   SI,-92[BP]
        mov   AX,+8[SI]
        mov   SI,+6[BP]
        mov   +57[SI],AX
        sub   AX,CEN_POS+2
        push  AX
        mov   SI,-92[BP]
        mov   AX,+6[SI]
        mov   SI,+6[BP]
        mov   +55[SI],AX
        sub   AX,CEN_POS
        push  AX
        call  RT_VECTR
        add   SP,10
        lea   SI,-56[BP]
        push  SI
        mov   AX,+6[BP]
        add   AX,53
        push  AX
        lea   SI,STROKE
        push  SI
        mov   SI,-92[BP]
        mov   AX,+16[SI]
        sub   AX,-60[BP]
        push  AX
        mov   SI,-92[BP]
        mov   AX,+14[SI]
        sub   AX,-62[BP]
        push  AX
        call  RT_VECTR
        add   SP,10
        mov   SI,-92[BP]
        mov   AX,+2[SI]
        mov   SI,+6[BP]
        mov   +59[SI],AX


        lb strt -9-
```

```
        mov   SI,-92[BP]
        mov   AX,+4[SI]
        mov   SI,+6[BP]
        mov   +6[SI],AX
.03D4:                    ;109
        mov   AX,1
        mov   SP,BP
        pop   BP
        ret
LB_STRT ENDP
MAX_VCTR   PROC NEAR
.03D8:                    ;114
        push  BP
        mov   BP,SP
        sub   SP,8
        mov   AX,0
        mov   -8[BP],AX
        mov   -2[BP],AX
        lea   AX,VECTORS
        sub   AX,18
        mov   -6[BP],AX
        lea   AX,VECTORS
        add   AX,72
        mov   -4[BP],AX
·.03FE:                   ;124
        add   WORD PTR -6[BP],18
        mov   AX,-6[BP]
        cmp   AX,-4[BP]
        jae   .0426
        mov   SI,-6[BP]
        mov   AX,[SI]
        cmp   AX,-2[BP]
        jg    .0417
        jmp   SHORT .03FE
.0417:                    ;126
        mov   AX,-6[BP]
        mov   -8[BP],AX
        mov   SI,AX
        mov   AX,[SI]
        mov   -2[BP],AX
        jmp   SHORT .03FE
.0426:                    ;127
        mov   AX,-8[BP]
        mov   SP,BP
        pop   BP
        ret
MAX_VCTR   ENDP



        lb strt -10-
```

```
@CODE      ENDS
@CODE      SEGMENT   BYTE PUBLIC 'CODE'
       include   epilogue.h
       end
```

lb strt -11-

```
@BIGMODEL EQU   0
        include   prologue.h
@CODE       ENDS
@DATAU      SEGMENT
        db    66,85
        db    84,84,79,78,32,37,100,32,80,82,69,83,83,69,68,0
@DATAC ENDS
@CODE       SEGMENT   BYTE PUBLIC 'CODE'
@CODE       ENDS
@DATAB      SEGMENT
        db    2 DUP (?)

        public    MAP_RD
@DATAU      ENDS
@DATAB      SEGMENT
        extrn     LCEN_X:word

        extrn     LCEN_Y:word

        extrn     LCAR_X:word

        extrn     LCAR_Y:word

        extrn     LMARK_X:word

        extrn     LMARK_Y:word

        public    SCAN_COS
        public    SCAN_SIN
        extrn     SW_STAT:word
        extrn     CMD_STAT:word
        extrn     HOME:word

        extrn     NORTH:word

        extrn     DSP_QEP:word

        extrn     ZOOMF_PL:word

        extrn     ERR_MSG:word

        extrn     CEN_POS:word

        extrn     CLP_BNDY:word

        extrn     ZOOMF_DB:word




map rd -1-
```

```
@DATAB     ENDS
@CODE      SEGMENT    BYTE PUBLIC 'CODE'
@CODE      ENDS
     extrn      SPRINTF:near

     extrn      DB_ZOOM:near

     extrn      RELOCATE:near

     extrn      ISMUL:near

     extrn      ICOS:near

     extrn      ISIN:near

@CODE      SEGMENT    BYTE PUBLIC 'CODE'


MAP_RD     PROC NEAR
@CODE      ENDS
     extrn      $ISWITCH:near

@CODE      SEGMENT BYTE PUBLIC 'CODE'
.00:             ;4
     · push BP
     mov  BP,SP
     sub  SP,2
     mov  AX,CMD_STAT
     or   AX,AX
     je   .010
     jmp  SHORT .017
.010:               ;14
     mov  AX,0
     mov  SP,BP
     pop  BP
     ret
.017:               ;15
     cmp  WORD PTR CMD_STAT,2
     jne  .02A
     mov  AX,0
     mov  CMD_STAT,AX
     mov  SP,BP
     pop  BP
     ret
.02A:               ;16
     mov  AX,2
     mov  CMD_STAT,AX
     mov  AX,SW_STAT
     or   AX,AX


map rd -2-
```

```
        je    .04D
        push  WORD PTR SW_STAT
        lea   AX,@SW
        push  AX
        lea   AX,ERR_MSG
        push  AX
        call  SPRINTF
        add   SP,6
.04D:                       ;18
        mov   AX,SW_STAT
        add   AX@UW
        mov   -2[BP],AX
        mov   AX,0
        mov   @UW,AX
        mov   AX,-2[BP]
        push  AX
        jmp   .01FA
.066:                       ;21
        mov   AX,ZOOMF_PL
        sub   AX,1
        push  AX
        call  DB_ZOOM
        add   SP,2
        jmp   .0245
.077:                       ;24
        mov   AX,ZOOMF_PL
        add   AX,1
        push  AX
        .call DB_ZOOM
        add   SP,2
        jmp   .0245
.088:                       ;27
        jmp   .0245
.08B:                       ;29
        mov   AX,1
        mov   HOME,AX
        jmp   .0245
.095:                       ;32
        xor   WORD PTR NORTH,1
        jmp   .0245
.095:                       ;35
        mov   AX,0
        mov   HOME,AX
        call  SCAN_COS
        mov   BX,LCEN_X
        mov   CX,LCEN_X+2
        add   BX,AX
        adc   CX,DX
        mov   LCEN_X,BX


        map rd -3-
```

```
        mov   LCEN_X+2,CX
        call  SCAN_SIN
        mov   BX,LCEN_Y
        mov   CX,LCEN_Y+2
        add   BX,AX
        adc   CX,DX
        mov   LCEN_Y,BX
        mov   LCEN_Y+2,CX
        jmp   .0245
.0D6:                       ;40
        mov   AX,0
        mov   HOME,AX
        call  SCAN_COS
        mov   BX,LCEN_X
        mov   CX,LCEN_X+2
        sub   BX,AX
        sbb   CX,DX
        mov   LCEN_X,BX
        mov   LCEN_X+2,CX
        call  SCAN_SIN
        mov   BX,LCEN_Y
        mov   CX,LCEN_Y+2
        sub   BX,AX
        sbb   CX,DX
        mov   LCEN_Y,BX
        mov   LCEN_Y+2,CX
        jmp   .0245
.010E:                      ;45
        mov   AX,0
        mov   HOME,AX
        call  SCAN_SIN
        mov   BX,LCEN_X
        mov   CX,LCEN_X+2
        sub   BX,AX
        sbb   CX,DX
        mov   LCEN_X,BX
        mov   LCEN_X+2,CX
        call  SCAN_COS
        mov   BX,LCEN_Y
        mov   CX,LCEN_Y+2
        add   BX,AX
        adc   CX,DX
        mov   LCEN_Y,BX
        mov   LCEN_Y+2,CX
        jmp   .0245
.0146:                      ;50
        mov   AX,0
        mov   HOME,AX
        call  SCAN_SIN
```

map rd -4-

127

```
        mov    BX,LCEN_X
        mov    CX,LCEN_X+2
        add    BX,AX
        adc    CX,DX
        mov    LCEN_X,BX
        mov    LCEN_X+2,CX
        call   SCAN_COS
        mov    BX,LCEN_Y
        mov    CX,LCEN_Y+2
        sub    BX,AX
        sbb    CX,DX
        mov    LCEN_Y,BX
        mov    LCEN_Y+2,CX
        jmp    .0245
.017E:                          ;55
        mov    AX,LCAR_X
        mov    DX,LCAR_X+2
        mov    LMARK_X,AX
        mov    LMARK_X+2,DX
        mov    AX,LCAR_Y
        mov    DX,LCAR_Y+2
        mov    LMARK_Y,AX
        mov    LMARK_Y+2,DX
        jmp    .0245
.01A1:                          ;60
        mov    AX,12
        mov    @UW,AX
        jmp    .0245
.01AB:                          ;63
        mov    AX,20
        mov    DX,32
        push   DX
        push   AX
        mov    AX,-5
        mov    DX,31
        push   DX
        push   AX
        call   RELOCATE
        add    SP,8
        jmp    .0245
.01C4:                          ;66
        mov    AX,1
        mov    DSP_QEP,AX
        jmp    SHORT .0245
.01CD:                          ;69
        mov    AX,0
        mov    DSP_QEP,AX
        jmp    SHORT .0245
.01D6:                          ;72


map rd -5-
```

```
        jmp   SHORT .0245
.01D8:                        ;74
        mov   AX,HOME
        or    AX,AX
        je    .01E2
        jmp   SHORT .01F8
.01E2:                        ;75
        push  WORD PTR LCEN_Y+2
        push  WORD PTR LCEN_Y
        push  WORD PTR LCEN_X+2
        push  WORD PTR LCEN_X
        call  RELOCATE
        add   SP,8
.01F8:                        ;76
        jmp   SHORT .0245
.01FA:                        ;77
        call  $ISWITCH
        dw    17
        dw    20
        dw    21
        dw    22
        dw    23
        dw    24
        dw    17
        dw     5
        dw     6
        dw     8
        dw     9
        dw   .10
        dw    11
        dw    12
        dw     4
        dw     3
        dw     2
        dw     1
        dw    .0245
        dw    .01D8
        dw    .01D6
        dw    .01CD
        dw    .01C4
        dw    .01AB
        dw    .01A1
        dw    .01A1
        dw    .017E
        dw    .0146
        dw    .010E
        dw    .0D6
        dw    .09E
        dw    .095


        map rd -6-
```

```
        dw    .08B
        dw    .088
        dw    .077
        dw    .066
.0245:                    ;77
        mov   AX,-2[BP]
        mov   SP,BP
        pop   BP
        ret
MAP_RD      ENDP

SCAN_COS    PROC NEAR
@CODE       ENDS
        extrn      $LLSHIFT:near

@CODE       SEGMENT     BYTE PUBLIC 'CODE'
.024C:                    ;82
        push BP
        mov   BP,SP
        push WORD PTR CEN_POS+4
        call ICOS
        add . SP,2
        push AX
        mov   AX,CLP_BNDY
        mov   DX,1
        mov   CX,DX
        sar   AX,CL
        push AX
        call ISMUL
        add   SP,4
        cwd
        push DX
        push AX
        mov   AX,ZOOMF_DB
        cwd
        push DX
        push AX
        call $LLSHIFT
        pop   AX
        pop   DX
        mov   SP,BP
        pop   BP
        ret
SCAN_COS    ENDP

SCAN_SIN    PROC NEAR
.027F:                    ;92
        push BP
        mov   BP,SP


map rd -7-
```

```
                    push WORD PTR CEN_POS+4
                    call ISIN
                    add  SP,2
                    push AX
                    mov  AX,CLP_BNDY
                    mov  DX,1
                    mov  CX,DX
                    sar  AX,CL
                    push AX
                    call ISMUL
                    add  SP,4
                    cwd
                    push DX
                    push AX
                    mov  AX,ZOOMF_DB
                    cwd
                    push DX
                    push AX
                    call $LLSHIFT
                    pop  AX
                    pop  DX
                    mov  SP,BP
                    pop  BP
                    ret
         SCAN_SIN   ENDP

         @CODE      ENDS
         @CODE      SEGMENT   BYTE PUBLIC 'CODE'
                    include   epilogue.h
                    end
```

map rd -8-

131

```
@BIGMODEL EQU    0
        include    prologue.h

        public     PRIOR_LB
@CODE       ENDS
@DATAB      SEGMENT
        extrn      CEN_POS:word

        extrn      CRS:word

        extrn      STROKE:word

        extrn      ZOOMF:word

        extrn      LB_ADDED:word

@DATAB      ENDS
@CODE       SEGMENT    BYTE PUBLIC 'CODE'
@CODE       ENDS
        extrn      RT_VECTR:near

        extrn      BOX_CLIP:far

        extrn      IATAN2:far

        extrn      ISIN:far

        extrn      ICOS:far

        extrn      ZM_NODE:far

        extrn      COL_TEST:far

        extrn      DSP_NAME:far

@CODE           SEGMENT    BYTE PUBLIC 'CODE'

PRIOR_LB        PROC       NEAR
.00:            ;6
    push BP
    mov  BP,SP
    sub  SP,22
    mov  AX,0
    mov  -2[BP],AX
.0C:            ;15
    mov  SI,+4[BP]
    lea  AX,+3[SI]
    mov  DX,-2[BP]
    inc  WORD PTR -2[BP]


prior lb -1-
```

```
        add   AX,DX
        mov   SI,AX
        mov   AL,[SI]
        cbw
        or    AX,AX
        je    .025
        jmp   SHORT .0C
.025:                     ;16
        dec   WORD PTR -2[BP]
        mov   AX,-2[BP]
        or    AX,AX
        jne   .032
.031:                     ;17
        mov   AX,0
        mov   SP,BP
        pop   BP
        ret
.038:                     ;18
        lea   SI,-14[BP]
        push  SI
        lea   SI,-16[BP]
        push  SI
        lea   SI,CRS
        push  SI
        mov   SI,+4[BP]
        mov   AX,+57[SI]
        sub   AX,CEN_POS+2
        push  AX
        mov   SI,+4[BP]
        mov   AX,+55[SI]
        sub   AX,CEN_POS
        push  AX
        call  RT_VECTR
        add   SP,10
        lea   SI,-10[BP]
        push  SI
        lea   SI,-12[BP]
        push  SI
        lea   SI,CRS
        push  SI
        mov   SI,+4[BP]
        mov   AX,+61[SI]
        sub   AX,CEN_POS+2
        push  AX
        mov   SI,+4[BP]
        mov   AX,+59[SI]
        sub   AX,CEN_POS
        push  AX
        call  RT_VECTR


     prior lb -2-
```

133

```
        add   SP,10
        mov   AX,-16[BP]
        mov   -20[BP],AX
        mov   AX,-14[BP]
        mov   -18[BP],AX
        lea   SI,-4[BP]
        push  SI
        lea   SI,-10[BP]
        push  SI
        lea   SI,-12[BP]
        push  SI
        lea   SI,-18[BP]
        push  SI
        lea   SI,-20[BP]
        push  SI
        call  BOX_CLIP
        add   SP,10
        or    AX,AX
        je    .0B6
        jmp   SHORT .0BD
.0B6:                     ;24
        mov   AX,0
        mov   SP,BP
        pop   BP
        ret
.0BD:                     ;25
        mov   AX,-12[BP]
        sub   AX,-20[BP]
PRIOR_LB          ENDP
@CODE             ENDS
@CODE             SEGMENT BYTE PUBLIC 'CODE'
include epilogue.h
        mov   AX,-10[BP]
        sub   AX,-18[BP]
        push  AX
        call  IATAN2
        add   SP,4
        mov   -22[BP],AX
        cmp   WORD PTR -22[BP],18432
        jbe   .0E9
        cmp   WORD PTR -22[BP],-18432
        jae   .0E9
        mov   AX,0
        mov   SP,BP
        pop   BP
        ret
.0E9:                     ;27
        push  WORD PTR -22[BP]
        call  ISIN
```

prior lb -3-

```
        add   SP,2
        mov   STROKE+2,AX
        push  WORD PTR -22[BP]
        call  ICOS
        add   SP,2
        mov   STROKE+4,AX
        cmp   WORD PTR ZOOMF,0
        jl    .0129
        mov   AX,16
        mov   DX,ZOOMF
        mov   CX,DX
        sar   AX,CL
        mov   -8[BP],AX
        mov   AX,8
        mov   DX,ZOOMF
        mov   CX,DX
        sar   AX,CL
        mov   -6[BP],AX
        jmp   SHORT .0149
.0129:                       ;33
        mov   AX,16
        mov   DX,ZOOMF
        neg   DX
        mov   CX,DX
        shl   AX,CL
        mov   -8[BP],AX
        mov   AX,8
        mov   DX,ZOOMF
        neg   DX
        mov   CX,DX
        shl   AX,CL
        mov   -6[BP],AX
.0149:                       ;36
        lea   SI,-6[BP]
        push  SI
        lea   SI,-8[BP]
        push  SI
        lea   SI,STROKE
        push  SI
        push  WORD PTR -6[BP]
        mov   SI,+4[BP]
        mov   AX,+53[SI]
        add   AX,-8[BP]
        push  AX
        call  RT_VECTR
        add   SP,10
        mov   AX,-8[BP]
        add   -16[BP],AX
        mov   AX,-6[BP]
```

prior lb -4-

```
        add   -14[BP],AX
        lea   SI,-14[BP]
        push SI
        lea   SI,-16[BP]
        push SI
        call ZM_NODE
        add   SP,4
        mov   AX,LB_ADDED
        or    AX,AX
        je    .0189
        mov   AX,1
.0181:                ;41
        xor   AX,1
        push AX
        push WORD PTR -2[BP]
        push WORD PTR -14[BP]
        push WORD PTR -16[BP]
        call COL_TEST
        add   SP,8
        or    AX,AX
        jne   .019E
.0198:                ;41
        xor   AX,AX
        mov   SP,BP
        pop   BP
        ret
.019E:                ;42
        mov   AX,7
        push AX
        mov   SI,+4[BP]
        lea   AX,+3[SI]
        push AX
        push WORD PTR -14[BP]
        push WORD PTR -16[BP]
        call DSP_NAME
        add   SP,8
        mov   AX,1
        mov   SP,BP
        pop   BP
        ret
PRIOR_LB   ENDP

@CODE      ENDS
@CODE      SEGMENT   BYTE PUBLIC 'CODE'
        include   epilogue.h
        end
```

prior lb -5-

```
@CODE               SEGMENT BYTE PUBLIC 'CODE'
                    ASSUME  CS:@CODE
                    public  rt_vectr

rt_vectr            proc    near
                    push    bp
                    mov     bp,sp
                    mov     bx,8[bp]
                    mov     di,2[bx]
                    mov     si,4[bx]
                    mov     ax,4[bp]
                    imul    si
                    mov     cx,dx
                    mov     bx,ax
                    mov     ax,6[bp]
                    neg     ax
                    imul    di
                    add     ax,bx
                    adc     dx,cx
                    shl     ax,1
                    rcl     dx,1
                    shl     ax,1
                    adc     dx,0
                    mov     bx,10[bp]
                    mov     [bx],dx
                    mov     ax,4[bp]
                    imul    di
                    mov     cx,dx
                    mov     bx,ax
                    mov     ax,6[bp]
                    imul    si
                    add     ax,bx
                    adc     dx,cx
                    shl     ax,1
                    rcl     dx,1
                    shl     ax,1
                    adc     dx,0
                    mov     bx,12[bp]
                    mov     [bx],dx
                    pop     bp
                    ret
rt_vectr            endp
@CODE               ENDS
                    end



rt vectr -1-
```

```
@BIGMODEL EQU   0
        include   prologue.h

        public    SELCT_ST
@CODE     ENDS
@DATAB    SEGMENT
        extrn     STREETS:word

@DATAB    ENDS
@CODE     SEGMENT   BYTE PUBLIC 'CODE'
@CODE     ENDS
        extrn     SCROL:near

        extrn     SPELL:near

@CODE     SEGMENT BYTE PUBLIC 'CODE'


SELCT_ST  PROC NEAR
.00:              ;6
     push BP
     mov  BP,SP
     sub  SP,18
     mov  AX,65
     lea  SI,-16[BP]
     mov  [SI],AL
     mov  AX,0
     lea  SI,-16[BP]
     mov  [SI],AL
.019:                  ;14
     lea  AX,-16[BP]
     push AX
     push WORD PTR +4[BP]
     call SPELL
     add  SP,4
     or   AX,AX
     je   .04C
     push WORD PTR +4[BP]
     lea  AX,-16[BP]
     push AX
     lea  AX,STREETS
     push AX
     call SCROL
     add  SP,6
     mov  -18[BP],AX
     or   AX,AX
     je   .04A
     mov  AX,-18[BP]
     mov  SP,BP
```

selct st -1-

```
        pop   BP
        ret
.04A:                     ;17
        jmp   SHORT .019
.04C:                     ;17
        mov   AX,0
        mov   SP,BP
        pop   BP
        ret
SELCT_ST   ENDP

@CODE      ENDS
@CODE      SEGMENT   BYTE PUBLIC 'CODE'
        include   epilogue.h
        end
```

selct st -2-

```
@BIGMODEL EQU    0
        include   prologue.h
@CODE      ENDS
@DATAI     SEGMENT
        dw    -1
        dw    -1
@DATAI     ENDS
@CODE      SEGMENT    BYTE PUBLIC 'CODE'

        public    SET_ZOOM
@CODE      ENDS
@DATAB     SEGMENT
        extrn     ZM_INTEN:word

        extrn     POLD_LBS:word

        extrn     ZOOMF:word

        extrn     ZOOMF_PL:word

        extrn     ZOOMF_DB:word

        extrn     ZOOM_TBL:word

        extrn     DSP_QEP:word

        extrn     CLP_BNDY:word

        extrn     X_LEFT:word

        extrn     X_RIGHT:word

        extrn     Y_BOT:word

        extrn     Y_TOP:word

        extrn     INTEN:word

@DATAB     ENDS
@CODE      SEGMENT    BYTE PUBLIC 'CODE'
SET_ZOOM   PROC NEAR
.00:              ;5
     push BP
     mov    BP,SP
     sub    SP,16
     cmp    WORD PTR +4[BP],-2
     jge    SHORT .016
.0F:              ;22
     cmp    WORD PTR +4[BP],16
```

set zoom -1-

```
        jle   .01D
.016:                   ;22
        mov   AX,0
        mov   SP,BP
        pop   BP
        ret
.01D:                   ;23
        mov   AX,ZOOMF_DB
        sub   AX,+4[BP]
        cmp   AX,4
        jle   .02B
        jmp   SHORT .037
.02B:                   ;24
        mov   AX,ZOOMF_DB
        sub   AX,+4[BP]
        cmp   AX,-6
        jge   .03E
.037:                   ;24
        mov   AX,0
        mov   SP,BP
        pop   BP
        ret
.03E:                   ;25
        mov   AX,+6[BP]
        cmp   AX,@IW
        je    .049
        jmp   SHORT .053
.049:                   ;25
        mov   AX,ZOOMF_DB
        cmp   AX,@IW+2
        je    .082
.053:                   ;25
        mov   AX,POLD_LBS
        mov   -14[BP],AX
        mov   AX,5
        mov   -4[BP],AX
.060:                   ;28
        mov   AX,-4[BP]
        dec   WORD PTR -4[BP]
        or    AX,AX
        je    .082
        mov   AX,-1
        mov   SI,-14[BP]
        mov   +2[SI],AL
        mov   AX,0
        mov   SI,-14[BP]
        add   WORD PTR -14[BP],63
        mov   [SI],AX
        jmp   SHORT .060


    set zoom -2-
```

141

```
.082:                   ;33
        mov     AX,ZOOMF_DB
        mov     @IW+2,AX
        mov     DX,+4[BP]
        mov     ZOOMF_PL,DX
        mov     @IW,DX
        sub     AX,DX
        mov     ZOOMF,AX
        cmp     AX,0
        jle     .0EE
        mov     AX,185
        mov     DX,ZOOMF
        mov     CX,DX
        sar     AX,CL
        mov     CLP_BNDY,AX
        mov     AX,191
        mov     DX,ZOOMF
        mov     CX,DX
        sar     AX,CL
        neg     AX
        mov     X_LEFT,AX
        mov     AX,207
        mov     DX,ZOOMF
        mov     CX,DX
        sar     AX,CL
        mov     X_RIGHT,AX
        mov     AX,DSP_QEP
        or      AX,AX
        je      .0E4
        mov     AX,121
        mov     DX,ZOOMF
        mov     CX,DX
        sar     AX,CL
        jmp     SHORT .0E8
.0E4:                   ;39
        mov     AX,CLP_BNDY
.0E8:                   ;39
        mov     Y_TOP,AX
        jmp     SHORT .0142
.0EE:                   ;41
        mov     AX,185
        mov     DX,ZOOMF
        neg     DX
        mov     CX,DX
        shl     AX,CL
        mov     CLP_BNDY,AX
        mov     AX,191
        mov     DX,ZOOMF
        neg     DX


        set zoom -3-
```

```
        mov   CX,DX
        shl   AX,CL
        neg   AX
        mov   X_LEFT,AX
        mov   AX,207
        mov   DX,ZOOMF
        neg   DX
        mov   CX,DX
        shl   AX,CL
        mov   X_RIGHT,AX
        mov   AX,DSP_QEP
        or    AX,AX
        je    .013A
        mov   AX,121
        neg   AX
        mov   DX,ZOOMF
        neg   DX
        mov   CX,DX
        shl   AX,CL
        jmp   SHORT .013E
.013A:                ;46
        mov   AX,CLP_BNDY
.013E:                ;46
        mov   Y_TOP,AX
.0142:                ;47
        mov   AX,CLP_BNDY
        neg   AX
        mov   Y_BOT,AX
        mov   AX,DSP_QEP
        or    AX,AX
        je    .0159
        mov   AX,121
        jmp   SHORT .015C
.0159:                ;50
        mov   AX,185
.015C:                ;50
        mov   YPIX_MAX,AX
        lea   SI,ZOOM_TBL
        mov   AX,ZOOMF_PL
        add   AX,2
        shl   AX,1
        add   SI,AX
        mov   AX,[SI]
        mov   -2[BP],AL
        lea   AX,ZM_INTEN
        sub   AX,4
        mov   -16[BP],AX
.017E:                ;53
        mov   AL,-2[BP]
```

set zoom -4-

143

```
        and   AX,255
        and   AX,255
        add   WORD PTR -16[BP],4
        mov   SI,-16[BP]
        mov   DL,[SI]
        and   DX,255
        cmp   DX,AX
        jae   .019D
        jmp   SHORT .017E
.019D:                      ;54
        mov   SI-16[BP]
        mov   AL,+1[SI]
        and   AX,255
        mov   -10[BP],AX
        mov   SI,-16[BP]
        mov   AL,+2[SI]
        and   AX,255
        mov   -8[BP],AX
        mov   SI,-6[BP]
        mov   AL,+3[SI]
        and   AX,255
        mov   -2=6[BP],AX
        mov   AX,0
        mov   -12[BP],AX
        lea   SI,INTEN
        mov   DX,-12[BP]
        inc   WORD PTR -12[BP]
        add   SI,DX
        mov   [SI],AL
.01D8:                      ;60
        mov   AX,-12[BP]
        cmp   AX,-10[BP]
        jge   .01F3
        mov   AX,7
        mov   SI,INTEN
        mov   DX,-12[BP]
        inc   WORD PTR -12[BP]
        add   SI,DX
        mov   [SI],AL
        jmp   SHORT .01D8
.01F3:                      ;62
        mov   AX,-12[BP]
        cmp   AX,-8[BP]
        jge   .020E
        mov   AX,6
        lea   SI,INTEN
        mov   DX,-12[BP]
        inc   WORD PTR -12[BP]
        add   SI,DX


        set zoom -5-
```

```
        mov    [SI],AL
        jmp    SHORT .01F3
.020E:                    ;64
        mov    AX,-12[BP]
        cmp    AX,-6[BP]
        jge    .0229
        mov    AX,5
        lea    SI,INTEN
        mov    DX,-12[BP]
        inc    WORD PTR -12[BP]
        add    SI,DX
        mov    [SI],AL
        jmp    SHORT .020E
.0229:                    ;66
        cmp    WORD PTR -12[BP],64
        jge    .0243
        mov    AX,0
        lea    SI,INTEN
        mov    DX,-12[BP]
        inc    WORD PTR -12[BP]
        add    SI,DX
        mov    [SI],AL
        jmp    SHORT .0229
.0243:                    ;67
        mov    AX,1
        mov    SP,BP
        pop    BP
        ret
@CODE       ENDP

?SET_ZOOM ENDS
@CODE       SEGMENT    BYTE PUBLIC 'CODE'
        include    epilogue.h
        end
```

set zoom -6-

145

```
@BIGMODEL EQU   0
        include   prologue.h

        public    SRT_STRT
        public    MIN_VCTR
@CODE       ENDS
@DATAB SEGMENT
        extrn     VECTORS:word

        extrn     CEN_POS:word

        extrn     CRS:word

        extrn     ZOOMF:word


@DATAB      ENDS
@CODE       SEGMENT BYTE PUBLIC 'CODE'
@CODE       ENDS
        extrn     RT_VECTR:near

        extrn     BOX_CLIP:near

        extrn     MAX2:near

        extrn     @ABS:near


@CODE       SEGMENT BYTE PUBLIC 'CODE'

SRT_STRT    PROC NEAR
.00:              ;7
    push BP
    mov  BP,SP
    sub  SP,38
    cmp  WORD PTR ZOOMF,0
    jl   .01B
    mov  AX,64
    mov  DX,ZOOMF
    mov  CX,DX
    sar  AX,CL
    jmp  SHORT .028
.01B:             ;20
    mov  AX,64
    mov  DX,ZOOMF
    neg  DX
    mov  CX,DX
    shl  AX,CL
.028:             ;20
    mov  -2[BP],AX
    call MIN_VCTR


srt strt -1-
```

```
        mov    -38[BP],AX
        mov    SI,AX
        mov    AX,[SI]
        mov    -6[BP],AX
        or     AX,AX
        je     .03E
        jmp    SHORT .044
.03E:                      ;21
        mov    AX,-2[BP]
        mov    -6[BP],AX
.044:                      ;23
        lea    SI,-18[BP]
        push SI
        lea    SI,-20[BP]
        push SI
        lea    SI,CRS
        push SI
        mov    SI,+4[BP]
        mov    AX,+2[SI]
        mov    -26[BP],AX
        sub    AX,CEN_POS+2
        push AX
        mov    AX,[SI]
        mov    -28[BP],AX
        sub    AX,CEN_POS
        push AX
        call RT_VECTR
        add    SP,10
.072:                      ;25
        dec WORD PTR +8[BP]
        mov    AX,+8[BP]
        or     AX,AX
        jne    ?1
        jmp    .01A1
?1:
        mov    AX,-28[BP]
        mov    -32[BP],AX
        mov    AX,-26[BP]
        mov    -30[BP],AX
        mov    AX,-20[BP]
        mov    -24[BP],AX
        mov    AX,-18[BP]
        mov    -22[BP],AX
        mov    AX,+4[BP]
        add    AX,+6[BP]
        mov    +4[BP]AX
        lea    SI,-18[BP]
        push SI
        lea    SI,-20[BP]
```

srt strt -2-

147

EP 0 199 780 B1

```
        push SI
        lea  SI,CRS
        push SI
        mov  SI,+4[BP]
        mov  AX,+2[BP]
        mov  -26[BP],AX
        sub  AX,CEN_POS+2
        push AX
        mov  SI,+4[BP]
        mov  AX,[SI]
        mov  -28[BP],AX
        sub  AX,CEN_POS
        push AX
        call RT_VECTR
        add  SP,10
        mov  AX,-24[BP]
        mov  -16[BP],AX
        mov  AX,-22[BP]
        mov  -14[BP],AX
        mov  AX,-20[BP]
        mov  -12[BP],AX
        mov  AX,-18[BP]
        mov  -10[BP],AX
        lea  SI,-4[BP]
        push SI
        lea  SI,-10[BP]
        push SI
        lea  SI,-12[BP]
        push SI
        lea  SI,-14[BP]
        push SI
        lea  SI,-16[BP]
        push SI
        call BOX_CLIP
        add  SP,10
        or   AX,AX
        je   .0106
        jmp  SHORT .0108
.0106:                   ;41
        jmp  SHORT .0132
.0108:                   ;41
        mov  AX,-10[BP]
        sub  AX,-14[BP]
        push AX
        call @ABS
        add  SP,2
        push AX
        mov  AX,-12[BP]
        sub  AX,-16[BP]


    srt strt -3-
```

148

```
        push AX
        call @ABS
        add  SP,2
        push AX
        call MAX2
        add  SP,4
        mov  -8[BP],AX
        cmp  AX,-6[BP]
        jg   .0135
.0132:                  ;41
        jmp  .072
.0135:                  ;43
        mov  AX,-8[BP]
        mov  SI,-38[BP]
        mov  [SI],AX
        mov  AX,-32[BP]
        mov  SI,-38[BP]
        mov  +2[SI],AX
        mov  AX,-30[BP]
        mov  SI,-38[BP]
        mov  +4[SI],AX
        mov  AX,-28[BP]
        mov  SI,-38[BP]
        mov  +6[SI],AX
        mov  AX,-26[BP]
        mov  SI,-38[BP]
        mov  +8[SI],AX
        mov  AX,-16[BP]
        mov  SI,-38[BP]
        mov  +10[SI],AX
        mov  AX,-14[BP]
        mov  SI,-38[BP]
        mov  +12[SI],AX
        mov  AX,-12[BP]
        mov  SI,-38[BP]
        mov  +14[SI],AX
        mov  AX,-10[BP]
        mov  SI,-38[BP]
        mov  +16[SI],AX
        call MIN_VCTR
        mov  -38[BP],AX
        mov  SI,AX
        mov  AX,[SI]
        mov  -6[BP],AX
        or   AX,AX
        je   .0198
        jmp  SHORT .019E
.198:                   ;52
        mov  AX,-2[BP]
```

srt strt -4-

149

```
        mov   -6[BP],AX
.19E:                      ;54
        jmp   .072
.01A1:                     ;54
        mov   SP,BP
        pop   BP
        ret
SRT_STRT  ENDP
MIN_VCTR  PROC NEAR
.01A5:                     ;59
        push  BP
        mov   BP,SP
        sub   SP,8
        lea   AX,VECTORS
        mov   -6[BP],AX
        mov   -8[BP],AX
        mov   SI,AX
        mov   AX,[SI]
        mov   -2[BP],AX
        or    AX,AX
        je    .01FA
        lea   AX,VECTORS
        add   AX,72
        mov   -4[BP],AX
.01CA:                       ;67
        add   WORD PTR -6[BP],18
        mov   AX,-6[BP]
        cmp   AX,-4[BP]
        jae   .01FA
        mov   SI,-6[BP]
        mov   AX,[SI]
        cmp   AX,-2[BP]
        jl    .01E3
        jmp   SHORT .01CA
.01E3:                       ;69
        mov   AX,-6[BP]
        mov   -8[BP],AX
        mov   SI,AX
        mov   AX,[SI]
        mov   -2[BP],AX
        or    AX,AX
        je    .01F6
        jmp   SHORT .01F8
.01F6:                       ;69
        jmp   SHORT .01FA
.01F8:                       ;70
        jmp   SHORT .01CA
.01FA:                       ;72
        mov   AX,-8[BP]
```

srt strt -5-

```
        mov  SP,BP
        pop  BP
        ret
MIN_VCTR        ENDP

@CODE    ENDS
@CODE    SEGMENT  BYTE PUBLIC 'CODE'
     include  epilogue.h
     end
```

## Claims

1.  Apparatus for displaying at selected scale levels a map of streets corresponding to an area over which a vehicle may move, to assist a driver to navigate, comprising:

    a) a stored map database having data identifying the location of streets of the area and data in the form of a code identifying each street as of a predetermined priority category;
    b) means for selecting the scale levels;
    c) means responsive to the data, for selecting certain streets of the map to display in dependence on a selected scale level and said code;
    d) means for providing input data identifying the current location and heading direction of the vehicle;

    characterised by the database further having data in the form of labels for streets, and by the apparatus further comprising:

    e) means responsive to the database data, for selecting street labels for display in accordance with a dynamic ordering scheme which selects and prioritises street labels to display in dependence on the input data identifying the current location and heading direction of the vehicle, said means assigning priority values to labels of said certain streets by at least:

    using the input data and the database data to identify a next cross street ahead of the vehicle and assigning a priority value to the label of any said street identified; and
    using the input data and the database data to identify the street on which the vehicle is travelling and assigning a priority value to the label of any said street identified;

    f) means for selecting certain street labels for display by using said assigned priority values; and
    g) means for producing a map display showing the certain streets and the certain street labels.

2.  Apparatus, according to claim 1, wherein said means for producing a map display includes means for determining the intensity of the certain streets for display, the intensity of the certain streets being dependent on the selected scale level and said code.

3.  Apparatus, according to claim 2, wherein one intensity is a zero intensity representing no display of streets of the corresponding said code.

4.  Apparatus, according to claim 1, 2 or 3, wherein said means for producing a map display includes a look-up table of street priority categories versus scale levels.

5.  Apparatus, according to claim 4, wherein said table has entries identifying the intensity of the certain streets to display, the intensity of the streets being dependent on the street priority categories and scale levels.

6.  Apparatus, according to any preceding claim, wherein said streets of said map database are stored as street segments each having endpoints, and wherein said means for producing a map display showing the certain streets and the certain labels for the streets computes the slopes of the street segments from the endpoints defining the respective street segments to provide the map display.

7. Apparatus, according to claim 6, wherein said certain labels are displayed parallel to said certain street segments according to said computed street segment slopes.

8. Apparatus, according to claim 7, wherein said certain labels are displayed with an orientation closest to right side up.

9. Apparatus, according to claim 6, 7 or 8, wherein the size of the labels displayed remains constant independent of the scale level.

10. Apparatus, according to any preceding claim, comprising:
    storage means defining a two-dimensional array corresponding to cells of the display;

    means for setting elements of the storage array corresponding to display cells occupied by a label of a first priority selected for display;
    means for identifying the cells to be occupied by a selected label of lower priority in its proposed position and if any corresponding memory element is set, for deselecting the lower priority label for display in that position.

11. Apparatus according to any preceding claim, further including means, responsive to the map database, the position and heading data of the vehicle and one of the selected scale levels, for producing a symbol on the map display of the position and heading of the vehicle, the map display moving in translation and rotation in dependence on the movement of the vehicle.

12. An apparatus according to claim 11, wherein the moving map is movable in translation and rotation to continue displaying the area around the current position of the vehicle and oriented to the heading of the vehicle.

13. An apparatus according to claim 11 or 12, wherein said means for displaying the map and said means for providing a vehicle position symbol and a moving map comprise means for producing a changeable map display viewing window corresponding to a given portion of the area over which the vehicle may move.

14. An apparatus according to claim 13, wherein said changeable map display viewing window is movable as the vehicle moves.

15. An apparatus according to claim 13 or 14, wherein said map display viewing window is changeable in size in dependence on the selected scale level.

16. An apparatus, according to any of claims 11 to 15, further comprising a means for providing a destination symbol on said display indicating a desired destination.

17. An apparatus, according to claim 16, wherein said means for providing a destination symbol includes means for calculating the distance between a desired destination represented by said destination symbol and the current position of the vehicle represented by said vehicle position symbol, the distance being displayed on said display.

18. An apparatus as claimed in any of claims 11 to 17 further comprising:

    a) a stored map database having data identifying the location of streets of the given area and data identifying the desired destination; and
    b) means for selecting from said desired destination data a desired destination of the vehicle.

19. An apparatus according to claim 18, wherein said identifying data for the desired destination further includes street names and street addresses associated with a corresponding street, and wherein said means for selecting can select a street name and street address of a given street.

20. An apparatus according to claim 18 or 19, wherein said identifying data further includes street names and wherein said means for selecting can select two street names corresponding to intersecting streets.

21. An apparatus, according to claim 18, 19 or 20, further comprising means for determining if the destination lies within a current map display of streets.

22. An apparatus according to claim 21, wherein said means for providing a destination symbol provides a direction symbol indicating the direction to the desired destination in lieu of the destination symbol if the desired destination does not lie within the current map display.

**Patentansprüche**

1. Einrichtung zum Anzeige einer Straßenkarte mit ausgewählten Maßstabswerten, welche Karte einem Bereich entspricht, in dem ein Fahrzeug sich bewegen kann, um einen Fahrer beim Navigieren zu unterstützen, umfassend:

a) eine Datenbank für eine gespeicherte Karte, welche Daten, die den Ort von Straßen des Bereichs identifizieren, sowie Daten in der Form eines Codes aufweist, welcher jede Straße als zu einer vorbestimmten Prioritätskategorie gehörend identifiziert,
b) ein Mittel zum Auswählen der Maßstabswerte,
c) ein Mittel, welches auf die Daten anspricht, um bestimmte Straßen der Karte auszuwählen, um in Abhängigkeit von einem ausgewählten Maßstabswert und dem Code anzuzeigen,
d) ein Mittel zum Vorsehen von Eingabedaten, welche den momentanen Ort und die Fahrtrichtung des Fahrzeugs identifizieren,

**dadurch gekennzeichnet**,
daß die Datenbank ferner Daten in der Form von Bezeichnungen für Straßen aufweist, und daß die Einrichtung ferner umfaßt:

e) ein Mittel, welches auf die Datenbank-Daten anspricht, um Straßenbezeichnungen zur Anzeige gemäß einem dynamischen Ordnungsschema auszuwählen, welches Straßenbezeichnungen auswählt und diesen Prioritäten zuteilt, um, in Abhängigkeit von den Eingabedaten, welche den momentanen Ort und die Fahrtrichtung des Fahrzeugs identifizieren, anzuzeigen, wobei das Mittel den Bezeichnungen der bestimmten Straßen Prioritätswerte zuordnet, indem wenigstens:

die Eingabedaten und die Datenbank-Daten verwendet werden, um eine nächste Querstraße vor dem Fahrzeug zu identifizieren, und der Bezeichnung jeder dieser identifizierten Straßen ein Prioritätswert zugeordnet wird, und
die Eingabedaten und die Datenbank-Daten verwendet werden, um die Straße, auf welcher das Fahrzeug fährt, zu identifizieren, und der Bezeichnung jeder dieser identifizierten Straße ein Prioritätswert zugeordnet wird,

f) ein Mittel zum Auswählen bestimmter Straßenbezeichnungen zur Anzeige durch Verwendung der zugeordneten Prioritätswerte, und
g) ein Mittel zum Erzeugen einer Kartenanzeige, welche die bestimmten Straßen und die bestimmten Straßenbezeichnungen zeigt.

2. Einrichtung nach Anspruch 1, worin das Mittel zum Erzeugen einer Kartenanzeige Mittel zum Bestimmen der Intensität der bestimmten Straßen zur Anzeige umfaßt, wobei die Intensität der bestimmten Straßen von dem ausgewählten Maßstabwert und dem Code abhängt.

3. Einrichtung nach Anspruch 2, worin eine Intensität eine Null-Intensität ist, welche keine Anzeige von Straßen des entsprechenden Codes wiedergibt.

4. Einrichtung nach Anspruch 1, 2 oder 3, worin das Mittel zum Erzeugen einer Kartenanzeige eine Nachschlagtabelle von Straßen-Prioritätskategorien bezüglich Maßstabswerten umfaßt.

5. Einrichtung nach Anspruch 4, worin die Tabelle Einträge aufweist, welche die Intensität der bestimmten Straßen zur Anzeige identifizieren, wobei die Intensität der Straßen von den Straßen-Prioritätskategorien und den Maßstabswerten abhängt.

6. Einrichtung nach einem der vorhergehenden Ansprüche, worin die Straßen der Karten-Datenbank als Straßensegmente gespeichert sind, welche jeweils Endpunkte aufweisen, und worin das Mittel zum Erzeugen einer Kartenanzeige, welche die bestimmten Straßen und die bestimmten Bezeichnungen für die Straßen zeigt, die Steigungen der Straßensegmente von den die jeweiligen Straßensegmente definierenden Endpunkten berechnet, um die Kartenanzeige vorzusehen.

7. Einrichtung nach Anspruch 6, worin die bestimmten Bezeichnungen parallel zu den bestimmten Straßensegmenten entsprechend den berechneten Straßensegmentsteigungen angezeigt werden.

8. Einrichtung nach Anspruch 7, worin die bestimmten Bezeichnungen mit einer Orientierung angezeigt werden, welche einer Orientierung mit der richtigen Seite nach oben am nächsten kommt.

9. Einrichtung nach Anspruch 6, 7 oder 8, worin die Größe der angezeigten Bezeichnungen, unabhängig vom Maßstabswert, konstant bleibt.

10. Einrichtung nach einem der vorhergehenden Ansprüche, umfassend:

   ein Speichermittel, welches ein zweidimensionales Feld definiert, das Zellen in der Anzeige entspricht,
   ein Mittel zum Setzen von Elementen des Speicherfeldes, welche den Anzeigezellen entsprechen, die durch eine Bezeichnung einer für die Anzeige ausgewählten ersten Priorität besetzt sind,
   ein Mittel zum Identifizieren der durch eine ausgewählte Bezeichnung geringerer Priorität in ihrer vorgeschlagenen Position zu besetzenden Zellen, und wenn ein entsprechendes Speicherelement gesetzt ist, zum Verhindern der Auswahl der Bezeichnung mit geringerer Priorität zur Anzeige an dieser Position.

11. Einrichtung nach einem der vorhergehenden Ansprüche, ferner umfassend ein Mittel, welches auf die Karten-Datenbank, die Positions- und die Fahrtrichtungsdaten des Fahrzeugs und einen der ausgewählten Maßstabswerte anspricht, um ein Symbol auf der Kartenanzeige für die Position und die Fahrtrichtung des Fahrzeugs zu erzeugen, wobei die Kartenanzeige sich in Translation und Rotation in Abhängigkeit von der Bewegung des Fahrzeugs bewegt.

12. Einrichtung nach Anspruch 11, worin die sich bewegende Karte in Translation und Rotation bewegbar ist, um die Anzeige des Bereichs um die momentane Position des Fahrzeugs herum und bezüglich der Fahrtrichtung des Fahrzeugs orientiert fortzusetzen.

13. Einrichtung nach Anspruch 11 oder 12, worin das Mittel zum Anzeigen der Karte und das Mittel zum Vorsehen eines Fahrzeug-Positionssymbols und einer sich bewegenden Karte Mittel zum Erzeugen eines änderbaren Kartenanzeige-Sichtfensters umfaßt, welches einem gegebenen Abschnitt des Bereichs entspricht, in dem das Fahrzeug sich bewegen kann.

14. Einrichtung nach Anspruch 13, worin das änderbare Kartenanzeige-Sichtfenster bewegbar ist, wenn das Fahrzeug sich bewegt.

15. Einrichtung nach Anspruch 13 oder 14, worin das Kartenanzeige-Sichtfenster in Abhängigkeit von dem ausgewählten Maßstabswert in seiner Größe änderbar ist.

16. Einrichtung nach einem der Ansprüche 11 bis 15, ferner umfassend ein Mittel zum Vorsehen eines Ziel-Symbols auf der Anzeige, welches ein gewünschtes Ziel anzeigt.

17. Einrichtung nach Anspruch 16, worin das Mittel zum Vorsehen eines Ziel-Symbols ein Mittel zum Berechnen des Abstands zwischen einem durch das Ziel-Symbol wiedergegebenen gewünschten Ziel und der momentanen Position des Fahrzeugs umfaßt, welche durch das Fahrzeug-Positionssymbol wiedergegeben ist, wobei der Abstand auf der Anzeige angezeigt wird.

18. Einrichtung nach einem der Ansprüche 11 bis 17, ferner umfassend:

   a) eine Datenbank für eine gespeicherte Karte, welche Daten, die den Ort von Straßen des gegebenen Bereichs identifizieren, sowie Daten aufweist, welche das gewünschte Ziel identifizieren, und
   b) ein Mittel zum Auswählen eines gewünschten Ziels des Fahrzeugs aus den Daten für das gewünschte Ziel.

**19.** Einrichtung nach Anspruch 18, worin die Daten, welche das gewünschte Ziel identifizieren, ferner Straßennamen und Straßenadressen umfassen, welche einer entsprechenden Straße zugeordnet sind, und worin das Mittel zum Auswählen einen Straßennamen und eine Straßenadresse einer gegebenen Straße auswählen kann.

**20.** Einrichtung nach Anspruch 18 oder 19, worin die identifizierenden Daten ferner Straßennamen umfassen und worin das Mittel zum Auswählen zwei Straßennamen auswählen kann, welche sich kreuzenden Straßen entsprechen.

**21.** Einrichtung nach Anspruch 18, 19 oder 20, ferner umfassend ein Mittel zum Bestimmen, ob das Ziel innerhalb einer momentanen Straßenkartenanzeige liegt.

**22.** Einrichtung nach Anspruch 21, worin das Mittel zum Vorsehen eines Ziel-Symbols ein Richtungssymbol vorsieht, welches, anstelle des Ziel-Symbols, die Richtung zu dem gewünschten Ziel anzeigt, wenn das gewünschte Ziel nicht innerhalb der momentanen Kartenanzeige liegt.

**Revendications**

**1.** Dispositif pour l'affichage, à des niveaux d'échelle sélectionnés, d'une carte représentant des rues et correspondant à une zone dans laquelle un véhicule peut se déplacer, pour faciliter la conduite d'un conducteur, comprenant :

(a) une base de données de la carte mémorisée possédant des données identifiant l'emplacement des rues de la zone et des données sous la forme d'un code identifiant chaque rue comme faisant partie d'une catégorie prédéterminée de priorité;
(b) des moyens pour sélectionner les niveaux d'échelle;
(c) des moyens permettant, en réponse aux données, de sélectionner certaines rues de la carte pour réaliser un affichage en fonction d'un niveau d'échelle sélectionné et dudit code;
(d) des moyens pour délivrer des données d'entrée identifiant la position actuelle et la direction de cap du véhicule;

caractérisé en ce que la base de données comporte en outre des données se présentant sous la forme de noms pour les rues, et en ce que le dispositif comprend en outre :

e) des moyens permettant, en réponse aux données de la base de données, de sélectionner des noms de rues pour leur affichage conformément à un système de rangement dynamique, qui sélectionne et donne la priorité à des noms de rues pour leur affichage en fonction des données d'entrée identifiant la position actuelle et la direction de cap du véhicule, lesdits moyens affectant des valeurs de priorité aux noms desdites certaines rues grâce au moins à :

l'utilisation des données d'entrée et des données de la base de données pour identifier une nouvelle rue transversale en avant du véhicule et affecter une valeur de priorité au nom de ladite rue identifiée; et l'utilisation des données d'entrée et des données de la base de données pour identifier la rue, dans laquelle le véhicule se déplace, et affecter une valeur de priorité au nom de ladite rue identifiée;

(f) des moyens pour sélectionner certains noms de rues pour leur affichage moyennant l'utilisation desdites valeurs de priorité attribuées; et
(g) des moyens pour produire un affichage d'une carte montrant les certaines rues et les certains noms de rues.

**2.** Dispositif selon la revendication 1, dans lequel lesdits moyens pour produire un affichage d'une carte incluent des moyens pour déterminer la densité des certaines rues pour l'affichage, la densité des certaines rues dépendant du niveau d'échelle sélectionné et dudit code.

**3.** Dispositif selon la revendication 2, dans lequel la densité est une densité nulle ne représentant aucun affichage de rues dudit code correspondant.

**4.** Dispositif selon la revendication 1, 2 ou 3, dans lequel lesdits moyens de production d'un affichage de carte comprend une table de consultation de catégories de priorités de rues en fonction de niveaux d'échelle.

**5.** Dispositif selon la revendication 4, dans lequel ladite table comporte des entrées identifiant la densité des certaines rues pour l'affichage, la densité des rues dépendant des catégories de priorités de rues et des niveaux d'échelle.

**6.** Dispositif selon l'une quelconque des revendications précédentes, dans lequel lesdites rues de ladite base de données de la carte sont mémorisées sous la forme de segments de rues comportant chacun des points d'extrémité, et dans lequel lesdits moyens pour produire un affichage d'une carte montrant les certaines rues et les certains noms pour les rues calculent les pentes des segments de rues à partir des points d'extrémité définissant les segments de rues respectifs pour fournir l'affichage de la carte.

**7.** Dispositif selon la revendication 6, dans lequel lesdits certains noms sont affichés parallèlement auxdits certains segments de rues en fonction desdites pentes calculées des segments de rues.

**8.** Dispositif selon la revendication 7, dans lequel lesdits certains noms sont affichés avec une orientation la plus proche du côté droit, tournée vers le haut.

**9.** Dispositif selon la revendication 6, 7 ou 8, dans lequel la taille des noms affichés reste constante indépendamment du niveau d'échelle.

**10.** Dispositif selon l'une quelconque des revendications précédentes, comprenant :

des moyens de mémoire définissant un réseau bidimensionnel correspondant à des cellules du dispositif d'affichage;
des moyens pour positionner des éléments du réseau de mémoire correspondant à des cellules de mémoire occupées par un nom ayant une première priorité sélectionnée pour l'affichage;
des moyens pour identifier des cellules devant être occupées par un nom sélectionné ayant une priorité inférieure dans sa position proposée, et, si un quelconque élément de mémoire correspondant est positionné, pour supprimer la sélection du nom de priorité inférieure pour l'affichage dans cette position.

**11.** Dispositif selon l'une quelconque des revendications précédentes, comprenant en outre des moyens, aptes à répondre à la base de données de la carte, des données de position et de cap du véhicule et de l'un des niveaux d'échelle sélectionnés, pour produire, sur le dispositif d'affichage de la carte, un symbole de la position et du cap du véhicule, le dispositif d'affichage de la carte se déplaçant en translation et en rotation en- fonction du mouvement du véhicule.

**12.** Dispositif selon la revendication 11, dans lequel la carte mobile est déplaçable en translation et en rotation de manière à maintenir l'affichage de la zone située autour de la position actuelle du véhicule et orientée dans la direction du cap du véhicule.

**13.** Dispositif selon la revendication 11 ou 12, dans lequel lesdits moyens pour afficher la carte et lesdits moyens pour fournir un symbole de position du véhicule et une carte mobile comprennent des moyens pour produire une fenêtre changeante d'observation d'affichage de la carte, qui correspond à une partie donnée de la zone dans laquelle le véhicule peut se déplacer.

**14.** Dispositif selon la revendication 13, dans lequel ladite fenêtre modifiable d'observation de l'affichage de la carte est déplaçable lorsque le véhicule se déplace.

**15.** Dispositif selon la revendication 13 ou 14, dans lequel les dimensions de ladite fenêtre d'observation d'affichage de la carte peuvent être modifiées en fonction du niveau d'échelle sélectionné.

**16.** Dispositif selon l'une quelconque des revendications 11 à 15, comprenant en outre des moyens pour produire, sur ledit affichage, un symbole de destination indiquant une destination désirée.

**17.** Dispositif selon la revendication 16, dans lequel lesdits moyens pour produire un symbole de destination comprennent des moyens pour calculer la distance entre une destination désirée représentée par ledit symbole de destination et la position actuelle du véhicule représentée par ledit symbole de position du véhicule, la distance étant affichée sur ledit dispositif d'affichage.

**18.** Dispositif selon l'une quelconque des revendications 11 à 17, comprenant en outre :

a) une base de données mémorisées de la carte comportant des données identifiant la position de rues de la zone donnée et des données identifiant la destination désirée; et

b) des moyens pour sélectionner, à partir desdites données de destination désirée, une destination désirée du véhicule.

**19.** Dispositif selon la revendication 18, dans lequel lesdites données d'identification pour la destination désirée incluent en outre des noms de rues et des adresses de rues, qui sont associées à une rue correspondante, et dans lequel lesdits moyens de sélection permettent de sélectionner un nom et une adresse d'une rue donnée.

**20.** Dispositif suivant la revendication 18 ou 19, dans lequel lesdites données d'identification comprennent en outre des noms de rues, et dans lequel lesdits moyens de sélection peuvent sélectionner deux noms de rues correspondant à des rues qui se croisent.

**21.** Dispositif selon la revendication 18, 19 ou 20, comprenant en outre des moyens pour déterminer si la destination est située dans un affichage actuel de rues de la carte.

**22.** Dispositif selon la revendication 21, dans lequel lesdits moyens pour produire un symbole de destination fournissent un symbole de direction indiquant la direction vers la destination désirée à la place du symbole de destination, si la destination désirée n'est pas située dans l'affichage actuel de la carte.

FIG _ 1

FIG _ 2-1

EP 0 199 780 B1

FIG _ 2-2

FIG _ 2-3

159

EP 0 199 780 B1

FIG _ 2-3A

FIG _ 2-3B

FIG _ 2 - 4

FIG _ 2 - 5

FIG _ 2 - 5A

FIG _ 2 - 5B

162

FIG _ 3A

FIG _ 3B

FIG _ 3C

FIG _ 3D

FIG _ 3E

FIG _ 3F

FIG _ 3G

FIG _ 3H

FIG _ 3I

FIG _ 3J

FIG _ 4

FIG _ 5A

FIG _ 5

EP 0 199 780 B1

$EP_2 (X_2, Y_2)$

LABEL

$S_1$

St

$S_2$

$EP_1 (X_1, Y_1)$

$EP_3 (X_3, Y_3)$

Y

X

## FIG _ 6A

D

```
W  WEDDELL  DR
E  WEDDELL  DR
   WESTSIDE  AV
   WHITE OAK LN
   WICKMAN  PL
   WILDWOOD AV
   WILDWOOD WY
   WILLIAM  DR
   WILLIAM  AV
   WILLOW  WY
   WILSON AV
```

## FIG _ 6B

## TABLE 1

| SCALE LEVEL $(Z_i)$ i = \ STREET PRIORITY | 1 (FREEWAY) | 2 EXPRESSWAY | 3 ARTERIAL | 4 COLLECTOR | 5 RESIDENTIAL STREET | • • • | RAMP |
|---|---|---|---|---|---|---|---|
| 0 | HIGH | HIGH | MEDIUM | MEDIUM | LOW | • • • | LOW |
| 1 | HIGH | HIGH | MEDIUM | MEDIUM | LOW | • • • | LOW |
| 2 | HIGH | MEDIUM | MEDIUM | LOW | — | • • • | — |
| 3 | HIGH | MEDIUM | LOW | — | — | • • • | — |
| 4 | HIGH | MEDIUM | — | — | — | • • • | — |
| 5 | HIGH | — | — | — | — | • • • | — |

FIG _ 6C

EP 0 199 780 B1

EP 0 199 780 B1

FIG _ 7A

FIG _ 7B

FIG _ 7C

FIG _ 8

FIG _ 8A

FIG _ 8A-1

FIG _ 8A-2

MAP AREA
MA

Y

HEADING
UP VIEWING
WINDOW

STREETS
St

NORTH-UP
VIEWING
WINDOW

S_v

X

FIG _ 8B

MS

N

S_v

HEADING UP

FIG _ 8B-1

MS

N

S_v

(NORTH-UP)

FIG _ 8B-2

EP 0 199 780 B1

## DETERMINE DISPLAY STATE (SEE BLOCK 8A)

9A — HAS OPERATOR PRESSED BUTTON ?

— NO →

9C — HAS CAR MOTION PARAMETER CHANGED ?

— YES →

— NO →

9D — DISPLAY STATE REMAINS UNCHANGED

9B — CALCULATE NEW DISPLAY

**FIG _ 9**

## COMPUTE MAP DISPLAY (SEE BLOCK 8C)

10A — COMPUTE VIEWING WINDOW W FROM STATE PARAMETERS X, Y, Z, H

10B — POSITION VEHICLE SYMBOL $S_v$

10C — POSITION DESTINATION SYMBOL $S_d$

10D — FETCH AND TRANSFORM STREET SEGMENTS TO MATCH VIEWING WINDOW

10E — COMPUTE STREET INTENSITIES FROM PRIORITY AND SCALE

10F — SELECT STREET LABELS

10G — CONSTRUCT MAP DISPLAY FILE

**FIG _ 10**

176

POSITION VEHICLE SYMBOL $S_V$
(SEE BLOCK 10B)

IIA —

COMPUTE
DISPLAY COORDINATES
FOR VEHICLE
LOCATION

IIB —

DOES
VEHCLE LIE
WITHIN DISPLAY
WINDOW
?

NO

YES

IIC —

COMPUTE VEHICLE SYMBOL
ORIENTATION ON
WINDOW COORDINATES
$H_{S_V} = \begin{cases} 90° & \text{IF HEADING UP} \\ H_V & \text{IF NORTH UP} \end{cases}$

IID —

COMPUTE VEHICLE SYMBOL
CENTERED ON
VEHICLE POSITION
ADD TO
DISPLAY LIST

FIG _ 11

FIG _ 12A

FIG _ 14A

POSITION DESTINATION SYMBOL
(SEE BLOCK 10)

```
                    ┌─────────────┐  12A
                    │   HAS A     │
          NO        │ DESTINATION │
◄───────────────────│    BEEN     │
                    │  ENTERED    │
                    │     ?       │
                    └─────────────┘
                         │ YES
                         ▼
        ┌──────────────────────────────────┐  12B
        │  COMPUTE DISPLAY COORDINATES      │
        │      OF DESTINATION AND           │
        │  DISTANCE BETWEEN DESTINATION     │
        │         AND VEHICLE               │
        └──────────────────────────────────┘
                         │
                         ▼
                    ┌─────────────┐  12C
                    │    DOES     │
                    │ DESTINATION │      NO
                    │LIE WITHIN DISPLAY├──────────────┐
                    │   WINDOW    │                   │
                    │     ?       │                   │
                    └─────────────┘                   │
                         │ YES                        │
                         ▼                            ▼
        ┌──────────────────────┐  12F    ┌──────────────────────┐  12D
        │ COMPUTE DESTINATION  │         │  COMPUTE ARROW       │
        │ SYMBOL CENTERED ON   │         │ POINTING TOWARDS     │
        │    DESTINATION       │         │ DESTINATION AND      │
        │ POSITION AND ADD     │         │     ADD TO           │
        │  TO DISPLAY LIST     │         │  DISPLAY LIST        │
        └──────────────────────┘         └──────────────────────┘
                         │                            │
                         ◄────────────────────────────┘
                         ▼
              ┌──────────────────┐
              │  ADD VEHICLE     │  12E
              │ TO DESTINATION   │
              │  DISTANCE TO     │
              │  DISPLAY LIST    │
              └──────────────────┘
                         │
                         ▼
```

FIG _ 12

FIG _ 13A

FIG _ 13B

# FIG _ 13

INPUT DESTINATION
(SEE BLOCK 8D)

INPUT STREET NAME — 13A

FETCH STREET
SEGMENTS ASSOCIATED
TO STREET NAME — 13B

ADDRESS
OR
INTERSECTION
? — 13C

ADDRESS

INPUT NUMERIC ADDRESS — 13I

INTERSECTION

INPUT SECOND STEET NAME — 13D

FETCH STREET
SEGMENTS ASSOCIATED
TO 2ND STREET NAME — 13E

IS
INPUT BOUNDED
BY ADDRESS
FIELD OF STREET
END POINTS
? — 13J

NO

IS
THERE AN
INTERSECTION
? — 13F

NO

YES

YES

INTERPOLATE
DISTANCE ALONG
STEET SEGMENTS
FROM ADDRESS — 13L

13H

13G

13M

13K

NO
VALID
DESTINATION

STORE
INTERSECTION
AS $X_d$, $Y_d$

STORE
INTERPOLATED
POSITION AS
$X_d$, $Y_d$

NO
VALID
DESTINATION

DETERMINE SCALE LEVEL — 13N

TRANSFORM STREET SEQUENCE
TO MATCH VIEWING WINDOW
(SEE BLOCK 10D)

14A — FETCH BOUNDARY OF
DISPLAY VIEWING WINDOW

14B — FETCH SEGMENT FROM
FROM DATA BASE

14C — DOES SEGMENT LIE WITHIN VIEWING WINDOW ?  NO

YES

14D — CROP INTERSECTING SEGMENTS TO MATCH DISPLAY WINDOW

14E — TRANSFORM RESULTS TO VIEWING WINDOW COORDINATES

14F — IS THIS LAST SEGMENT ?   NO

YES

FIG _ 14

COMPUTE STREET
INTENSITIES FROM
PRIORITY
AND SCALE
(SEE BLOCK 10E)

15A — FETCH SEGMENT PRIORITY CATEGORY CODE

15B — COMPUTE INTENSITY FROM SCALE & PRIORTY (SEE TABLE I)

15C — ADD INTENSITY TO DISPLAY LIST

15D — LAST SEGMENT TO BE DISPLAYED ?   NO

YES

FIG _ 15

SELECT STREET LABELS
(SEE BLOCK 10F)

16A — ORDER STREETS

16B — FETCH NEXT STREET

ORDER STREET SEGMENTS
BY LENGTH WITH HIGHEST
ORDER GIVEN TO SEGMENT
(IF ANY) HAVING LABEL
ON LAST SCENE

16C

FETCH NEXT
SEGMENT — 16D

16F — DOES
IT COLLIDE
WITH FINALIZED
LABEL
?

NO

COMPUTE
TENTATIVE
LABEL
POSITON — 16E

YES

16G — IS
THERE
ENOUGH
LENGTH AFTER
COLLISION TO
ADD LABEL
?

YES

16J — FINALIZE LABEL
AND ADD TO
DISPLAY LIST

NO

16H — IS
IT LAST
SEGMENT
?

NO

16K — SET CELLS IN
COLLISION ARRAY

YES

16L — IS
IT N 5TH
LABEL
?

NO

16I — IS
IT LAST
STREET
?

NO

YES

YES

REPLACE LAST SCENE LIST OF
LABELS WITH THIS SCENE LIST — 16M

CLEAR COLLISION GRID — 16N

FIG _ 16

SCORE STREETS
(SEE BLOCK 16A)

FETCH STREET — 17A

IS IT NAMED ? — 17B — NO

YES

COMPUTE TOTAL STREET LENGTH — 17C

COMPUTE TOTAL STREET LENGTH ? — 17D — NO

YES

IS THIS THE STREET THE VEHICLE IS ON ? — 17E — YES

NO

STORE STREET 300 — 17F

WILL VEHICLE LIKELY INTERSECT STREET ? — 17G — YES

NO

IS STREET AHEAD OF VEHICLE ? — 17J — NO

YES

COMPUTE DISTANCE — 17H

SCORE STREET 400 + PRIORITY + 0.5 — 17L

SCORE STREET 400 + PRIORITY — 17K

STORE STREETS AND DISTANCES — 17I

IS IT LAST STREET ? — 17M — NO

YES

ORDER STORED STREETS (OF 17I) BY DISTANCE — 17N

SCORE 100 TO STREET WITH SHORTEST DISTANCE — 17O

SCORE 200 TO STREET WITH 2ND SHORTEST DISTANCE — 17P

SCORE 400 + PRIORITY TO REMAINING STORED STREETS OF 17I — 17Q

ORDER STREETS BY SCORE AND LENGTH — 17R

FIG _ 17

184

St

$S_3$

$S_2$

$EP_3(X_3,Y_3)$

$EP_2(X_2,Y_2)$

$S_1$

$EP_1(X_1,Y_1)$

$$\text{STREET LENGTH} = \sum_{i=1}^{3} \sqrt{(X_{i+1}-X_i)^2 + (Y_{i+1}-Y_i)^2}$$

FIG _ 17A

Y'

TL          TL

$St_4$

$D_4$

$St_3$

$St_2$

$D_3$

X

$S_v$

FIG _ 17B

$St_1$

$EP_2$  $S_2$  $EP_3$

$S_1$

$EP_1$

$S_{1,2}$

St

$S_3$

$EP_4$

$S_4$

FIG _ 18A

$EP_5$

COLLISION          CG

C

FIG _ 18B

FIG _ 18C